# EUROPÄISCHE PATENTSCHRIFT

(11) **EP 2 626 191 B1**
(45) Veröffentlichungstag und Bekanntmachung des Hinweises auf die Patenterteilung: **26.01.2022**
(21) Anmeldenummer: 13000633.1
(22) Anmeldetag: 07.02.2013
(51) Int. Cl.: B29C 65/32, C09J 5/06, H05B 6/10, B29C 65/00, H05B 6/36, F16B 11/00, B29C 65/48, B29C 65/36, H05B 6/14, H05B 6/42

(54) **Induktionsklebeanlage, Induktionseinheiten, Temperaturkompensationsverfahren und Selbsteinstellungsverfahren**
Induction gluing system, induction units, temperature compensation method and self-adjusting method
Installation de collage par induction, unités d'induction, procédé de compensation de température et procédé d'auto-réglage

(30) Priorität: 09.02.2012 DE 102012002404
(43) Veröffentlichungstag der Anmeldung: 14.08.2013
(73) Patentinhaber: GH-Induction Deutschland GmbH, 69434 Hirschhorn (DE)
(72) Erfinder: Bißdorf, Richard, 69434 Hirschhorn (DE); Siefert, Willy, 64757 Rothenberg (DE); Schölch, Frank, 69434 Hirschhorn (DE); Kasper, Christian, 64757 Ober-Hainbrunn (DE); Gattermeier, Helmut, 69434 Hirschhorn (DE); Balss, Andreas, 64668 Rimbach (DE)
(74) Vertreter: Drobnik, Stefanie

(56) Entgegenhaltungen:
- EP-A1- 0 364 191
- EP-A2- 0 804 050
- EP-B1- 0 625 868
- EP-B1- 1 964 899
- DE-A1-102008 034 859
- DE-U- 6 903 665
- DE-U1- 20 014 427
- FR-A1- 2 219 393
- US-A- 4 602 139
- US-B1- 6 180 933

## Beschreibung

Die vorliegende Erfindung betrifft eine Induktionsklebeanlage, sowie eine Gelierstation als wesentliche Komponente zum Einsatz in der Induktionsklebeanlage und ferner Induktionseinheiten, die in der Gellerstation die induktive Verklebung bewirken. Weiter wird erfindungsgemäß eine Kühlanlage beansprucht, mit der die notwendige Kühlung der Induktionsklebeanlage geleistet werden kann; insofern ist die erfindungsgemäße Kühlung als Teil der gesamten Induktionsklebeanlage einsetzbar. Zudem betrifft die Erfindung eine Induktionsanlage zur stufenweisen Erwärmung von induktiv erwärmbaren Werkstücken. Ferner wird ein Verfahren zur induktiven Bauteilverklebung mit der vorliegenden Induktionsklebeanlage offenbart, das weiter ein Temperatur-Kompensationsverfahren nutzt, und schließlich wird ein automatisches Selbsteinstellungsverfahren zur Einrichtung der Heizleistungen der einzelnen Induktionseinheiten offenbart.

Die Technologie der induktiven Verklebung von Bauteilen im Automobilbereich, beispielsweise von Innen- und Außenblech einer Motorhaube oder eines Kotflügels, ist aus dem Automobil-Fertigungsbereich hinreichend bekannt.

Bauteilspezifisch werden hierzu Induktionsklebeanlagen hergestellt, die die jeweilige Bauteilgeometrie abbilden. Dabei wird an jedem vorgesehenen Klebepunkt zwischen den beiden Bauteilen eine Induktorvorrichtung, oft als "Spot" bezeichnet, angeordnet, durch die die induktive Heizleistung aufgebracht wird. Dabei sind sämtliche dieser Spots der bekannten klassischen Induktionsklebeanlagen, auch als Bonding-Stationen bekannt, in Reihe geschaltet und über eine Schiene verbunden; die Energieversorgung aller Induktorvorrichtungen erfolgt durch eine einzige Energiequelle. Die vorstehend genannte Schiene führt dabei zwei Funktionen aus: Zufuhr von Strom sowie von Kühlwasser. Die Stromleitung ist meistens aus Kupfer, die einstückig geführt und hochstromig nutzbar ist.

Insofern, als die erforderliche Heizleistung der Induktoren für die einzelnen Klebepunkte abweichen kann, weil das Bauteil dies durch seine Geometrie, wegen der Materialbeschaffenheit oder aus anderen Gründen erfordert, muss jede der Induktorvorrichtungen individuell eingerichtet und an den Wärmebedarf der einzelnen Erwärmstellen angepasst werden. Dies erfolgt beispielsweise durch das Einsetzen von "Shims", mit denen der Abstand der Induktoren zu dem Bauteil entsprechend dem Wärmebedarf an diesem Spot variiert wird. Ebenso ist es möglich, anhand der Geometrie der Induktorvorrichtung innerhalb des Spots beispielsweise durch Verbiegen des Leiters oder Anordnung der Feldkonzentratoren das Erwärmbild dem Bedarf anzupassen.

Derartige bekannte induktive Klebestationen werden über eine Schwingkreiseinheit mit einem Generator verbunden, der durch Wasser gekühlt ist, um die entsprechende Kühlleistung bereitzustellen.

Trotz der manuellen Einstellung aller vorhandenen Induktoren ist es bis dato nahezu unmöglich, eine ideale Temperatursteuerung an allen Klebepunkten bereitzustellen. Dies kann Einfluss auf die qualitative Beschaffenheit der Klebestelle und somit des Bauteils nehmen, ebenso ergibt sich häufig mechanischer Verzug durch thermisch bedingte Verspannung des Bauteils. Darüber hinaus ist es erforderlich, das hohe Maß an Energie bereitzustellen, um die erforderliche, an den Endpunkten bereitzustellende induktive Heizleistung zu realisieren. Die Wege, die vom Schwingkreis bis zu den "Spots" zurückzulegen sind, sind dabei im Stand der Technik erheblich und durch die Weglänge der Reihenschaltung im Bereich hoher und sehr hoher Ströme ergeben sich entsprechend enorme Verluste. Auch führt die Hochstromforderung zu mechanisch starren und unflexiblen Verbindungstechniken, welche die mechanische Verlegung einzelner Spots stark erschweren. Aufgrund der Mehrenergie, die zur Versorgung auch des letzten Spots nötig ist und durch Hochstrom bereitgestellt wird, entsteht entlang des Weges Wärme, die wiederum hohe Kühlleistungen erfordert, die mit enormem Wasserverbrauch verbunden und insofern nicht ökonomisch sind.

Derartige induktive Klebestationen gestalten sich durch die erforderliche Wasserkühlung ferner besonders komplex, da diese zur Handhabung der Wärmeabfuhr ferner Pumpen, Wasserspeicher, Wärmetauscher und weitere Geräte wie Kälteaggregate benötigt, die teuer sind, Energie verbrauchen, gewartet werden müssen und Bauraum beanspruchen. Bei Betrieb mit Werkskühlwasser sind die Anlagen nicht mehr mobil einsetzbar und die dezentrale Kälteanlage ist nicht an den individuellen Prozess adaptiert, was die Energieeffizienz stark einschränkt. Der kundenseitige Anschluss der Anlagen am Werkskühlwasser erfordert ferner umfangreiche, teure Installationsarbeiten.

Der Wirkungsgrad des einzelnen Induktors, wie er aus dem Stand der Technik bekannt ist, ist am Klebepunkt ferner unzureichend, da die Spulen, Übertragungswege und Transformatoren, wie sie aus dem Stand der Technik bekannt sind, nicht optimiert ausgestaltet sind. Es ergeben sich dort auch unnötige Energieverluste, da eine Bauteilstelle, an der mit geringerer Temperatur geklebt werden soll, es erfordert, dass der Induktor vom Bauteil beabstandet wird, da seine Temperatur nicht einfach niedriger eingestellt werden kann. Der Gesamtstrom der Anlage ist hierbei prinzipbedingt auf den Induktor mit dem höchsten Strombedarf abgestimmt, wobei aufgrund der Reihenschaltung alle Induktoren mit diesem Strom versorgt sind.

Ferner erlauben derartige bekannte induktive Klebevorrichtungen bis dato kaum oder nicht ideal, nicht-metallische Materialien wie etwa FVK-Materialien, die leitfähige Kohlefasern und/oder Metallfasern enthalten, zuverlässig und ökonomisch punktuell zur Verklebung zu erwärmen, da bei diesen schlecht (im Vergleich zu Metall) leitenden Werkstoffen hohe Stromstärken am Bauteil ankommen müssen, um die nötige Erwärmung punktuell am Bauteil zu erreichen. Dies bedeutet einen enormen Energieeinsatz entlang der Reihenschaltung.

Schließlich ist ein ganz erheblicher Aufwand durch Werker erforderlich, diese großen und bauteilspezifischen, daher unflexiblen induktiven Klebeanlagen einzurichten, da die Einstellung der einzelnen Induktoren in Wechselwirkung, beispielsweise untereinander, wie auch mit dem Heizprogramm, steht.

DE 689 06 502 T2 offenbart Heizelemente einer Induktionserwärmungsstation aus Induktionsspule und Transformator. Die Stromzufuhr wird durch wassergekühlte Kabel, folglich hochstromig realisiert.

Aus US 5,438,181 ist eine Vorrichtung zum Erwärmen eines Substrats mit elektrisch leitfähigen und nicht-leitfähigen Abschnitten bekannt. Zum Erwärmen der elektrisch leitfähigen Abschnitte umfasst die Vorrichtung einen Induktor mit benachbartem Feldkonzentrator.

In DE 20 2006 019 025 U1 wird ein induktiver Punktheizer für beliebige Werkstoffe beschrieben, der einen elastischen Kontaktstempel mit einem metallischen und daher induktiv aufheizbaren Hilfselement aufweist, zwischen welchen eine Temperaturerfassungfseinheit angeordnet ist.

Aus DE 92 10 144 U1 ist ein Induktionsschmelzofen mit einem Schmelztiegel bekannt, der durch eine in drei einzelne Spulen aufgeteilte Induktionsspule elektrisch beheizbar ist. Die Spulen werden durch Schlauchkabel und entsprechende Anschlüsse mit Strom und Kühlwasser versorgt.

DE 3711645 C1 offenbart ein Hochfrequenzinduktionswärmegerät, das Oberflächenbereiche und tiefer liegende Bereiche eines elektrisch leitenden Werkstücks gleichzeitig auf unterschiedliche Temperaturen erwärmen kann. Dazu kann der Hochfrequenzgenerator zwischen unterschiedlichen Erregungsfrequenzen umgeschaltet werden.

EP 0 364 191 A1 offenbart eine Induktionseinheit laut des Oberbegriffes des Anspruchs 1.

Ausgehend von diesem Stand der Technik ergibt sich die Aufgabe der Bereitstellung einer auf vereinfachte Weise umbaubaren und möglichst für verschiedene Bauteiltypen nutzbaren Induktionsklebeanlage, die auch hinsichtlich des Energieverbrauchs einerseits und des Energieeintrags am Bauteil verbessert sein sollte.

Diese Aufgabe geht mit der weiteren Aufgabe der Schaffung entsprechend verbesserter Induktorköpfe einher, die es erleichtern, auch Werkstoffe wie leitende Faserverbundwerkstoffe zu verkleben und die möglichst energieeffizient betreibbar sind. Wünschenswert wäre ferner, die zur Energieversorgung der Induktoren erforderlichen Vorrichtungen flexibel handhabbar und kompakt bereitzustellen und auf dem Weg von der Energiequelle bis hin zum Induktor einen möglichst geringen Energieverlust zuzulassen.

Wünschenswert ist weiter angesichts der Energiebilanzen der Anlagen dieser Art aus dem Stand der Technik auch ein zumindest in ökologischer Hinsicht verbessertes Kühlsystem,

Auch das Erfordernis der Bereitstellung eines ökonomischeren und flexibleren Verfahrens zur induktiven Bauteilverklebung wird angesichts des Standes der Technik offenbar, verbunden mit der Aufgabe, ein Verfahren zu schaffen, das eine sicherere und besser steuerbare Temperatureinstellung der Gesamtheit der Induktoren und somit eine verbesserte Qualitätssicherung der Klebestellen am Bauteil zulässt, erlaubt.

Eine weitere Aufgabe liegt in der Schaffung einer Induktionsanlage, in der kontinuierlich durchgeführte Werkstücke mit einstellbarem Temperaturprofil erwärmt werden können.

Schließlich ist es wünschenswert, ein Verfahren zur Einrichtung und Einstellung einer solchen induktiven Klebestation zu schaffen, das möglichst wenig Zeit zur Einrichtung der Heizleistungen der einzelnen Induktionseinheiten erfordert.

Die Aufgabe der Schaffung einer Vorrichtung, die es ermöglicht, einen Induktor insgesamt energieeffizienter und/oder werkstoffangepasster zu betreiben, und die es erlauben, den erforderlichen Wärmeeintrag gezielter auf den Werkstoff zu bringen, wird durch die verbesserte Induktionseinheit mit den Merkmalen des Anspruchs 1 gelöst.

Eine verbesserte Gelierstation wird durch die Gelierstation mit den Merkmalen des Anspruchs 7 bereitgestellt.

Die Bereitstellung einer verbesserten Induktionsklebeanlage wird durch die Station mit den Merkmalen des Anspruchs 9 gelöst.

Die Induktionsanlage mit den Merkmalen des Anspruchs 16 stellt die gesteuerte Erwärmung von kontinuierlich geförderten Werkstücken bereit.

Ein verbessertes Einrichtverfahren der Induktionsklebeanlage wird durch das Selbsteinstellungsverfahren mit den Merkmalen des Anspruchs 17 bereitgestellt.

Diese Aufgabe, ein Verfahren zu schaffen, das eine sicherere und besser steuerbare Temperatureinstellung der Gesamtheit der Induktoren leistet, wird durch die beiden Regelungsverfahren mit den Merkmalen der unabhängigen Ansprüche 21 und 22 gelöst.

Die erfindungsgemäße Induktionseinheit dient insbesondere dem verbesserten induktiven Verkleben von Bauteilen im Multispotbondingverfahren. Diese Induktionseinheit umfasst jeweils einen Transformator, der lösbar mit zumindest einem an einer Haltevorrichtung angeordneten Induktor zu einer transportablen Bauteileinheit verbunden ist, wobei ein Eingang des Transformators mit einer Niederstromleitung verbunden ist und von einem induktorseitigen Ausgang des Transformators eine Hochstromleitung zu dem zumindest einen Induktor führt, so dass die gesamte Einheit modular und vielseitig nutzbar ist und zum anderen die Heizenergie, die vom Induktor abgegeben wird, unmittelbar an diesem durch den Transformator bestimmbar ist. Vorteilhaft können zum Anschluss der Induktionseinheit flexible Niederstromleitungen verwendet werden, die Hochstromführung ist nur zwischen dem Transformator und dem oder den Induktoren vorgesehen. Ferner ist es möglich, bei Bedarf die Anzahl an angeschlossenen Induktoren zu verändern, da der Transformator nicht fest am Induktor angebaut sondern vom Induktor trennbar ausgeführt ist.

Die erfindungsgemäße Induktionseinheit kommt ohne Hochstrom mit Stromstärken in der Größenordnung von 100A-1500A am Transformator aus, die bislang den Einsatz von wassergekühlten Schlauchkabeln erforderlich machen, bei denen ein In den Schläuchen eingelegter Kupferleiter mit Kühlwasser umspült wird. Folglich entfällt durch die Erfindung auch der bislang erforderliche Einsatz der hohlgebohrten Messingverschraubungen (Fittings), mit denen die Schlauchkabel am Transformator angebracht sind und die gleichermaßen Strom wie auch Wasser führen. Aufgrund der Möglichkeit eines Kurzschlusses zwischen beiden Anschlüssen über das Wasser mussten zudem die Schlauchkabel eine Mindestlänge von ca. 1m aufweisen; im Fall von Kühlmittel mit Glykol wurden wegen der höheren Leitfähigkeit sogar längere Kriechstrecken im Schlauch erforderlich.

Durch die erfindungsgemäße Induktionseinheit ist der Stromanschluss am Transformator mit Standardkabeln und Standard-Steckverbindungen möglich, die sehr viel einfacher handzuhaben sind als ein Schlauchkabelpaket. Ferner wird durch die Steckverbindungen ein eventuell erforderlicher Austausch des Transformators im Vergleich zum Abschrauben der Fittings der Schlauchkabel deutlich vereinfacht.

Der Einsatz von Niederstrom mit den verbundenen Vorteilen von Standardkabeln und Steckerverbindungen wird dadurch ermöglicht, dass der Transformator der erfindungsgemäßen Induktionseinheit ein Ringbandkernmaterial aus einer amorphen Metalllegierung verwendet. Das amorphe Kernmaterial erlaubt Feldstärken fast so hoch wie bei Eisen und mit geringen Verlusten. Die bisher eingesetzten Transformatorkerne sind üblicherweise auf Bandeisen gewickelt (Ringbandkerne) und mit hohen Verlusten ausgestattet.

Bei der Auslegung der Transformatoren ergibt sich bei gegebener Arbeitsfrequenz und Spannung immer ein bestimmter magnetischer Fluss. Mit Eisen als Kernmaterial sind hohe Feldstärken bis ca. 1 Tesla erreichbar, aber auch hohe Ummagnetisierungsverluste (Hysteresekurve Dynamoblech) verbunden. Damit sind zwar kleine Transformatorbauformen mit geringem Kernquerschnitt möglich, diese erzeugen aber hohe Verluste, besonders bei höheren Frequenzen wie für Kohlefaser-Verbundwerkstoff nötig. Damit ist in der Regel eine Wasserkühlung des Kerns erforderlich. Bei Ferrit als Kernmaterial entstehen keine signifikanten Ummagnetisierungsverluste, erlaubt sind aber nur Feldstärken von ca. 0,35T, da die magnetische Sättigung schnell erreicht ist. Daher benötigen diese Transformatoren hohe Querschnitte im Kern und sind um ca. Faktor 2 größer.

Das amorphe Kernmaterial erlaubt Feldstärken fast so hoch wie bei Eisen und mit geringen Verlusten. Durch die hohe Effizienz der erfindungsgemäßen Induktoreinheit mit der trocken vergossenen Primärwicklung und Kern kann eine geringere Bauleistung des Transformators eingesetzt werden. Im Gegensatz zu Stand der Technik müssen zudem weder die Kerne noch die Primärwicklung des Transformators in einem Wasserbad gekühlt werden. Somit sind kleine Transformatorbaugrößen ohne wassergekühlten Kern möglich.

So kann eine erfindungsgemäße Induktionseinheit aufgrund des Transformators mit geringerer Leistung kostengünstiger als eine herkömmliche gefertigt werden, bei denen bislang meist mehrere Erwärmstellen an einem Transformator höherer Leistung angeschlossen waren.

Die amorphe Metalllegierung weist eine homogene und isotrope Struktur auf und zeigt gute weichmagnetische Eigenschaften. Bevorzugt können die magnetostriktionsfreien amorphen Kobalt-Basis Legierungen VITROPERM 500 F^{®} der Firma Vacuumschmelze, Hanau, Deutschland, eingesetzt werden, die über eine Legierungsauswahl in Verbindung mit entsprechender Wärmebehandlung den gewünschten Einsatzbereichen angepasst werden können.

Die Haltevorrichtung der Induktionseinheit umfasst einen Induktorkopf, der einen Auflagebereich aufweist, in den ein Induktor zumindest mit einem Abschnitt eingebettet ist oder zumindest in dessen Nähe der Induktor angeordnet ist. Dabei kann vorteilhaft der Induktorkopf an dem Abschnitt, der den Induktor aufnimmt oder hält, als Bauteilauflage geformt sein und insofern die Bauteil- oder Werkstückgeometrie aufnehmen und somit der optimalen Lagerung des Bauteils während des Prozesses dienen. Anstelle eines I-förmigen Induktors (Linieninduktor), wie bislang meist im Einsatz, bei dem der Stromfluss unterhalb des Werkstücks nur in einer Richtung verläuft, kommt vorzugsweise ein rundum wirkender Induktor (U oder O-Form oder ähnlich) zum Einsatz. Daher wird im Bauteil auf einer geschlossenen Bahn Strom induziert, was den Wirkungsgrad deutlich erhöht. Der Induktorkopf ist sehr kompakt gebaut, so dass auf einem Bauraum entsprechend dem des Linieninduktors der u- oder o-förmige Induktor mit Feldkonzentrator untergebracht ist. Hierbei kann die Bauart ein Transformator pro Induktor bevorzugt sein.

Mittels eines Haltefußes, an dem der Induktorkopf so befestigt ist, dass er gegebenenfalls hinsichtlich seiner Position verändert und damit an verschiedene Bauteile angepasst werden kann, und der Vorrichtungen wie Bohrungen für Schrauben oder Klemmen oder Stifte oder andere Befestigungsmittel aufweist, kann die Induktionseinheit an einer Befestigungsvorrichtung einer Gelierstation, wie einer Basisplatte oder einer Montageplatte befestigt werden.

Die Induktionseinheit kann auch so ausgebildet sein, dass sie den Induktorkopf mit Trafo beweglich z. B. an einem flexiblen Schwenkarm oder einem Pneumatikzylinder angebaut umfasst, um so bei Bedarf an die Erwärmstelle gefahren zu werden.

Vorteilhaft kann zur verbesserten Wärmeübertragung der Induktorkopf an dem Auflagebereich bzw. an der Einbettung des Induktors einen Feldkonzentrator aus elektrisch oder magnetisch leitfähigem Material aufweisen, der, je nach Anordnung des Induktors, unter dem Induktor liegt oder den Induktor teilweise umgreift. Ein solcher Feldkonzentrator kann in Abhängigkeit der vorgesehenen Anwendung der Induktionseinheit beispielsweise aus Dynamoblech, einer weichmagnetischen Eisen-Silizium-Legierung, aus einer weichmagnetischen Nickel-Eisen-Legierung hoher magnetischer Permeabilität wie Mu-Metall^{®}, aus einem magneto-dielektrisches Material, z. B. einem Weicheisenpartikel aufweisenden thermoplastischen Kunststoff wie Fluxtrol^{®} oder Ferrit bestehen. Bei Mu-Metall^{®} handelt es sich um ein Produkt der Firma Vacuumschmelze, Hanau, Deutschland und Fluxtrol^{®} ist ein eingetragenes Markenzeichen der Fluxtrol Inc. Auburn Hills, USA, und von Polytron Kunststofftechnik, Bergisch-Gladbach, Deutschland erhältlich.

Durch die erfindungsgemäß sehr effizient gestalteten Induktoren wird eine niedrige Bauleistung des Trafos ermöglicht.

Eine Induktionseinheit kann auch zwei oder mehr an der Haltevorrichtung angeordnete Induktoren umfassen, die stromgleich sein müssen, da sie an einem gemeinsamen Trafo angeschlossen werden. Die zwei oder mehr an dem Trafo angeschlossenen Induktoren müssen nicht zwingend an einer gemeinsamen Haltevorrichtung angeordnet sein, jeder Induktor kann seine Haltevorrichtung haben und der Trafo dazwischen oder daneben liegen.

Vorliegend wird vorgeschlagen, die Induktoren lösbar mit den Trafos zu verbinden, aber es kann für das vorliegende Multispotbonding-Verfahren durchaus auch geeignet sein, Einheiten zu schaffen, bei denen die Induktoren mit den Trafos fest verbunden sind.

Zur Befestigung und Positionierung des durch induktives Verkleben zu fügenden Bauteils kann die Induktionseinheit eine Spanneinheit aufweisen. Diese ist zur fixierenden Anordnung eines zu fügenden Bauteils ausgebildet. Bevorzugt weist die Spanneinheit einen schwenkbaren Spannarm auf, der über das Bauteil geschwenkt wird, und ein Druckstück wird fixierend an das zu fügende Bauteil angelegt. Vorteilhaft ist der Spannarm mit dem Druckstück an einem Bauteilspanner höhenverstellbar angeordnet.

Zur Temperaturüberwachung der zu kühlenden Transformatoren kann an dem Transformator jeder Induktionseinheit ein Thermosensor wie etwa ein PTC-Widerstand angeordnet sein.

Ferner kann eine Induktionseinheit zur Steuerung der Heizleistung einen Thermosensor zur Messung der Bauteiltemperatur an einer durch den Induktor erwärmten Stelle umfassen, z. B. im Druckstück der Spanneinheit, in dem Auflagebereich der Bauteilauflage oder in einer separat zu dem Bauteil verfahrbaren Vorrichtung der Induktionseinheit.

Eine erfindungsgemäße Gelierstation, wobei das "Gelieren" das teilweise oder vollständige Aushärten eines an dem zu verklebenden Werkstück oder Bauteil angeordneten, noch flüssigen oder weichen Klebestoffes oder Adhäsive meint, ist zur Ausführung von induktivem Verkleben zweier oder mehr Bauteilkomponenten geeignet. Ebenso ist das Verschweißen oder Umformen beispielsweise thermoplastischer Werkstoffe möglich, wenn in deren räumlicher Nähe beispielsweise elektrisch leitfähige Gewebe eingelegt sind. Die Gelierstation verfügt über die nötige Anzahl von Induktoren, entsprechend der Klebepunkte. Diese sind an einer Haltevorrichtung, meist einer Montageplatte, positioniert und mit einer Energiequelle über Stromleitungen verbunden. Erfindungsgemäß sind die für diese Gelierstation eingesetzten Induktoren von den ebenfalls erfindungsgemäßen Induktionseinheiten umfasst. Vorteilhaft sind die Induktionseinheiten der Gelierstation nicht in einer Reihenschaltung mit der Energiequelle verbunden, sondern es ist jeweils eine Anzahl von 1 bis n der Induktionseinheiten mit Induktoren, die für die Erbringung näherungsweise gleicher oder zueinander proportionaler Heizleistung vorbestimmt sind, in einer Induktorengruppe zusammengefasst und der zumindest eine Transformator der Induktionseinheiten jeder Induktorengruppe ist über seinen Eingang zur Energieversorgung mit jeweils einem Leistungsteil der Energiequelle verbindbar. Innerhalb einer Gruppe ist die Leistungsabgabe eines einzelnen Induktors beispielsweise über dessen Länge und Feldausbildung steuerbar. So sind die Heizleistungen aller Induktoren einer Gruppe einzeln bestimmbar und steuerbar und mit geringem Zeitaufwand einzurichten. So kann in verschiedenen Zonen am Werkstück unterschiedliche Heizleistung eingebracht werden, wobei Induktoreinheiten, die die gleiche Leistungsaufnahme haben, als Gruppe von einem Leistungsteil versorgt werden können. So können die einzelnen Erwärmstellen zum Klebstoffgelieren z. B. an PKW-Karosserieanbauteilen in geeigneter Gruppierung mit unterschiedlicher Leistung energetisch versorgt werden. Damit können die einzelnen Kanäle genutzt werden, um inhomogene Materialien und Materialmischungen gleichzeitig zu erwärmen.

Zur Überwachung der Transformatortemperatur ist in jedem Transformator jeder Induktlonseinheit ein Thermosensor, beispielsweise PTC-Widerstand enthalten. Diese sind entsprechend den Induktorgruppen wie die Generatorausgänge gruppiert und in Reihe parallel oder gruppierte Reihen/Parallelzweige geschaltet. Dabei kann jede Gruppe der Thermosensoren mit einem Ausgang eines Generators einer Induktionsklebestation operativ verbunden werden, und so mit einer im Generator vorliegenden Steuerung kommunizieren.

Ferner kann vorgesehen sein, dass die Gelierstation zur Temperatursteuerung Thermosensoren aufweist, die zur Messung der Bauteiltemperatur zumindest einer Induktionseinheit jeder Induktorgruppe zugeordnet sind. Der Thermosensor jeder Gruppe ist - vorzugsweise über einen Messverstärker zur Signalverstärkung - mit der Steuerung des jeweilig entsprechenden Generatorausgangs gekoppelt, so dass die von den Induktionseinheiten der jeweiligen Induktorengruppe eingebrachte Heizleistung in Abhängigkeit der Bauteiltemperatur gesteuert werden kann. Dieser Thermosensor kann in oder an dem Druckstück oder benachbart zu dem Induktorkopf angeordnet, oder darin integriert sein.

Eine Kühlanlage, die mit einer Kühlwasserquelle verbunden und die zur Kühlung einer Induktionsklebeanlage und insbesondere deren Induktionseinheiten ist, hat einen Kühlabschnitt zur Kühlung der Gelierstation. Die Kühlanlage weist in diesem Abschnitt einen Verteilereingang auf, der mit der Kühlwasserquelle fluidisch verbunden ist, und der in zumindest einen Verteiler mündet, der eine Vielzahl von Abgängen hat, von denen sich je eine Zweigleitung erstreckt. Die Anzahl der Zweigleitungen liegt nicht als Reihen- sondern als gestaffelte Schaltung vor, und in jede Zweigleitung kann jeweils eine Verbrauchergruppe wie eine Induktorengruppe einer Gelierstation als zu kühlender Verbraucher geschaltet werden, was zweckmäßig mittels eines entsprechenden Zweigleitungsab- und eines Zweigleitungseingangs erfolgt. Somit werden die Verbrauchergruppen, die jeweils von einem Leistungsteil einer Energiequelle versorgt werden, entsprechend der elektrischen Verschaltung in den Kühlkreislauf eingebunden, so dass die Struktur der Wasserverschaltung 1:1 der Struktur der elektrischen Verschaltung entspricht. Hierdurch soll sicher gestellt werden, dass im Fehlerfall eines Zweigs die anderen Zweige im Notbetrieb der Anlage ungestört weiterarbeiten können. Aus dem Verbraucher kommend münden die Zweigleitungsabgänge in zumindest einen Sammler, der einen Sammlerausgang aufweist. Vorzugsweise an diesem Ausgang ist eine Durchflusskontrollvorrichtung wie ein Durchflussmesser angeordnet.

Somit werden durch die erfindungsgemäße Kühlanlage elektrische Verbraucher wie die Induktorgruppen jeweils durch eine Zweigleitung gekühlt, wobei in den Gruppen leistungsgleiche oder leistungsproportionale Verbraucher zusammengefasst sind, die von einem gemeinsamen Leistungsteil versorgt werden können. Damit entspricht die Struktur des Kühlsystems der Struktur der elektrischen Verschaltung. Vorteilhaft können die einzelnen Gruppen individuell gesteuert werden, so dass bei Ausfall eines Zweigs der Rest der Anlage weiterlaufen kann.

Die Kühlanlage kann dazu ausgelegt sein, eine Anzahl von 2 bis 32, bevorzugt von 2 bis 16, besonders bevorzugt von 2 bis 12 Induktorengruppen zu versorgen, wobei jede Induktorengruppe 1 bis 10, bevorzugt 2 bis 8, besonders bevorzugt 2 bis 6 Induktionseinheiten aufweist.

Bei vielen Verbrauchern kann aus Sicherheitsgründen die Kühlanlage zwei Sammler aufweisen, die in Reihe geschaltet sind, wobei zwischen dem ersten und dem zweiten Sammler oder bevorzugt hinter dem letzten Sammler eine Durchflusskontrollvorrichtung, bevorzugt ein Durchflussmesser angeordnet ist.

Eine erfindungsgemäße, vorteilhaft ökonomisch einsetzbare Induktionsklebeanlage zum induktiven Verkleben zweier Bauteilkomponenten, umfasst eine Energiequelle mit einer Steuerungsvorrichtung, eine Gelierstation mit mehreren Induktoren, die mit der Energiequelle über Stromleitungen verbunden sind und eine Kühlvorrichtung, wobei wenigstens die Gelierstation eine erfindungsgemäße ist, wie hierin offenbart.

Darüber hinaus kann auch die Kühlvorrichtung der Induktionsklebeanlage eine erfindungsgemäße Kühlanlage sein. Da die Zweigleitungen der Wasserverteilung entsprechend der Induktorengruppen und damit entsprechend der Generatorausgänge gruppiert sind, ist bei Ausfall paralleler Zweige nur der jeweilige Generatorausgang betroffen. So ist es möglich, lediglich die Induktorengruppen, die vom Ausfall der Zweigleitung betroffen sind, auszuschalten. Dabei hängen mehrere getrennt regelbare Generatorausgänge an einer Wasserverteilung.

Die Energiequelle ist vorteilhaft ein Generator, der eine Mehrzahl von Leistungsteilen, die jeweils mit einer Steuerungsvorrichtung operativ verbunden sind, umfasst. Der Generator hat für jedes Leistungsteil einen Generatorausgang, über den jedes Leistungsteil mittels einer elektrischen Leitung mit dem oder den Transformatoreingängen der Induktionseinheiten einer der Induktorengruppen verbunden ist. So lässt sich die Heiztemperatur an jedem Induktor genau vorgeben, wobei niederstromig bis hin zur Induktionseinheit gearbeitet werden kann, was energiesparend ist und die Nutzung von Materialien erlaubt, die bei Hochstrom nicht in Frage kommen. So können anstelle der Hochstromverbindungen flexible Zuleitungen verwendet werden.

Vorzugsweise wird die Induktionsklebeanlage zwischen Generator und der Gelierstation eine Kondensatoreinheit aufweisen, da ein Betrieb der Induktionsanlage ohne Kondensatoreinheit unter Verzicht auf die Resonanzüberhöhung des Schwingkreises, der durch die Kondensatoren der Kondensatoreinheit und die Spulen der Induktionseinheiten gebildet wird, nur bei kleinen Leistungen praktikabel ist. Die Kondensatoreinheit umfasst eine Mehrzahl von Kondensatormodulen, entsprechend den Leistungsteilen bzw. den Induktorengruppen. Diese sind dann jeweils über ein Kondensatormodul der Kondensatoreinheit mit einem Leistungsteil des Generators verbunden. Die Anzahl der Kondensatormodule, bei denen es sich um einfache, modulare mit Kondensatoren bestückte Platinen handeln kann, kann entsprechend der für einen Klebeprozess bestimmten Anzahl an Induktorengruppen variiert werden.

Die zur Temperaturüberwachung in jedem Transformator jeder Induktionseinheit angeordneten, entsprechend den Induktorgruppen gruppierten Thermosensoren, sind gruppenweise mit dem entsprechenden Ausgang des Generators operativ verbunden, und können so mit der im Generator vorliegenden Steuerung kommunizieren. Bei Übertemperatur, wie sie etwa durch eine unerkannte, teilweise Verstopfung in einer Zweigleitung entstehen kann, wird die jeweilige Gruppe vom Generator abgeschaltet. Ein Notbetrieb der Anlage ist mit den übrigen Gruppen möglich.

Zur Temperatursteuerung können die Bauteil-Thermosensoren jeder Induktionsgruppe mit einem Ausgang des Generators und weiter mit der Steuerung des jeweiligen Leistungsteils operativ verbunden sein; ferner kann der zumindest eine einer Induktionseinheit einer Induktorengruppe zugeordnete Thermosensor zur Messsignalverstärkung mit einem Messverstärker und darüber mit der Steuerung des jeweiligen Leistungsteils verbunden sein.

Ein weiterer Gegenstand der Erfindung ist eine Induktionsanlage zur stufenweisen Erwärmung von induktiv erwärmbaren Werkstücken, die als Einzelstücke, wie z. B. Ventile, oder als Endloswerkstück wie ein Draht kontinuierlich an den Induktoren der Induktionsanlage vorbeigeführt werden. Die Induktoren werden hierbei von erfindungsgemäßen Induktionseinheiten bereitgestellt, die sich durch ihre hohe Effizienz und geringe Baugröße auszeichnen. Die Induktionseinheiten können entlang einer Förderstrecke der Werkstücke angeordnet werden, wobei die Induktoren zu den von einer Fördereinrichtung bewegten Werkstücken hin ausgerichtet sind. Ferner können die Induktionseinheiten einzeln oder als Gruppen aus mehreren Induktionseinheiten, deren Induktoren, für die die Erbringung gleicher oder leistungsproportionaler Heizleistung vorbestimmt ist, über den zumindest einen Transformator der Induktionseinheiten jeder Induktorengruppe zur Energieversorgung mit jeweils einem Leistungsteil einer Energiequelle verbunden sein. Damit können die Werkstücke stufenweise erwärmt werden, wobei durch die Induktionseinheiten ein gewünschtes Temperaturprofil einstellbar ist, mit dem das oder die Werkstücke entlang der Förderstrecke erwärmt wird. Während im Stand der Technik mehrere getrennte Anlagen in einer Reihe angeordnet sind, hat die Anlage zur stufenweisen Erwärmung, die erfindungsgemäß in Verbindung mit der Multispottechnik eingesetzt wird und in diesem Zusammenhang neu ist, den Vorteil, dass hierdurch das modulare Gerät mit mehreren Kanälen in einer gemeinsamen Steuerung mit den hierin beschriebenen effizienten Trafos betrieben werden kann.

Die erfindungsgemäße Ansteuerung der Induktorengruppen mit separater Regelbarkeit und separaten Temperaturmessungen kennzeichnet die "Multi-Spot"- Eigenschaft bei der erfindungsgemäßen Induktionsklebeanlage bzw. dem damit ausgeführten Klebeverfahren.

Das erfindungsgemäße automatische Selbsteinstellungsverfahren dient der Einrichtung der Heizleistungen der Induktionseinheiten einer Induktionsklebeanlage, und erlaubt eine reproduzierbare und zeitsparende Einstellung der Anlage. Es umfasst die Schritte:
A) Einlegen der zu klebenden Bauteilkomponenten mit Bauteil-Temperatursensoren in eine Gelierstation (10) der Induktionsklebeanlage. Dabei wird vorgeschlagen, zumindest einen Temperatursensor an jeder Gruppe vorzusehen. Es folgt in
B) die Gruppeneinteilung und das Abgleichen der Induktoren jeder Induktionseinheit aufeinander bezüglich ihres Wärmeeintrags in das Bauteil. Dies kann durch Shims erfolgen wie im Stand der Technik, ist nach dem vorliegenden Verfahren aber vorteilhaft vereinfacht, da der Abgleich jeweils nur innerhalb einer Induktorgruppe erfolgen muss. Es folgt
C) das Bestimmen der Leistungsparameter für zumindest eine Aufheizphase und eine Haltephase für die Induktionseinheiten jeder Gruppe bei einer vorgegebenen Aufheizzeit, einer dabei zu erreichenden Geliertemperatur und einem während der Haltephase einzuhaltenden Toleranzbands um eine vorgegebene Haltetemperatur.

Es wird hierzu ein Programmiersystem vorgeschlagen, das diese Arbeit erfindungsgemäß vollautomatisch ausführt. Es kann aus folgenden Komponenten bestehen:
- mit dem Bauteil-Temperatursensor verbundener Messverstärker zur Temperaturmessung mit Anbindung an eine Recheneinheit bzw. einen Computer, vorgeschlagen wird ein Notebook oder ein vergleichbares kleines Datenverarbeitungsgerät,
- Programmieradapter zum Verbinden des Generators der Induktionsklebeanlage mit dem Rechner - bei dem Programmieradapter dabei kann es sich im einfachsten Fall um ein Adapterkabel für den Netzwerkanschluss handeln -,
- dem Rechner mit Programm und einer HMI (z. B. einer Bedienoberfläche) zum Speichern, Verarbeiten und Verwalten der Prozessparameter zu einem Prozessprogramm; gegebenenfalls auch eine Firmware im Messverstärker.

Dieses System führt automatisch viele Heizzyklen überwacht aus und stellt die Prozessparameter automatisch ein.

Es ist auch möglich, diese Komponenten in den Generator der erfindungsgemäßen Induktionsklebeanlage zu integrieren und den Rechner, respektive das Notebook, durch die speicherprogrammierbare Steuerung (SPS) oder einen in der Elektronik vorhandenen Mikrocontroller, FPGA oder DSP zu ersetzen. Falls jeder Generatorabgleich nur einen Spot treibt, ist es somit erfindungsgemäß möglich, dass sich das System komplett ohne jeglichen Benutzereingriff anlernt.

Das Bestimmen der Leistungsparameter für die Aufheizphase in dem erfindungsgemäßen automatischen Selbsteinstellungsverfahren kann ausgeführt werden nach folgenden Schritten:
- Festlegen einer Anfangsheizleistung für eine Induktorengruppe in Bezug zu einer Maximalleistung,
- Erwärmen des Bauteils durch die Induktionseinheiten der Gruppe mit der Anfangsheizleistung,
- nach der vorgegebenen Aufheizzeit Überprüfen, ob die mit den Bauteil-Temperatursensoren gemessene Bauteiltemperatur der vorgegebenen Geliertemperatur entspricht, falls ja, Speichern der Anfangsheizleistung als Aufheizleistung und weiter mit der nächsten Phase, andernfalls Feststellen, ob die Bauteiltemperatur über oder unter der vorgegebenen Geliertemperatur liegt,
- Abkühlen des Bauteils, bevorzugt auf eine vorgegebene Abkühlzeitdauer,
- Erwärmen des Bauteils durch die Induktionseinheiten der Gruppe mit einer Leistung größer als die Anfangsheizleistung, wenn die damit erreichte Bauteiltemperatur unter der vorgegebenen Geliertemperatur liegt, und Erwärmen des Bauteils durch die Induktionseinheiten der Gruppe mit einer Leistung kleiner als die Anfangsheizleistung, wenn die damit erreichte Bauteiltemperatur über der vorgegebenen Geliertemperatur liegt,
- nach der vorgegebener Aufheizzeit Überprüfen, ob die mit den Bauteil-Temperatursensoren gemessene Bauteiltemperatur der vorgegebenen Geliertemperatur entspricht, falls ja, Speichern der Leistung als Aufheizleistung und weiter mit der nächsten Phase, andernfalls Wiederholen der Schritte Feststellen, ob die Bauteiltemperatur über oder unter der vorgegebenen Geliertemperatur liegt, Abkühlen des Bauteils und Erwärmen mit entsprechend veränderter Leistung, bis die Bauteiltemperatur der vorgegebenen Geliertemperatur entspricht.

Das Bestimmen der Leistungsparameter für die Haltephase in dem erfindungsgemäßen automatischen Selbsteinstellungsverfahren kann ausgeführt werden nach folgenden Schritten:
- Festlegen einer Anfangshalteleistung für die Induktorengruppe kleiner als die bestimmte Aufheizleistung,
- Erwärmen des Bauteils mit der bestimmten Aufheizleistung über die vorgegebene Aufheizzeit, danach
- Starten der Haltephase mit der festgelegten Anfangshalteleistung und Überprüfen, ob die mit den Bauteil-Temperatursensoren gemessene Bauteiltemperatur innerhalb des vorgegebenen Toleranzbands um die vorgegebene Haltetemperatur liegt, falls ja, Speichern der Anfangshalteleistung als Halteleistung, andernfalls Feststellen, ob die Bauteiltemperatur während der Haltephase ansteigt oder sinkt,
- Abkühlen des Bauteils, bevorzugt auf eine vorgegebene Abkühlzeitdauer, und
- Erwärmen des Bauteils mit der bestimmten Aufheizleistung über die vorgegebene Aufheizzeit und Starten der Haltephase mit einer Leistung größer als die Anfangshalteleistung, wenn die damit erreichte Bauteiltemperatur während der Haltephase sinkt, und Starten der Haltephase mit einer Leistung kleiner als die Anfangshalteleistung, wenn die damit erreichte Bauteiltemperatur während der Haltephase steigt,
- Wiederholen der Schritte Überprüfen, ob die mit den Bauteil-Temperatursensoren gemessene Bauteiltemperatur innerhalb des vorgegebenen Toleranzbands um die vorgegebene Haltetemperatur liegt, falls ja, Speichern der veränderten Leistung als Halteleistung, andernfalls Feststellen, ob die Bauteiltemperatur während der Haltephase ansteigt oder sinkt, Abkühlen, Erwärmen und Starten der Haltephase bis die Bauteiltemperatur während der Haltephase innerhalb des vorgegebenen Toleranzbands um die vorgegebene Haltetemperatur liegt.

Ferner kann es, je nach Wärmekapazität und Wärmeleitfähigkeit der einzelnen Klebespots, geeignet sein, etwa zwischen der Aufheizphase und der Haltephase, eine so genannte Übergangsphase, oder etwa auch im Verlauf der Haltephase, eine Zwischenphase vorzusehen, um etwa das Überschwingen der Temperatur nach der Heizphase bei einem Klebespot mit geringem Wärmespeicher- und hohem Ableitvermögen zu vermeiden bzw. einzudämmen. Diese Übergangsphasen sind erforderlich, wenn sich der Energiebedarf der Erwärmzone im Bauteil durch den fortschreitenden Wärmefluss stark ändert. Ist exemplarisch nach dem Aufheizen an der Erwärmstelle die gewünschte Temperatur erreicht, sind benachbarte Bereiche noch kalt, so dass in der Haltephase zusätzliche Energie benötigt wird. Nach einiger Zeit sind die benachbarten Bereiche dann ebenfalls durchwärmt, so dass die Halteenergie zurückgenommen werden kann. Im erfindungsgemäßen Selbsteinstellverfahren wird diese Situation erkannt, wenn innerhalb der Haltphase die Temperatur erst ansteigt und dann abfällt. In diesem Fall wird die Haltephase aufgeteilt und eine Zwischenphase eingefügt. Vorzugsweise erfolgt die Trennung der Haltephase an dem Zeitpunkt, an dem der Gradient der Temperatur sein Vorzeichen wechselt. Weitere Aufteilungen können sinnvoll sein je nach Enge des Toleranzbands.

Für diese zumindest eine weitere Phase wie die Übergangsphase zwischen Aufheizphase und der Haltephase umfasst das Bestimmen der Leistungsparameter das Festlegen einer Übergangsleistung für die Induktorengruppe und Starten der Übergangsphase mit der festgelegten Übergangsleistung nach Durchführen der Aufheizphase und vor Durchführen der Haltephase, und Überprüfen, ob ein gewünschter Temperaturübergang von Aufheizphase zu Haltephase erreicht wird, falls ja, Speichern der Übergangsleistung, andernfalls Wiederholen der Schritte nach Abkühlen des Bauteils unter Veränderung der Aufheizleistung bis der gewünschte Temperaturübergang von Aufheizphase zu Haltephase erreicht wird.

Das verbesserte Einrichtverfahren der Induktionsklebeanlage, das erfindungsgemäß als automatisches Selbsteinstellungsverfahren für jede Induktorengruppe der Induktionsklebeanlage ausgeführt wird, erlaubt eine präzise, zeitsparende und reproduzierbare Einstellung der Anlage durch die separate Regelung mehrerer Kanäle.

Dadurch und durch die Gruppenansteuerung mit separater Regelbarkeit wird eine Selbstoptimierung des Systems erreicht.

Das Regelungsverfahren zum Aufheizen der Induktoren einer Induktionsklebeanlage zur induktiven Bauteilverklebung im Multispotbondungverfahren umfasst die Schritte:
- Bestimmen einer Maximalfrequenz aus einer Resonanzkurve eines Schwingkreises, der durch die Induktoren und Kondensatoren sowie ohmsche Widerstände der Induktionsklebeanlage gebildet wird. Ein ohmscher Widerstand wird dabei zumindest durch das zu fügendes Bauteil gebildet. Weiter folgt der Schritt:
- Starten der Anlage mit konstanter Spannung und einem periodischen, zwischen zwei Werten schaltenden Signal, bevorzugt einem Rechtecksignal, bei der Maximalfrequenz mit minimierter Pulsweite. Damit kann der dabei induzierte Strom bis hin zu echten 0 A minimiert werden, so dass die beim Anschalten durch den induzierten Strom erzeugte Heizleistung gleich Null ist. Nun kommt das
- schrittweise Vergrößern der Pulsweite bis zu einem Tastverhältnis von 1:1,
- Verringern der Frequenz von der Maximalfrequenz in Richtung Resonanzfrequenz bis zu einer Arbeitsfrequenz, bei der der gewünschte Arbeitspunkt erreicht ist.

Im stromgeregelten Modus ist der Arbeitspunkt erreicht, wenn der Ausgangsstrom des Generators dem vom Heizprogramm als aktuellen Sollwert vorgegebenen Strom entspricht. Im Leistungsgeregelten modus ist der Arbeitspunkt erreicht, wenn die im Heizprogramm als Sollwert hinterlegte Leistung erreicht ist. Die Auswahl des bevorzugten Regelverfahrens hängt von der elektrischen Leitfähigkeit des zu erwärmenden Werkstoffs und der gewünschten Prozesskontrolle ab.

Dieses System passt sich vorteilhaft ohne Benutzereingriff oder weitere Anpassungsarbeiten automatisch an jede Last an; die automatische Lastanpassung umfasst die ohmsche Last, die induktive Last, die kapazitive Last sowie auch eine Kombination dieser Elemente in schwingungsfähiger Anordnung.

Das kombinierte Regelverfahren erlaubt den Einsatz aller denkbaren Materialien und Lasten. Der Regelbereich von Strom und Leistung umfasst echte 0%, so dass keine störende Minimalleistung vorliegt und ohne Kondensatorbank bzw. Schwingkreis beispielsweise Infrarotstrahler und Heißluftgeräte betrieben werden können.

Das kombinierte Regelverfahren eröffnet die Möglichkeit, mit mehreren Induktoren, die ansonsten einander beeinflussen würden, gleichzeitig ein Bauteil zu beheizen, wobei die gegenseitige Abhängigkeit kompensiert wird, so dass weitere Anwendungen ermöglicht werden. So können die sich beeinflussenden Induktoren phasensynchron, aber mit verschiedenen Pulsweiten betrieben werden.

Tatsächlich ist dieses Regelungsverfahren nicht auf das Anfahren einer erfindungsgemäßen Induktionsklebeanlage beschränkt, auch Induktionsklebeanlagen und allgemein Induktionserwärmungsanlagen nach dem Stand der Technik können mit dem erfindungsgemäßen Verfahren unter Nutzung der dadurch erlangten Vorteile angefahren werden.

Im Weiteren wird ein Verfahren beansprucht, das es erlaubt, vorteilhaft eine Induktionsklebeanlage wie sie hierin beansprucht ist, umgebungstemperaturabhängig energiegesteuert zu betreiben. Die Induktionsklebeanlage soll dabei zumindest einen Thermosensor zur Erfassung einer Umgebungstemperatur umfassen; dieser kann an einer Bauteilauflage, an der Lagerhalle oder an anderem Ort in der Umgebung vorgesehen und der Induktionsklebeanlage zugeordnet sein.

Das Verfahren umfasst die Schritte:
- Erstellen einer Kompensationslinie für jede Induktorengruppe der Induktionsklebeanlage, in der ein Energiekorrekturfaktor über der Umgebungstemperatur aufgetragen ist, durch Bestimmen eines Energiesollwerts bei einer Standardumgebungstemperatur für jede Induktorengruppe, und Vorgeben eines von dem Energiesollwerts (E0) abweichenden Energiewerts bei einer mit dem Thermosensor festgestellten Temperaturabweichung, um ein Prozessergebnis zu erreichen, das dem mit dem Energiesollwert bei der Standardumgebungstemperatur erreichten Prozessergebnis entspricht, wobei der Energiewert bei einer festgestellten Temperatur größer der Standardumgebungstemperatur kleiner wird und bei einer festgestellten Temperatur unter der Standardumgebungstemperatur größer wird, so dass der Energiekorrekturfaktor für jede Temperatur bestimmt wird,
- zur Durchführung eines Klebeprozesses mit der Induktionsklebeanlage Messen der Umgebungstemperatur mit dem zumindest einen Thermosensor, Korrigieren des Energiewerts mit dem zumindest einen zu der gemessenen Umgebungstemperatur zugehörigen Energiekorrekturfaktor und Ansteuern der Induktorengruppen der Induktionsklebeanlage mit dem jeweiligen korrigierten Energiewert.

Generell ist durch die erfindungsgemäßen Verfahren die Optimierung der Anlage von Hand vereinfacht. Ferner können verschiedenste Materialien wie auch Verbundwerkstoffe durch die automatische Lastanpassung gleichzeitig an einem Bauteil erwärmt werden.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich schematische Darstellungen von Ausführungsbeispielen der Erfindung. Es zeigt:
- **Fig. 1a**: eine Draufsicht auf eine Gelierstation mit Induktoren nach dem Stand der Technik,
- **Fig. 1b**: eine Draufsicht auf eine erfindungsgemäße Gelierstation,
- **Fig. 2a**: eine perspektivische Ansicht einer erfindungsgemäßen Induktionseinheit mit unmittelbar benachbart zu der Induktionsspule angeordnetem Trafo und einer Spanneinheit,
- **Fig. 2b**: eine perspektivische Ansicht einer erfindungsgemäßen Induktionseinheit mit durch kurze Kupferverkabelung verbundener Induktionsspule und Trafo und einer zugehörigen Spanneinheit,
- **Fig. 2c**: eine perspektivische Ansicht einer erfindungsgemäßen Induktionseinheit aus Fig. 2a ohne Spanneinheit,
- **Fig. 2d**: eine perspektivische Ansicht einer erfindungsgemäßen Induktionseinheit,
- **Fig. 3a**: eine Anordnung gemäß Stand der Technik, umfassend die Anlagenkomponenten Leistungsgenerator, Schwingkreiseinheit in perspektivischer Ansicht und die Gelierstation in Draufsicht,
- **Fig. 3b**: eine erfindungsgemäße Induktionsklebeanlage umfassend die Anlagenkomponenten Leistungsgenerator mit Rückkühler, Kondensatoreinheit in perspektivischer Ansicht und die Gelierstation in Draufsicht,
- **Fig. 4**: eine schematische Ansicht der Wasserverteilung, wobei jeweils eine Gruppe, stromgleicher Induktionsvorrichtungen an eine Wasserleitung angeschlossen ist,
- **Fig. 5**: ein Blockschaltbild der Induktionsanlage,
- **Fig. 6a**: ein Temperaturdiagramm mit vier Spots an einer Kotflügelanlage mit einer Energiequelle gemäß Stand der Technik,
- **Fig. 6b**: ein Temperaturdiagramm mit vier Spots einer erfindungsgemäßen, vergleichbaren Kotflügel-Induktionsklebeanlage,
- **Fig. 6c**: Temperaturkompensations-Kennlinie zum energiegesteuerten Betrieb der Anlage,
- **Fig. 7a**: PWM-Regelung (Pulsweiten Modulation),
- **Fig. 7b**: FM-Regelung (Frequenzmodulation),
- **Fig. 8a**: eine schematische perspektivische Darstellung einer Klebestelle mit geringem Speichervermögen und hohem Ableitvermögen,
- **Fig. 8b**: eine schematische perspektivische Darstellung einer Klebestelle mit hohem Speichervermögen und geringem Abieitvermögen,
- **Fig. 9a**: Temperaturverlauf beim Aufheizen und Halten an der Klebestelle aus Fig. 8a, wenn diese gemeinsam mit einer Klebestelle entsprechend 9b in für das Bauteil insgesamt optimaler Güte angesteuert wird,
- **Fig. 9b**: Temperaturverlauf beim Aufheizen und Halten an der Klebestelle aus Fig. 8b bei gemeinsamer Ansteuerung mit 9a,
- **Fig. 10a**: eine schematische Darstellung einer Durchlaufinduktionsanlage zum Erwärmen von durchlaufenden einzelnen oder endlosen Werkstücken,
- **Fig. 10b**: positionsabhängige Temperatur eines in der Anlage aus Fig. 10a durchlauferwärmten einzelnen oder endlosen Werkstücks.

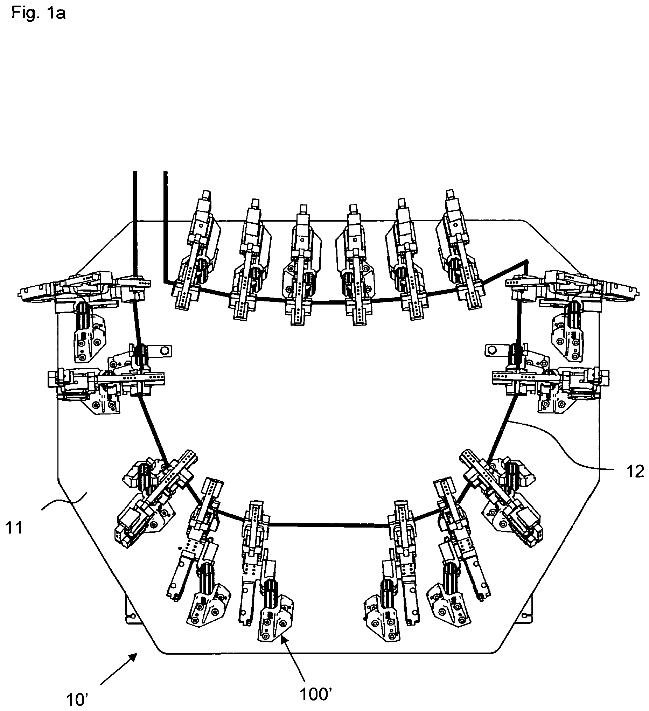

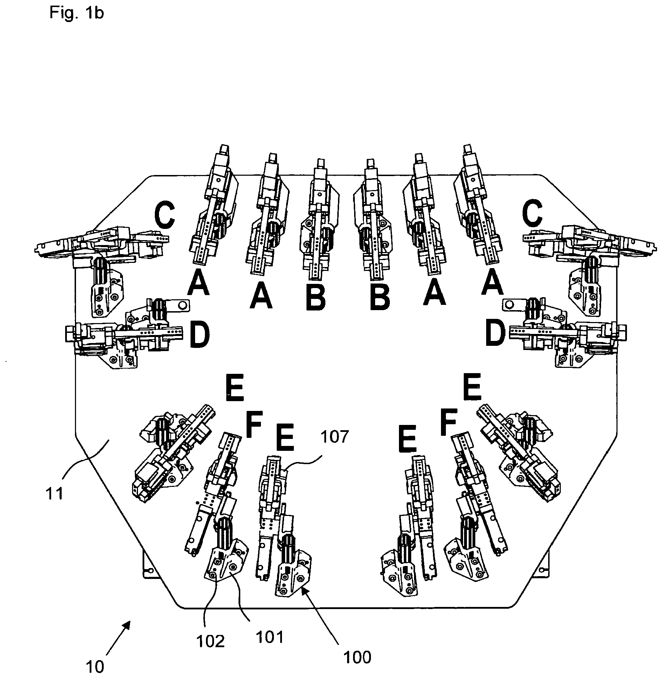

Die erfindungsgemäße Vorrichtung bezieht sich auf eine Induktionsklebeanlage, die eine Gelierstation als wesentliche Komponente umfasst, wie sie in **Fig. 1a** gemäß dem Stand der Technik mit Bezugszeichen 10' und **Fig. 1b** (erfindungsgemäß) mit Bezugszeichen 10 gezeigt ist.

Unter "Gelierstation" wird dabei hierin eine Vorrichtung verstanden, die es ermöglicht, den zwischen zwei zu verklebenden Bauteilen oder zwischen mindestens zwei Abschnitten ein und desselben Bauteils eingebrachten flüssigen oder festen Klebestoff zu erhitzen und unter Druck- und Temperatureinwirkung die beiden Abschnitte oder Bauteile adhäsiv zu verbinden. Sowohl die bekannte Gelierstation 10' als auch eine erfindungsgemäße Gelierstation 10 umfassen für jeden Klebepunkt, der an einem Bauteil 1, wie etwa einer Motorhaube oder einem Kotflügel zur Verklebung von Innen- und Außenblech aus einem Metall oder einem elektrisch leitfähigen FVK-Werkstoff wie z. B. CFK vorzusehen ist, mit Spanneinheiten ausgestattete Induktoren 100' bzw. erfindungsgemäße Induktionseinheiten 100, die über einen Fuß 101 mit einer Standfläche bzw. Montageplatte 11 verbunden sind.

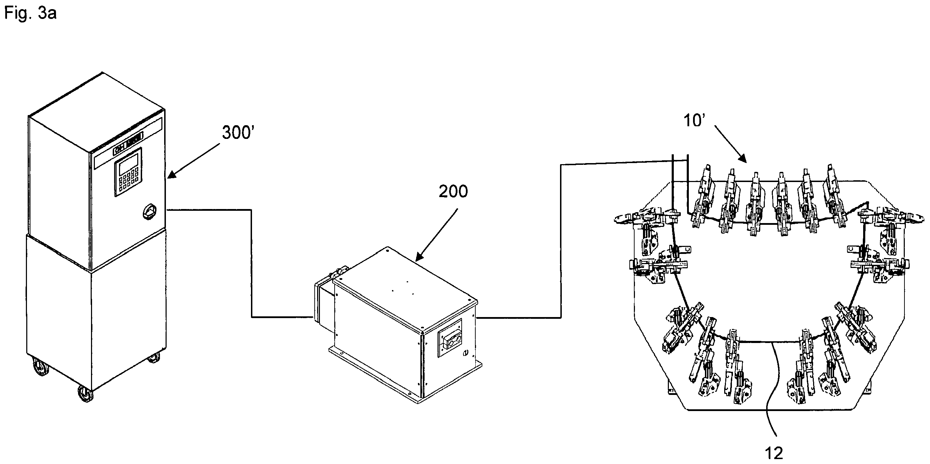

Die mit den beispielhaft gezeigten Spanneinheiten, die auch durch andere Spanneinheiten ersetzt werden können, gekoppelten Induktoren 100' sind in der Gelierstation 10' gemäß dem Stand der Technik (**Fig. 1a**) über die Kupferschiene 12 in Reihe geschaltet und beziehen die Energie zum Betrieb der an den Induktorköpfen 107 angeordneten Induktoren nachteilig durch eine einzige gemeinsame Energiequelle, einen Generator 300', wie in **Fig. 3a** dargestellt. Die Induktoren sind daher nicht einzeln ansteuerbar und ihre Leistung kann nicht ohne Weiteres auf Bautellparameter an der entsprechenden Klebestelle an einem Bauteil abgestimmt werden; hierzu ist mechanische Tätigkeit eines Werkers erforderlich, der beispielsweise Shims (Einstellplättchen/Klemmstücke) zur Abstandsänderung zwischen Induktor und Bauteil einbaut, um den Wärmebedarf der einzelnen Erwärmstellen anzupassen.

Eine Induktlonsklebeanlage nach dem Stand der Technik, die die vorstehende Gelierstation 10' verwendet, ist in **Fig. 3a** gezeigt. Dort ist die Gelierstation 10' über eine Schwingkreiseinheit 200 mit einem Generator 300' verbunden. Die Kupferschiene 12 dient der Hochstromversorgung der in Reihe geschalteten Induktoren 100' und wird durch eine integrierte Wasserkühlung gekühlt. Nachteilig erfordern derartige Wasserkühlungen aufgrund der Kopplung von Strom und Wasser, dass deionisiertes Wasser bereitgestellt wird, dessen Erzeugung entsprechend teuer ist. Die hochstromführenden Leitungen fördern Dissoziationsprozesse, unerwünschte Kriechströme entstehen. Daher ist auch im Betrieb kontinuierlich mit Filtern und entsprechendem Wartungsaufwand die Reinheit sicherzustellen. Ferner kann das Wasser nicht mit Schutzmitteln wie Glykol versehen werden, das ebenfalls dissoziiert. Daher ist es erforderlich, stets den Leitwert des Wassers zu messen, regelmäßig Filterpatronen zu ersetzen und in regelmäßigen Anständen eine Erneuerung des Wasserinhalts des gesamten Kühlsystems vorzunehmen. Weiter kann die Keimansammlung im Wasser aufgrund der Temperaturen im Bereich von typischerweise ca. 30 °C zu Problemen führen. Ferner fördert das demineralisierte Wasser Korrosion bei den in Induktionsanlagen üblichen Materialpaarungen wie beispielsweise Edelstahl, Buntmetallen usw.

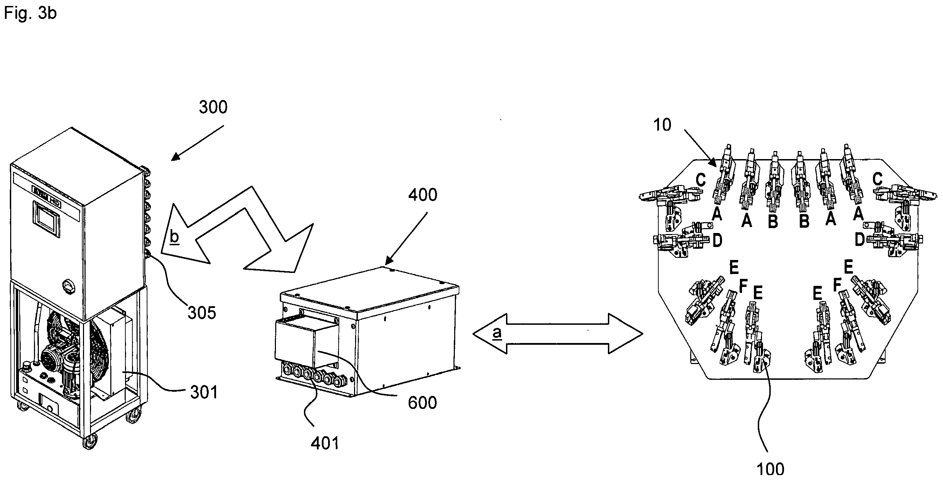

Eine erfindungsgemäße Induktionsklebeanlage ist in **Fig. 3b** gezeigt und umfasst eine Gelierstation 10, wie in **Fig. 1b** gezeigt, in der die mit Spanneinheiten ausgestatteten Induktionseinheiten 100 nicht von einer einzigen Energiequelle versorgt und in Reihe geschaltet sind. In der erfindungsgemäßen Induktionsklebeanlage sind die Induktionseinheiten 100 der Gelierstation 10 nach ihrer Leistungsaufnahme bzw. dem erforderlichen Wärmebedarf vorteilhaft gruppiert, wie in **Fig. 1b** **und** **3b** durch die mit A,B,C,D,E,F benannten leistungsgleichen Gruppen aus Induktionseinheiten A bis F, kurz Induktorgruppen genannt, dargestellt.

Selbstverständlich ist es möglich, bei kleinen Bauteilen etwa die Induktionseinheiten 100 einzeln mit der Energiequelle zu verbinden und keine Gruppierung vorzunehmen bzw. die Gruppe als Teil mit einer Induktionseinheit zu definieren, ferner ist die gezeigte Anordnung auf ein symmetrisches Bauteil gerichtet und es resultiert eine symmetrische Anordnung der Gruppen A,B,C,D,E,F; wie dem Fachmann aber leicht verständlich sein wird, können andere Bauteile, gerade solche, die unsymmetrisch sind, eine unsymmetrische Gruppenanordnung A,B,C,D,E,F der mit den Spanneinheiten kombinierten Induktionseinheiten 100 erfordern.

Anders als aus dem Stand der Technik bekannt, wird nun erfindungsgemäß ein Generator 300 eingesetzt, der mit mehreren, vorzugsweise modular ausführbaren Anzahlen an Leistungsteilen und den entsprechenden Generatorausgängen 305 ausgestattet ist. Jede der genannten Induktorgruppen A bis F, die eine bis mehrere Induktionseinheiten 100 umfassen, wird nun an einem Leistungsteil des Generators 300 angeschlossen. Der Anschluss jeder Induktorgruppe A bis F an die Generatorausgänge 305 erfolgt hier unter Ausnutzung der Resonanzüberhöhung über eine Kondensatoreinheit 400; vorliegend ein Gehäuse, in dem die Kondensatoren auf Platinen angeordnet sind. Die Anordnung der Kondensatoren auf Platinen bildet vorteilhaft eine modulare Anordnung und die Anzahl an Kondensatormodulen in der Kondensatoreinheit 400 ist variabel. Die zwischen der Kondensatoreinheit 400 bzw. den Kondensatoreingängen 401, entsprechend der Anzahl der Generatorausgänge 305 bzw. der Anzahl der Induktorengruppen A bis F, und den Generatorausgängen 305 vorliegenden stromführenden Leitungen sind symbolisiert durch den Blockpfeil b dargestellt, die von den Kondensatormodulen der Kondensatoreinheit 400 zu den Induktionseinheiten 100 führenden Leitungen sind durch Blockpfeil a angedeutet. Vorteilhaft lässt sich die Kondensatoreinheit 400 für eine flexible und erweiterbare Anzahl an Kondensatoren einrichten.

Vorzugsweise kommen auf Platinen montierte, luftgekühlte Kondensatoren zum Einsatz; es ist jedoch unter Einschränkungen beispielsweise in Bezug auf Flexibilität des Kühlmittels und der Wirtschaftlichkeit auch der Einsatz klassischer Bauarten möglich. Die Platinen der erfindungsgemäßen Kondensatormodule gestatten durch einfache Lötbrücken oder Steckbrücken die Parametrierung der Kondensatorbank in weiten Grenzen zu verändern. Hierbei ist es beispielsweise möglich, Kondensatorgruppen einfach in Reihe zu schalten, parallel zu schalten, oder eine Kombination beider Schaltungsarten zu realisieren. Dies ist insbesondere dann von Bedeutung, wenn die Anzahl der Induktionseinheiten pro Leistungsteil des Generators zu ändern ist. So kann die Anzahl der Induktionseinheiten in einer Gruppe beispielsweise von 1 auf 4 erhöht werden, während gleichzeitig die Kapazität durch Änderung der Parallelschaltung in eine Reihenschaltung entsprechend verringert wird.

Bei Standardanwendungen ist durch isolierte Standardstecker mit interner Kurzschlussbrücke, die anstelle nicht benötigter Induktionsstellen an den Schwingkreis angesteckt werden, seitens eines Anwenders ohne technische Ausbildung die Anpassung der Gelieranlage an geänderte Bauteilanforderungen möglich.

Dies ist beispielsweise vor Ort bei der Montage, etwa auf der Baustelle eines Anwenders mit wenig oder ohne Material und im Idealfall ohne Werkzeugeinsatz möglich, so dass sich die Parametrierung der Anlage sehr vereinfacht.

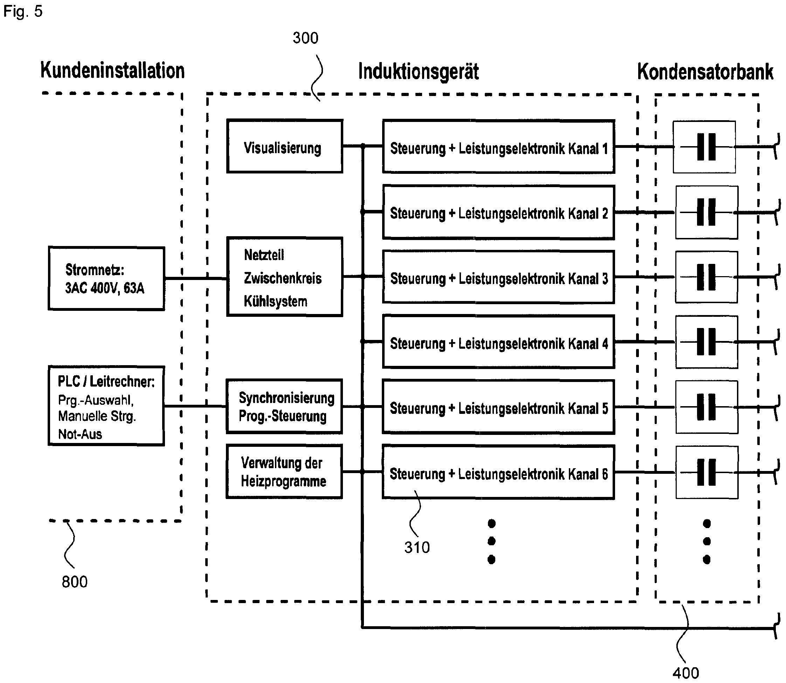

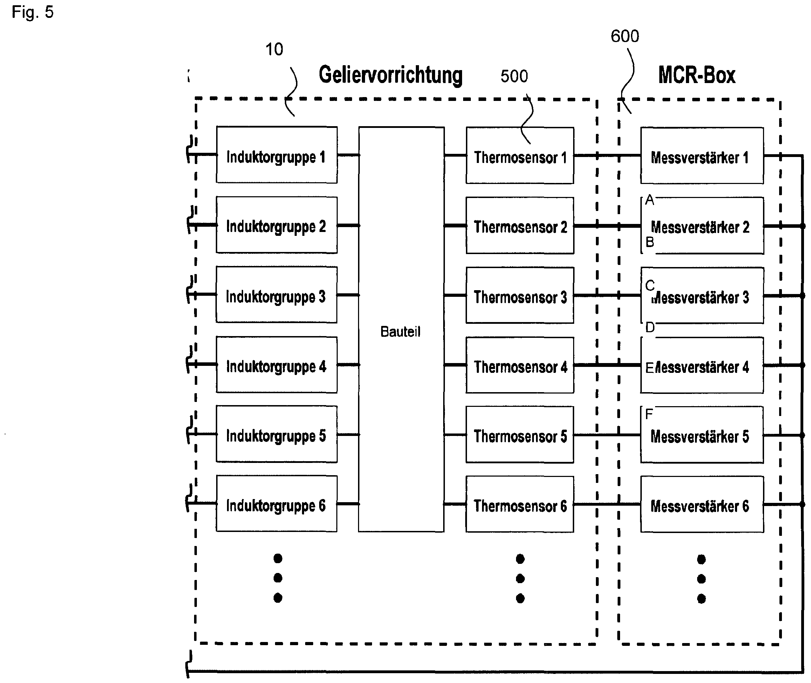

Ferner können Klemmen zur Gruppierung der Induktionseinheiten entsprechend der einzelnen Leistungsteile des Generators vorzugsweise in der Kondensatorbank angeordnet sein. Die Kondensatorbank ist vorzugsweise in Nähe der Induktionseinheiten installiert, so dass sich minimale Kabelwege ergeben. Somit bietet es sich an, die Messverstärker 600 der Temperatursensoren ebenfalls an dieser Stelle zu montieren, wobei aus Gründen der Abschirmung ein separates Gehäuse der MCR-Box 600 entsprechend **Fig. 5** **und** **3b** an der Kondensatoreinheit vorgesehen ist.

Eine Schwingkreiseinheit, wie sie aus dem Stand der Technik bekannt ist, erübrigt sich durch die dezentrale Verteilung der Transformatoren auf die Induktionseinheiten. Für die lediglich beispielhaft und in Bezug auf die Anzahl keinesfalls als beschränkend zu verstehenden in **Fig. 1b** **und** **3b** gezeigten sechs Induktorgruppen A bis F werden sechs Leistungsteile im Generator 300 benötigt, wobei jeweils ein Kanal von einem Generatorausgang 305 zu einem Eingang 401 der Kondensatoreinheit 400 verläuft. Die Kondensatoreinheit 400 umfasst vorzugsweise für jede Induktorgruppe A bis F bzw. jeden Generatorausgang eine Platine mit einem oder mehreren Kondensatoren. Grundsätzlich ist auch eine andere Anordnung möglich, beispielsweise mehrere gekoppelte Platinen pro Ausgang oder eine große Platine, welche die Kondensatoren mehrerer Ausgänge trägt.

Die Kondensatoren der verschiedenen Kanäle sind elektrisch und vorzugsweise auch physikalisch voneinander getrennt. Die Kondensatoreinheit 400 weist vorliegend eine Anzahl von Ausgängen auf, die der Anzahl der Induktionseinheiten 100 entspricht, wobei jeweils die Induktionseinheiten 100 einer Gruppe A bis F über eine Kondensatorplatine von einem Leistungsteil versorgt werden.

Generell ist der Betrieb einer Induktionsklebeanlage auch ohne Kondensatoreinheit möglich, wenn bei kleinen Leistungen auf die Resonanzüberhöhung des Schwingkreises verzichtet wird. Hierdurch sinkt allerdings der Wirkungsgrad ab, da die erforderliche Blindleistung nicht lokal kompensiert, sondern über die elektrische Verbindung bis zum Leistungsteil des Generators transportiert wird, zudem entstehen am Schaltglied erhöhte Umschaltverluste.

So können je nach Anforderungen von einer bis zu mehreren, hier bis vier Induktionseinheiten 100 je Leistungsteil gruppiert werden. Die Leistungsteile sind getrennt ansteuerbar, siehe auch das Blockschaltbild der **Fig. 5**. Die Steuerung bzw. Steuerungsvorrichtung der Leistungsteile kann mit vorgegebenen Heizprogrammen betrieben werden, die auf einen bestimmten Bauteiltyp bzw. auf eine bestimmte Bauteilgeometrie oder/und -beschaffenheit abgestimmt sein können. Die Leistungsteile können auch zeitversetzt und/oder mit anderen Programmen angesteuert werden.

Unter Programm wird hierbei eine Folge von Steuerungsanweisungen für jedes Leistungsteil verstanden, die angibt, wie lange und mit welcher Leistung jede Induktorengruppe zur Durchführung eines vorgegebenen Klebevorgangs an einem vorgegebenen Bauteil versorgt wird.

Vorzugsweise kann ein gemeinsam genutzter Pool von Programmen umgesetzt bzw. verwendet werden, so dass vorhandene Programme für neue Gruppen leicht übernommen und bei abweichendem Leistungsbedarf angepasst werden können.

Es ist auch möglich, mehrere Leistungsteile gekoppelt mit einer gemeinsamen Steuerung zu betreiben, um die Ausgangsleistung einer Gruppe beispielsweise für besonders energieintensive Anwendungen zu erhöhen.

Ferner ist es möglich, wenn lokal am Bauteil räumlich dicht angeordnete Induktoren vorliegen, die sich durch magnetische Kopplung gegenseitig beeinflussen würden, die Generatorausgänge, mit denen die Induktorgruppen versorgt werden, zu synchronisieren. Da in der Regel die Zonen unabhängig geregelt werden sollen, sind sie hierbei vorzugsweise verschiedenen Gruppen zugeordnet. Die magnetische Kopplung führt hierbei zu Fluktuationen der Stromregelung über fehlerhaft gemessene Leistungen bis hin zum Ansprechen der Schutzschaltung z. B. bei aufgrund der Störeinflüsse falsch gemessenen Phasenlagen. Um die gegenseitige Beeinflussung der Steuerungen der Leistungsteile im Generator hierbei zu vermeiden, können die betroffenen Induktoren phasensynchron, aber mit verschiedenen Pulsweiten betrieben werden.

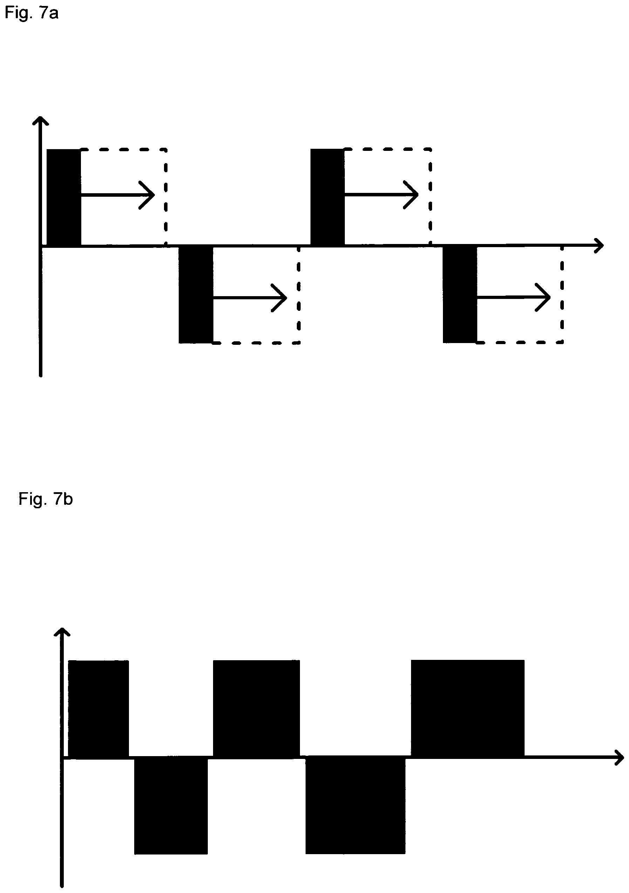

Hierfür steht im PWM-Regelverfahren entsprechend **Fig. 7a** eine Funktion bereit, welche die Rückwirkungen durch phasensynchrone Ansteuerung minimiert und dennoch die individuelle Regelung der Leistung gestattet. Hierzu werden die Induktionseinheiten bzw. die Frequenz des Generators so angepasst, dass ohne Frequenzmodulation eines Schwingkreises eine hinreichend hohe Leistung abgegeben wird. Bei Einsatz von Dreieckstrom entfällt hierbei die aufwendige und störanfällige Abstimmung der Resonanzfrequenz, wobei vorzugsweise die Resonanzkondensatoren entfallen oder diese in ihrer Kapazität so dimensioniert sind, dass sie im Arbeitspunkt mit den angeschlossenen Trafo-Induktionseinheiten keine nennenswerte Resonanzeigenschaften ausbilden.

Zur Anwendung kommt dies vorwiegend, wenn aufgrund übereinanderliegender Erwärmstellen bei beidseitiger Erwärmung von Werkstücken die magnetische Kopplung sehr hoch ist. Dies ist beispielsweise bel der Verklebung von Filterpatronen mit oberem und unterem Blechdeckel der Fall, oder bei Verklebung von FVK-Werkstoffen mit beidseitiger Erwärmung.

Alternativ kann durch Auslassen einzelner Pulse für diese Anwendung ein ungestörter Betrieb ermöglicht werden, was der aus Gründen der Geräuschabstrahlung hier nicht näher beschriebenen Regelmethode der Puls-Pausen-Modulation entspricht.

Unter Verzicht auf zusätzliche Sicherheitsmerkmale wie Phasenwinkelüberwachung bei kleinen Strömen eignet sich das System auch im Regelverfahren FM nach **Fig. 7b** gut zum Betrieb gekoppelter Lasten.

Die eingesetzten Regelverfahren Pulsweiten-, Pulspausen- und Frequenzmodulation sind nachfolgend noch genauer beschrieben.

Vorzugsweise ist jeder Leistungsteil mit einer echtzeitfähigen Steuerung zur Leistungsregelung, Leistungsmessung, Umsetzung der Schutzschaltungen und für ähnliche, hardwarenahe Funktionen ausgestattet, wobei eine übergeordnete Prozessteuerung diese beispielsweise im Multiplexverfahren mit Befehlen wie dem Sollwert an Heizleistung versorgt. In diesem Fall ist es neben der oben aufgeführten Unterdrückung der Rückwirkungen der Generatorkanäle auch möglich, die thermische Beeinflussung der Erwärmzonen zu kompensieren. Die übergeordnete Steuerung ermittelt hierbei den parasitären Wärmeeintrag einer Leistungsgruppe auf eine andere Gruppe und weist dieser anderen Gruppe entsprechend geringere Heizleistung zu. Ohne Einsatz einer übergeordneten Steuerung ist auch direkt zwischen den Kanälen eine Kommunikation, z. B. über Bus möglich. Der Grad der Kompensation ist hierbei ähnlich der Kompensation der Umgebungstemperaturen über Kennlinien, was nachfolgend noch erläutert wird, einstellbar. In der Steuerung jeder Gruppe ist hierzu im Bedarfsfall vorzugsweise für jeden Einflussfaktor je eine Kennlinie abgelegt. Für das Beispiel von drei gekoppelten Gruppen A, B und C bietet sich der Einsatz von 6 Kennfeldern an: A beeinflusst durch B, A beeinflusst durch C, B beeinflusst durch A, B beeinflusst durch C, C beeinflusst durch A und C beeinflusst durch B.

Vorteilhaft kommt statt der bekannten Schwingkreiseinheit, die mit dem herkömmlichen Generator gekoppelt war, die genannte Kondensatoreinheit 400, siehe **Fig. 5**, zum Einsatz. Im vorliegenden Beispiel eines symmetrischen Bauteils bestehen die Induktorgruppen A bis F jeweils aus zwei oder vier Induktionseinheiten, welche jeweils an einer Spanneinheit montiert sind. Selbstverständlich können in anderen Ausführungsbeispielen die Induktionseinheiten pro Gruppe, die Anzahl an Induktionseinheiten 100 pro Spanneinheit und auch die Gruppenanzahl abweichen; entsprechend wird die Auslegung der Kondensatoreinheit und des Generators und der gegebenenfalls weiteren vorliegenden Geräte angepasst.

Die Integration der erfindungsgemäßen Induktionseinheiten in eine Spanneinheit kann sinnvoll sein, es ist aber auch eine unabhängige Anordnung von Spanneinheit und Induktionseinheit denkbar, insbesondere, wenn die Spanneinheiten eher den mechanischen Auflageanforderungen entsprechend ausgelegt sind, während die Induktionseinheiten dem Wärmebedarf angepasst sind.

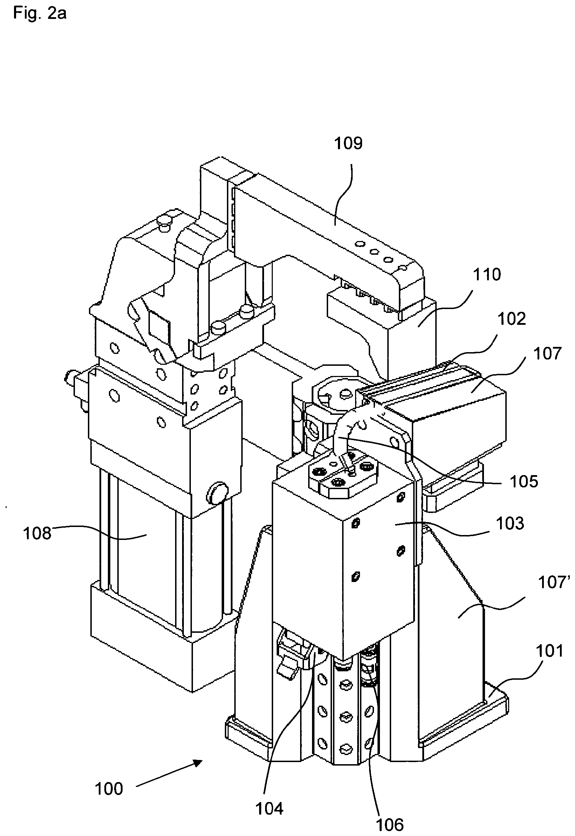

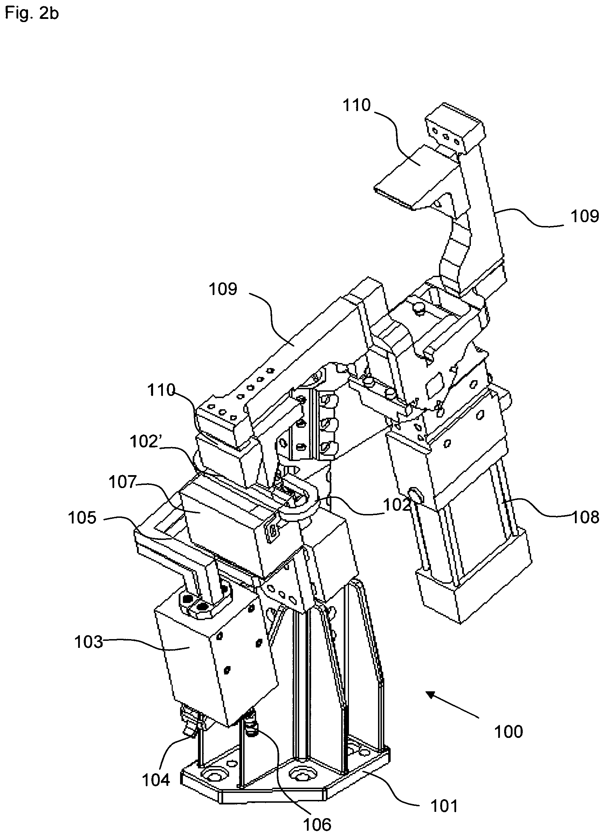

Die erfindungsgemäße Gelierstation 10, wie in **Figur 1b** gezeigt ist, kann vorteilhaft bis hin zur Induktionseinheit 100 mit Niederstrom betrieben werden, Hochstrom ist lediglich am Induktor 102 selbst (siehe **Fig. 2a** **und** **2b**) erforderlich. Durch die Vermeidung von Hochstrom wird es erfindungsgemäß möglich, an weiten Strecken bis hin zum Induktor 102 auf die Verwendung von teueren und verlustbehafteten, wassergekühlten Kupferkabeln oder Standardhochstromkabeln zu verzichten. Dies bringt vorteilhaft weiter mit sich, dass der gesamte Energieaufwand der Station und damit die erforderliche Kühlleistung, um die Station zu betreiben, verringert werden.

Durch den Einsatz von Hochstrom nur am Induktor wird es auch möglich und ist aus energetischer Sicht geeignet, nicht-metallische Materialien wie beispielsweise Bauteile aus Faserverbundkomponenten wie CFK-Bauteile durch induktive Verklebung zu verbinden, wobei die punktuelle oder je nach Anforderung der Klebestelle auch großflächigere erforderliche Hitze erreicht werden kann, ohne dass das gesamte System hochstromig betrieben werden muss. Der Hochstrom wird dann direkt nur an dem Induktor 102 der Induktionseinheit 100 am Faserverbundkunststoff eingesetzt und führt daher nur dort zur gewünschten lokalen Erwärmung.

Daher können verschiedene Komponenten der Geliervorrichtung 10 anders als bisher auch aus Metall bspw. Stahl gebildet werden, was im Stand der Technik bei Verwendung von Hochstrom nur eingeschränkt möglich war, da sich Streufelder bilden konnten und sich insofern die benachbarten Metallkomponenten ebenfalls erwärmten, was bei der erfindungsgemäßen Ausbildung weitestgehend oder vollständig ausbleibt.

Mit einer Ausführungsform der erfindungsgemäßen Induktionsklebeanlage können besonders auch bei kritischen zu fügenden Teilen wie Kotflügeln sehr gute Ergebnisse erzielt werden, weil die Bauteildicke etc. individuell durch die Leistungssteuerung des einzelnen Induktors berücksichtigt werden kann, die für das Klebeergebnis relevant ist, indem für gleiche Bauteilabschnitte mit gleichen Parametern (Bauteildicke, Material, Wärmeleitfähigkeit, Geometrie) jeweils die Induktionsvorrichtungen einer Gruppe mit gleicher in der Leistung zueinander proportionaler, entsprechend erforderlichen Leistung betrieben werden.

Die Gelierstation kann eine umlaufende Erwärmung des gesamten Bauteils bewirken, wenn die Spots hinreichend dicht beieinander sitzen oder die einzelnen Spots hinreichend groß gewählt sind.

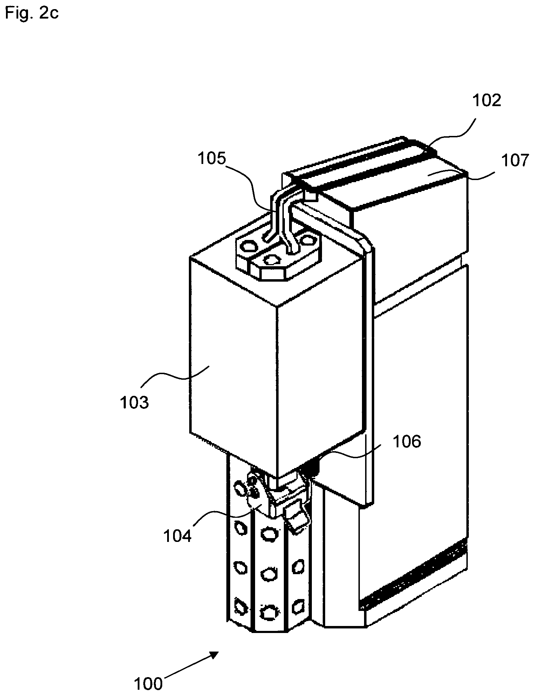

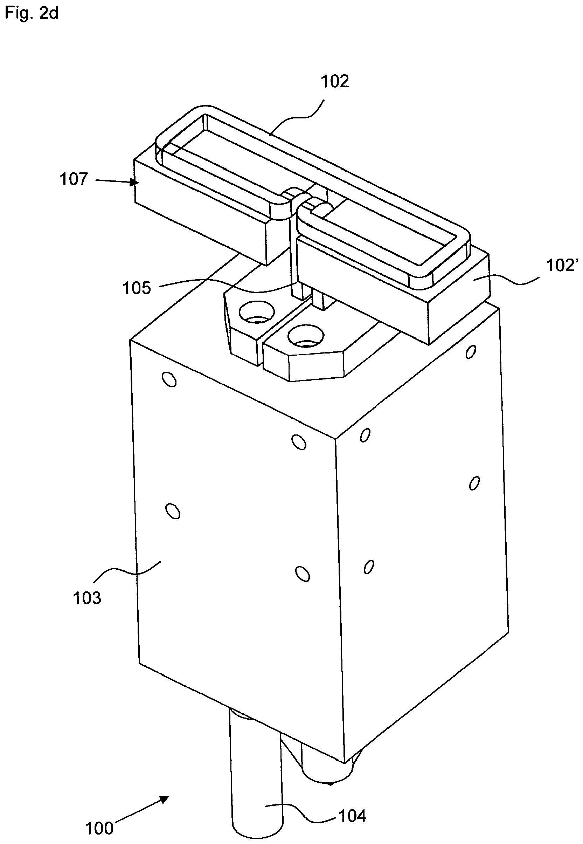

Eine erfindungsgemäße Induktionseinheit 100 kann aufgebaut sein wie in **Fig. 2c****,****2d** oder zusammen mit Spanneinheit in **Fig. 2a****,** **2b** gezeigt, und bildet eine kompakte, leichte Einheit, die erfindungsgemäß einen effizienzoptimierten Induktor 102 mit seiner Haltevorrichtung und einen Transformator 103 umfasst, die zu einer transportablen und flexiblen Bauteileinheit verbunden sind. Die Induktionsspule, die hierin als "Induktor" 102 bezeichnet wird, ist in einen als Bauteilauflage geformten Induktorkopf 107 teilweise eingebettet, bzw. liegt dort auf und kann spezifisch an die Erwärmungsstelle angepasst werden.

Statt Haltevorrichtung kann auch ein Schwenkarm, ein verfahrender Pneumatikzylinder oder ein anderer Mechanismus zur Positionierung eingesetzt werden.

**Figur 2c** zeigt einen solchen optimierten Induktorkopf 107, der durch seine Form und Materialwahl eine verbesserte Wärmeübertragung auf das induktiv zu verklebende, kurz, das "zu fügende" Bauteil ermöglicht: Der Induktorkopf 107 weist einen Auflagebereich auf, in den auch der Induktor 102, der als U-förmiges Teil ausgebildet ist, mit dem mittleren Abschnitt so eingebettet ist, dass die beiden offenen Enden des U über den Kopf 107 hinauskragen. Dabei ist vorteilhaft der Auflagebereich an dem Abschnitt, der den Induktor 102 aufnimmt als Bauteilauflage ausgeformt und verbessert so die Positionierung des Bauteils und durch den eingebetteten Forminduktor die Wärmeübertragung.

Weiter kann der verbesserte erfindungsgemäße Induktorkopf 107 an der Einbettung des Induktors 102 einen Feldkonzentrator 102' umfassen, wie in **Fig. 2b** zu erkennen ist, der den Induktor 102 teilweise umgreift und der Wärmeübertragung durch Konzentration des Induktionsfelds auf die Erwärmzone besonders förderlich ist.

Als Feldkonzentrator 102' kommen je nach Anwendung verschiedene Materialien und Formgebungen in Frage. Für Stahl- und Aluminiumanwendungen werden die Induktoren im Mittelfrequenzbereich vorzugsweise mit geblechten U- oder E-Kernen aus Dynamoblech paketiert. Für höhere Arbeitsfrequenzen kommen teure Bleche aus Mu-Metall^{®} oder 3D-gefräßte Fluxtrol^{®} -Formteile zum Einsatz und für die Erwärmung von CFK-Bauteilen hat sich eine hinter dem Induktor angebrachte Ferritstange besonders bewährt. Diese kann auch in Bruchstücke geteilt ausgeführt sein, wie in **Fig. 2d** gezeigt. Von Bedeutung ist für die Erwärmung von CFK ein besonders hoher Kupferquerschnitt bei hoher Leitfläche, so dass die Verluste auch unter Berücksichtigung des Skineffekts gering bleiben. Die Induktoren können in den Formen U, O, 8 oder I ausgeführt sein, wobei die Formen O, U und 8 den besten Wirkungsgrad aufweisen.

Die Transformatoren 103 sind, wie in den **Fig. 2a bis 2d** zu sehen, vorteilhaft in direkter Nähe zum Induktor 102 angebracht, so dass Verluste auf den Hochstromschienen und Kupferrohren 105 minimiert sind. Die Transformatoren 103 können seitlich an jeder Seite oder auch unterhalb des Induktors 102 angebracht sein. Die Öffnung der Schleife des Induktors 102 zur Stromeinspeisung soll möglichst eng ausgeführt sein, um das Feld nicht zu sehr zu verzerren.

Da eine derartige Formanpassung in Bezug auf die Bauteilform die flexible Nutzung im Sinne eines modularen Einsatzes solcher Induktorköpfe 107 einschränkt, kann sich die Optimierung auch lediglich auf den Feldkonzentrator 102' beziehen und die Bauteilauflage oder zumindest der eigentliche Induktor ist multifunktionell geformt.

Für die erfindungsgemäße Trafo-Induktionseinheit 100, die in eine Spanneinheit integriert sein kann, können Transformatoren 103 beispielsweise in drei Standardübersetzungen für Gruppen aus einem, zwei, drei oder vier Induktoren je Generatorausgang eingesetzt werden. Es kann aber auch mit einer Übersetzung gearbeitet werden, wobei sich der Wirkungsgrad durch schlechten Phasenwinkel und unnötig hohen Primärstrom gegenüber optimaler Anpassung verschlechtert.

Ferner kann, um weniger Bauraum für die erfindungsgemäße Induktionsklebeanlage zu verbrauchen und den Wirkungsgrad zu verbessern, als Transformator 103 an jeder der Induktionseinheiten ein Miniatur-koaxial-Trafo eingesetzt werden. Vorzugsweise ist der Transformator zumindest primärseitig nicht wassergekühlt, wobei Wärme leitende Vergussmasse die Verluste der Primärwicklung und des Kerns an das Gehäuse oder ein innenliegendes, mit Wasser gekühltes Element wie beispielsweise das innenliegende Rohr der Sekundärwindung abführt. Von Außen kann die Wärme des Trafos über ein am Gehäuse thermisch leitend angebrachtes Rohr abgeführt werden.

Es ist ferner möglich, dass mehrere benachbarte Induktoren 102, die stromgleich betrieben werden, und die insofern einer Induktorgruppe zugehörig sind, mit einem gemeinsamen Transformator 103 zu einer Baueinheit verbunden sind. Damit ergibt sich, dass pro Induktorgruppe zumindest ein Transformator 103 erforderlich ist.

Die elektrische Versorgung des Transformators 103 erfolgt über flexible Standardkabel mit Standardindustriesteckverbindung, vorzugsweise mit bifilarer Stromführung. An den Transformatoren 103 ist ein entsprechender Steckanschluss 104 vorgesehen. Die Hochstromführung liegt dann nur sekundärseitig direkt am Induktor 102 an. Die zur Hochstromführung verwendete Kupferverkabelung 105 kann entsprechend kurz gehalten werden.

Im Gegensatz zu den verlustbehafteten Messing-Schraubverbindern nach Stand der Technik kommen verlustarme, großflächige Kupferbacken zum Einsatz, die vorzugsweise Wasser und Strom gleichzeitig zu den Induktoren transportieren. Hierdurch ist es möglich, standardisierte Transformatoren oder Induktoren als separate Module einzeln zu tauschen oder an neue Anforderungen oder andere Anwendungen anzupassen.

Die mit der Trafo-Induktionseinheit 100 verbundene Spanneinheit, wie sie in **Fig. 2a** **und** **2b** gezeigt ist, umfasst einen schwenkbaren Spannarm 109 (in **Fig. 2b** in beiden Schwenkpositionen dargestellt) mit einem Druckstück 110 zur Fixierung der zu fügenden Bauteile auf. Der Spannarm 109 mit dem Druckstück 110 kann durch den Bauteilspanner 108 in seiner Höhe variiert werden. Mit der Spanneinheit aus Bauteilspanner 108, Spannarm 109 und Druckstück 110 wird beim Kleben bis zum Gelieren bzw. Aushärten des Klebers Druck ausgeübt und ggf. wird das Bauteil zurecht geformt. Ferner wirkt die Spanneinheit etwa der beim Umbördeln entstehenden Federwirkung entgegen.

Generell ist es auch möglich, bestehende Altanlagen, beispielsweise wie in **Fig. 2b** gezeigt, erfindungsgemäß aufzurüsten, wobei die bisherigen Induktoren erhalten bleiben können, denen aber ein Transformator zugeordnet wird. Zur Aufrüstung ist die Gruppierung der einzelnen Induktionsvorrichtungen zu Leistungsgruppen vorzunehmen, die dann jeweils an ein Leistungsteil eines neuen Generators angeschlossen werden. So kann durch die Umrüstung von Altanlagen die Energieeffizienz derselben zumindest verbessert werden. Die Nachrüstung umfasst, dass die zu den Induktoren geführten, Hochstrom führenden Kupferschienen an die Montageposition der Transformatoren angepasst werden. Der herkömmliche Schwingkreis wird durch eine optionale Kondensatoreinheit ersetzt.

Mit den erfindungsgemäßen Trafo-Induktionseinheiten 100, wie in **Fig. 2a bis 2d** dargestellt, kann durch die verbesserte Effizienz (verkürzte hochstromführende Kupferverkabelung 105, angepasste Spulenform der Induktoren 102, eingebettet in einen oder angeordnet auf einem Induktorkopf 107, der einen wie in **Fig. 2b** gezeigte Feldkonzentrator 102' aufweisen kann oder wie **in** **Fig. 2d** aus dem Feldkonzentrator 102' gebildet sein kann) bzw. durch den verbesserten Wirkungsgrad der Energieverbrauch an einem erfindungsgemäßen Induktor um ca. 35 bis 65 % gesenkt werden. Je nach Anwendung kann sich eine Energieersparnis von typisch ca. 50 % ergeben, wenn ein Bauteil mit einer erfindungsgemäßen Induktionsklebeanlage anstatt mit einer Induktionsklebeanlage gemäß dem Stand der Technik gefügt wird.

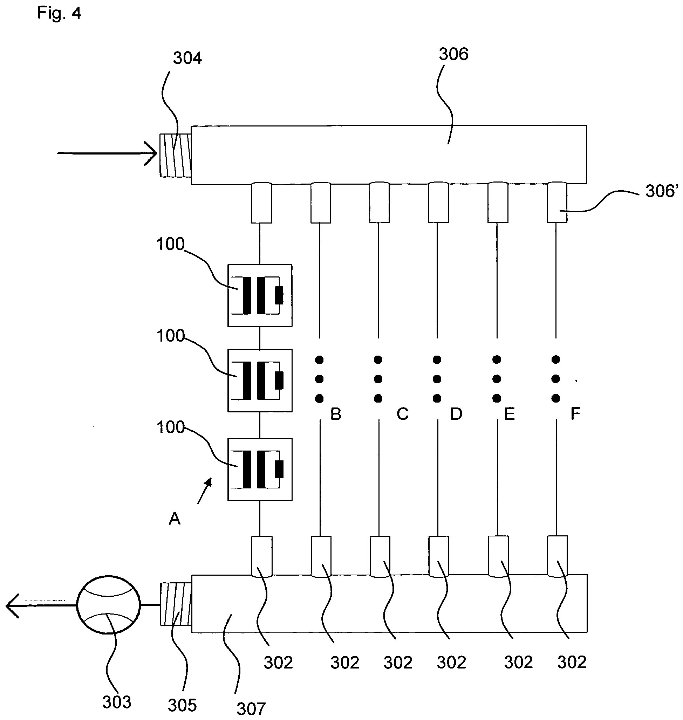

Die Kühlung der erfindungsgemäßen Gelierstation kann durch den in **Fig. 4** skizzierten Kühlabschnitt der erfindungsgemäßen Kühlanlage mit einem Kühlwasserkreislauf für die Kühlung der Induktorgruppen A bis F geleistet werden. Die Kühlanlage hat einen Verteilereingang 304, der in einen Verteiler 306 mündet, der eine Vielzahl von Abgängen 306' aufweist, von denen sich hier sechs Zweigleitungen 302 weg erstrecken, der Anzahl der zu kühlenden Induktorgruppen A bis F angepasst. Die Anordnung ist gestaffelt und die Zweigleitungen 302 verlaufen parallel. Und in jede Zweigleitung 302 ist mittels eines entsprechenden Zweigleitungsab- und eines Zweigleitungseingangs jeweils eine Induktorengruppe A,B,C,D,E,F bzw. deren Kühlleitungen als zu kühlender Verbraucher geschaltet. Die Zweigleitungsabgänge münden in einen Sammler 307 mit Sammlerausgang 305, hinter dem sich unmittelbar eine Durchflusskontrollvorrichtung, hier ein optionaler Durchflussmesser 303 zur Durchflusskontrolle des Wassers befindet. Zur Führung des Kühlmittels kommen vorzugsweise Standard-Pneumatikleitungen zum Einsatz, welche preiswert verfügbar sind und die technischen Ansprüche erfüllen. Die Anzahl an parallelen Zweigleitungen ist begrenzt durch die Auflösung und Reproduzierbarkeit des Durchflusswächters 303: Es ist darauf zu achten, dass die Verstopfung einer Zweigleitung noch erkannt werden kann.

Diese Kühlanlage bzw. der Kühlabschnitt ist für sechs Induktorengruppen ausgelegt, aber denkbar ist, den der Gelierstation 10 zugedachten Abschnitt so auszulegen, dass eine Anzahl von 2 bis 32, bevorzugt von 2 bis 16, besonders bevorzugt von 2 bis 12 Induktorengruppen versorgt werden können. Dabei kann jede Induktorengruppe 1 bis 10, bevorzugt 2 bis 8, besonders bevorzugt 2 bis 6 Trafo-Induktionseinheiten aus zumindest einem Induktor 102 und einem Transformator 103 aufweisen. Um kein unnötiges Versagensrisiko einzugehen, sollte die Kühlanlage bei Auslegung für mehr als 6 Induktorengruppen zwei Sammler 307 aufweisen, die in Reihe geschaltet und vorzugsweise am Ausgang des letzten Sammlers im Durchfluss überwacht sind. Alternativ ist eine Parallelschaltung der Sammler möglich, wobei an jedem Sammler vorzugsweise am Ausgang eine weitere Durchflusskontrollvorrichtung, bevorzugt ein Durchflussmesser 303 angeordnet sein sollte.

Es ist also zu sehen, dass die einzelnen Induktorgruppen A bis F jeweils von einer eigenen "Kühlleitung", der Zweigleitung 302 versorgt werden, also vorliegend über sechs parallel angeschlossene Zweigleitungen 302.

In der **Fig. 4** ist in der Induktorengruppe A zur Verdeutlichung jede der Induktionseinheiten 100 stark vereinfacht gezeigt, wohingegen in B bis F nur Punkte die Induktionseinheiten 100 symbolisieren. Diese erfindungsgemäß gestaffelte Kühlung der Induktorgruppen A bis F, - und vorliegend entsprechen die "Kühlgruppen" den Induktorgruppen - vermeidet den zu hohen Durchflusswiderstand, der bei einer Kühlung der Induktionsvorrichtungen in Reihe entstehen würde.

Um einen solchen Durchflusswiderstand zu überwinden, müsste eine Druckerhöhungspumpe eingesetzt werden, was den Aufwand und die Gefahr von Undichtigkeit erhöhen würde. Hingegen könnten bei einem parallelen Anschluss aller Induktionsvorrichtungen Verstopfungen an einer einzelnen Induktionsvorrichtung nicht mehr festgestellt werden, da die Verringerung des Massenstroms bzw. der Durchflussmenge (bei den im Beispiel vorliegenden 18 Spots) unterhalb der Überwachungsgrenze des eingesetzten Durchflussmessers 303 läge. Eine genauere Überwachung wäre unpraktikabel, da dabei Fehlalarme durch Luftblasen, Turbulenzen und Spannungsschwankungen an der Pumpe entstünden.

Bei sechs parallel angeschlossenen Zweigen 302 hingegen ist eine Verstopfung eines Zweigs 302 noch erkennbar. Ist der Einsatz eines zweiten Durchflussmessers 303 vorgesehen, wie oben dargelegt, so können auch bis zu zwölf Induktorgruppen überwacht werden.

Durch die Kombination aus Durchflusswächter und Thermosensor in den Transformator ergibt sich eine doppelte Sicherheit. Aus Kostengründen ist es möglich, auf eine der Überwachungsfunktionen zu verzichten. Im Fall einer einzelnen Temperaturüberwachung der Transformatoren wäre hierbei das Wassersystem als reine Parallelschaltung ohen Durchflusswächter realisierbar.

Ferner ist denkbar, dass in Abhängigkeit der Spot- bzw. Gruppenanzahl der Geliervorrichtung auch mehr als eine derartige Wasserverteilung mit Parallelanschlüssen für die Induktorgruppen eingesetzt wird.

Die erfindungsgemäße Induktionsklebeanlage, wie sie in **Fig. 3b** gezeigt ist, kann statt einer Gelierstation 10 auch mehrere aufweisen, wenn der Generator über eine entsprechenden Anzahl an Leistungsteilen verfügt. Es wird vorgeschlagen, dass dann jede der Gelierstationen mit einer erfindungsgemäßen Kühlvorrichtung gekühlt wird. Pumpe, Wasser/Luft-Wärmetauscher und Lüfter können hierbei vorzugsweise auch gemeinsam genutzt werden, lediglich die Durchflussüberwachung ist in diesem Fall pro Gelierstation je nur einmal vorzusehen.

Zur Temperaturüberwachung der Gelierstation 10 und insofern der Induktionsklebeanlage kann beispielsweise an oder in jeder Trafo-Induktionseinheit 102-103 ein Thermosensor enthalten sein. Vorzugsweise ist hierzu in mindestens einem in einer Induktorgruppe befindlichen Koaxialtransformator ein selbstrücksetzendes PTC-Element mit Sprungkennlinie nahe des sekundären Hochstromleiters im Einsatz. Das Element ist so gekoppelt, dass es den steilen Gradienten bei unterbrochenem Kühlwasserfluss hinreichend schnell erkennt, um eine Beschädigung des Trafos zu verhindern. Es bietet sich aus Gründen der Ersatzteilhaltung an, sämtliche Transformatoren mit PTC-Element auszustatten. Diese sind dann entsprechend der Induktorgruppen A,B,C,D,E,F wie die Generatorausgänge gruppiert und in Reihe geschaltet. Bei Übertemperatur, etwa durch eine unerkannte, teilweise Verstopfung in der Wasserkühlleitung und einer damit verbundenen partiellen Überhitzung wird die jeweilige Gruppe A,B,C,D,E oder F vom Generator 300 abgeschaltet. Ein Notbetrieb der Anlage ist mit den übrigen Gruppen möglich.

Eine gekreuzt zwischen den Induktorgruppen ausgeführte Wasserführung ist möglich, wenn die Temperatursensoren so verschaltet sind, dass bei Ausfall einer Zweigleitung alle hierdurch betroffenen Generatorausgänge stillgelegt werden. Der Temperatursensor muss unmagnetisch und in geeigneter Konstruktion ausgeführt sein, um nicht durch das Induktionsfeld seinerseits eine die Messung verfälschende Erwärmung zu erfahren.

Es ist zu beachten, dass nicht notwendigerweise in jedem Falle eine Kühlvorrichtung für die Induktoren vorliegen muss; bei Stahl als zu verarbeitendem Werkstoff kann die Anlage hier auch ohne Kühlung auskommen.

Das Blockschaltbild in Fig. 5 zeigt die Systemstruktur einer erfindungsgemäßen Induktionsklebeanlage. Neben den jeweils einem Kanal 1 bis 6 zugeordneten Leistungsteilen 310, die sich aus einem Steuerungsmodul und einer Leistungselektronik zusammensetzen, umfasst der Generator 300 vorzugsweise gemeinsam genutzte Elemente Visualisierungselemente, ein Netzteil zur Verbindung mit dem Stromnetz, eine Busanbindung zu einem Leitrechner zur Betriebsmittelsteuerung (aufgeführt unter "Kundeninstallation" 800) mit Synchronisierung der Programmsteuerung und die erfindungsgemäße Kühlanlage. Die Kühlanlage kann je nach Anwendung auch vom Generator getrennt aufgestellt und von der Betriebsmittelsteuerung aus kontrolliert sein. Auch in diesem Fall überwacht jedoch der Generator Temperatur und Durchflussmenge der ihm zugeordneten Induktionseinheiten.

Die gemeinsam genutzten Elemente können auch aufgetrennt vorhanden sein, beispielsweise ist es möglich, alternativ oder zusätzlich zum Bedienpanel am Generator ein Panel an der Kundeninstallation an gut zugänglicher Stelle anzubringen oder über Netzwerk und Internet die Bedienung, Einrichtung und Überwachung des Generators beispielsweise über ein entfernt gelegenes Panel oder eine PC-Visualisierung vorzunehmen. Dies macht Sinn, wenn der Generator im Schutzzaun einer Anlage steht und so im Betrieb schwer erreichbar ist, oder wenn eine globale Prozesskontrolle mehrere Standorte der Produktion überwacht.

Unter "Visualisierungselemente" wird vorliegend ein Display verstanden, auf dem eine Programmsteuerung angezeigt wird, die ein Heizprogramm zur Nutzung der Induktoren steuert. Die Bedienung kann über ein Touchpanel erfolgen.

Die Kondensatoreinheit 400 ist hier als eine separate Einheit dargestellt, kann aber ebenfalls wie die Leistungsteile 310 im Generatorgehäuse angeordnet sein. Ferner ist die Anordnung der Kondensatorplatinen an oder beispielsweise vergossen in den Transformatoren der Induktionseinheiten 100 denkbar. Die Kombination aus Kondensatoren im Trafo hat den Vorteil, dass bei Reihenschaltungen die Spannungen an den Steckverbindern durch die lokale Blindleistungskompensation gering bleiben und zudem sich die Resonanzfrequenz der Gruppe mit der Anzahl in Reihe geschalteter, kompensierter Transformatoreinheiten nicht ändert.

In der Gelierstation 10 liegt hier das Bauteil (die Anordnung aus zu fügenden Komponenten) auf den in dem vorliegenden Beispiel in die Induktorgruppen A bis F eingeteilten Induktionseinheiten auf. Wenigstens einer Induktionseinheit 100 einer Gruppe ist für den temperaturgeregelten oder temperaturkompensierten Betrieb ein Thermosensor 500 zugeordnet, der beispielsweise im Druckstück 110 oder benachbart zu dem Induktorkopf 107 angeordnet, oder darin integriert sein kann und dessen Messsignal über jeweils einen Messverstärker 600 der Steuerung des jeweiligen Leistungsteils 310 oder alternativ der übergeordneten, synchronisierten Programmsteuerung zugeführt wird. Für eine Temperatur geregelte Prozessführung misst der Thermosensor 500 die Bauteiltemperatur, dies kann jedoch zu erhöhtem Sensorverschleiß führen. Rein energiegesteuerter Betrieb ohne Temperatursensor ist ebenfalls möglich, liefert jedoch breitere Toleranzbänder.

Zu beachten ist, dass die Thermosensoren in der Auflage oder am Bauteil die Prozesstemperatur für die Klebstoffaushärtung messen. Hier kommen PTC Sensoren oder Thermoelemente zum Einsatz. Eine andere Anwendung sind die in Reihe geschalteten PTC Sensoren mit Sprungkennlinie im Trafo, die nur als Schutz vor ausgefallener Kühlung dienen.

Pro Sensor 500 ist ein dazu ortsnaher Messverstärker 600 vorgesehen, beispielsweise kann eine Messverstärkerbox am Gehäuse der Kondensatoreinheit 400 angeordnet sein, die ebenfalls für kurze Leitungswege möglichst nahe zu den Induktionseinheiten angeordnet ist, so dass die Kabellänge zwischen Kondensatoreinheit und Induktionseinheiten möglichst gering ist.

In dem in **Fig. 3b** dargestellten Beispiel umfasst der Generator 300 der Gesamtanlage einen Rückkühler 301, der in anderen Ausführungen nicht in den Generator integriert sein muss und bei dem es sich beispielsweise um einen energieeffizienten Wasser/Luft-Rückkühler mit Ventilator handeln kann, wobei energiesparend hier kein Werkswasser bzw. Kälteaggregat mit Wärmepumpe erforderlich ist. Die Luftkühlung wird ermöglicht durch die Stromauslegung der Endstufe, die im Gegensatz zu bisherigen Systemen eine um ca. 50°C höhere Betriebstemperatur toleriert. Die Kühlkörpertemperatur ist elektronisch überwacht und dient der Lüftersteuerung, Alarmerzeugung, Leistungsdrosselung und Notabschaltung.

Der Rückkühler 301 umfasst einen Vorratsbehälter für einen internen Kreislauf mit einem Fassungsvermögen von z. B. 21 Litern für die beispielhaft dargestellte Anordnung. Natürlich kann eine andere Literzahl ebenfalls gewählt werden, so lange der Vorrat hinreichend ist. Durch die vergleichsweise geringe Verlustleistung, und damit den geringen Bedarf an Wasser, ist die Kühlanlage unabhängig von Werkskühlwasser. Das eingesetzte Kühlmittel kann, im Gegensatz zum Stand der Technik, wo demineralisiertes Wasser, das schnell "umkippt" und das aufgrund der Kühlung stromführender Komponenten in Schwingkreis und Generator nötig ist, mit Inhibitoren versetzt sein, um Korrosion und Keimbildung im Kühlsystem zu unterbinden. Ferner kann dem Kühlmittel ein Frostschutz zugesetzt sein. So ist die Zugabe von Glykol denkbar, das ferner noch zur Schmierung der verwendeten Pumpe beiträgt und die Anlage frostsicher macht. Weiter erfolgt, wie im Zusammenhang mit **Fig. 4** bereits erwähnt, eine Kühlwasserüberwachung am Rückkühler 301 des Generators 300 für den Betrieb der getrennten Induktorgruppen A,B,C,D,E.F. Der Anschluss am Rücckühler 301 kann ebenfalls über übliche Standardstecker erfolgen.

Die Kühlanlage ist damit leicht als Einheit austauschbar.

Bei der erfindungsgemäßen Induktionsklebeanlage wird so im spannungsbeaufschlagten Primärkreis eine strikte Trennung von Kühlwasser und Strom erreicht.

Die Anzahl an Leistungselektroniken mit Steuerung 310 und die Anzahl an Kondensatormodulen in der Kondensatoreinheit 400 entspricht geeigneter Weise der Anzahl an Induktorgruppen A bis F an der Gelierstation 10. Sind mehr als eine Gelierstation an einem Generator 300 angeschlossen, so gilt selbstverständlich entsprechendes, d.h., dass die Anzahl der Leistungsteile mit Leistungselektronik und Steuerung bzw. die Anzahl an Kondensatormodulen in der Kondensatoreinheit 400 der Summe der Induktorgruppen 100 der Gelierstationen 10 entspricht. Generell wäre es aber auch möglich, dies mit Relais/Schaltschützen oder mit elektronischen Schaltelementen umzuschalten. Ebenso können einzelne Generatorkanäle zur Leistungssteigerung zu je einem leistungsstärkeren Kanal zusammengefasst werden oder mehrere Generatorkanäle als Reserve für Notbetrieb bei Störungen vorgesehen werden. Auch bei Nutzung aller Kanäle ist es bei Defekt einzelner Kanäle ggf. mit Qualitätseinbußen möglich, die betroffenen Induktionsstellen auf noch funktionsfähige Generatorausgänge mit ähnlichem Heizprogramm umzugruppieren. Durch das modulare Konzept ist es jederzeit möglich, die Konfiguration des Generators mit einfachen Mitteln anzupassen. Die Nachrüstung mehrerer Kanäle ist hierbei kaum aufwändiger als die Grundausstattung des Geräts mit der höheren Kanalzahl.

Die Anzahl der Thermosensoren mit je einem Messverstärker kann je nach Einsatz ebenfalls von der Anzahl an Leistungselektroniken abweichen.

Im einfachsten Fall kommt das System rein energiegesteuert ohne Thermosensor am Bauteil aus. Dabei ist zur Kompensation der Umgebungstemperatur erfindungsgemäß im einfachsten Fall ein einziger Sensor ausreichend, der die Temperatur in der Umgebung misst. Der Sensor kann beispielsweise in der Bauteilaufnahme/dem Auflagekopf ca. 2 bis 3 mm unter der Oberfläche angeordnet sein, so dass ein direkter Bauteilkontakt vermieden wird. Anstelle der Bauteiltemperatur wird dann die Auflagetemperatur gemessen.

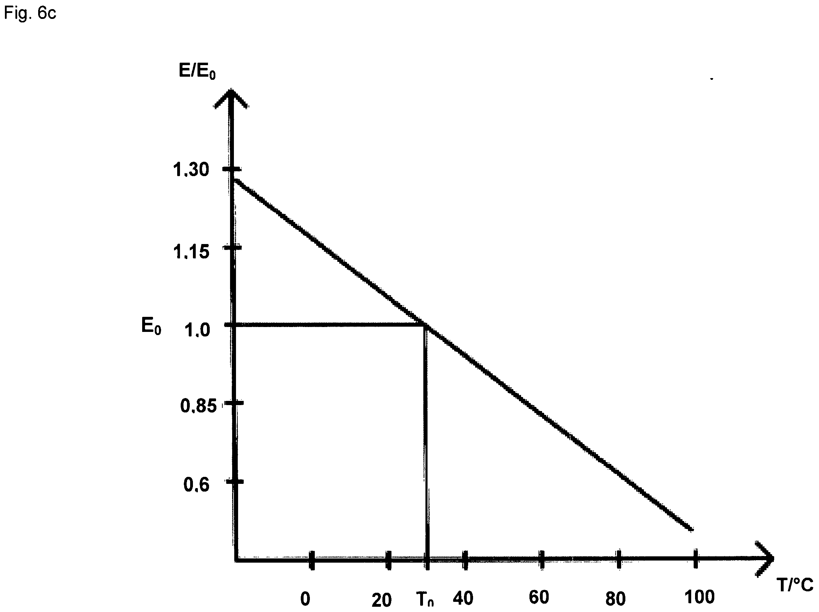

Zum energiegesteuerten Betrieb der Anlage wird eine Kompensationslinie erstellt, wie beispielhaft in **Fig. 6c** gezeigt, in der ein Energiekorrekturfaktor E/E₀ über der Umgebungstemperatur aufgetragen ist. Die Erstellung der Kompensationslinie umfasst das Bestimmen eines Energiesollwerts E₀ bei einer Standardumgebungstemperatur T₀, im vorliegenden Beispiel 30 °C. Wird die Anlage unter stabilen Umgebungsbedingungen gefahren, werden die Energieparameter bei Erhalten eines guten Prozessergebnisses erfasst. Weicht die mit dem Umgebungssensor gemessene Temperatur von der Standardumgebungstemperatur nach oben oder unten ab, so ist die aufzubringende Energie, um ein gleich gutes Prozessergebnis zu erhalten, entsprechend zu verringern oder zu vergrößern. Dies gibt der Korrekturfaktor E/E₀ an. Mit der temperaturkompensierten Energiesteuerung kann auf die Temperaturregelung, die die Bauteiltemperatur messende und damit häufig verschleißende Sensoren erfordert, verzichtet werden.

Außer dem genannten Sensor in der Bauteilaufnahme zur Erfassung einer Umgebungstemperatur, können noch weitere Sensoren zur Umgebungstemperaturerfassung eingesetzt werden, beispielsweise an einem Lagerort der zu fügenden Bauteile, in der Produktionshalle etc. Auch für diese Sensoren können Kompensationslinien für einen Energiekorrekturfaktor erstellt werden. Zum Energie gesteuerten Betrieb ist es dann auch denkbar, zur Temperaturkompensation zwei oder mehr erfasste Umgebungstemperaturen heranzuziehen, beispielsweise den erforderlichen Energiebedarf entsprechend der an der Bauteilauflage gemessenen Temperatur, die hierbei den größten Einfluss hat, zu korrigieren und dann noch die Lagertemperatur zu berücksichtigen Die Korrekturen können hierbei je nach physikalischer Wirkung des Störeffekts additiv, multiplikativ oder verkettet erfolgen. Auch Anpassungen an Bauteilvarianzen oder verschiedene Bauteiltypen können auf diese Welse erfolgen. Beispielsweise kann ein Roboter mittels geeignetem Sensor die Materialstärke messen und dieses Signal als Eingangsgröße zur Kompensation an die Generatorsteuerung weiterleiten.

Für jede Induktorgruppe, d. h. für jede Leistungselektronik existiert eine Kompensationslinie, für die der zu Grunde liegende Sensoreingang frei ausgewählt werden kann. Somit können alle Kanäle auf einen Sensor oder jeder Kanal auf seinen individuellen Sensor oder auch die Kanäle überkreuzt auf Sensoren kompensiert werden.

Eine Kompensationslinie kann auch von der Geraden, wie sie in **Fig. 6c** gezeigt ist, abweichen. So ist es selbstverständlich möglich, anstelle einer Geraden auch ein Polynom höherer Ordnung, eine e-Funktion, eine Tabelle ggf. mit Interpolation oder eine beliebige Funktion als Kompensationsmethode zu hinterlegen. Im Vollausbau ist es auch möglich, beliebig viele Sensoren anzuschließen und jeden Spot nicht nur für sich selbst, sondern zusätzlich auch mit der Temperatur benachbarter Spots zu kompensieren. Dies ermöglicht z. B. die durch Wärmefluss im Bauteil auftretende, gegenseitige Beeinflussung bei geringem Abstand der Spots auszugleichen.

Für jede Leistungselektronik sind hierbei im Extremfall jeweils separate Kompensationsfunktionen für jeden Sensor aktiviert. In dem vorliegenden Beispiel mit sechs Generatorausgängen und 18 Induktionseinheiten wären 6*18 = 108 Kompensationen parametrierbar. Die komplexe Einstellung ist nur möglich, wenn jeder Einfluss isoliert betrachtet und separat als Eingrößensystem kompensiert wird. Dies ist in der Praxis gut möglich, weil die einzelnen Induktorgruppen separat geheizt werden können, so dass die gegenseitige Beeinflussung isoliert als Störgröße erscheint.

Die "Rezeptverwaltung", also die Verwaltung der Heizprogramme, die mit einer solchen erfindungsgemäßen Induktionsklebeanlage gefahren werden können, kann, muss aber nicht zentral angelegt sein. Dies ermöglicht es, ähnliche Kanäle mit demselben Rezept zu fahren oder Rezepte einer ähnlichen Gruppe für eine neu anzulernende Induktorgruppe als Ausgangsbasis einzusetzen. Ein Heizprogramm besteht typischerweise aus den Phasen Aufheizen, Halten und Abkühlen, wobei zur Erzielung eines optimalen Übergangsverhaltens im Bedarfsfall auch Zwischenphasen eingefügt werden. In jeder Phase ist es möglich, über Leistung und Zeit eine Energievorgabe zu definieren oder mittels Temperatursensor am Bauteil eine dem Stand der Technik entsprechende Temperaturregelung mittels PID-Regler zu realisieren. Im Fall der Energieregelung kommt bevorzugt das zuvor beschriebene, erfindungsgemäße Kompensationsverfahren zum Einsatz. Sämtliche Heizprogramme sind vorzugsweise in einem Pool abgelegt, so dass für Kanäle mit ähnlichem Wärmebedarf vorhandene Heizprogramme übernommen und angepasst werden können. Konkret werden hierfür die Listungsvorgabe und die Grenzen der Prozessüberwachung angepasst. Die Ablage der Heizprogramme ist über das Firmennetzwerk auch an andere Generatoren möglich, so dass beispielsweise drei Kotflügelanlagen dieselbe Programmbasis benutzen. Dies gestattet die einfache Sicherung der Heizprogramme wie auch Ablage der Gerätekonfiguration sowie der Heizparameterprotokolle mit E-nergiewerten und ggf. Temperaturen für jedes erwärmte Bauteil.

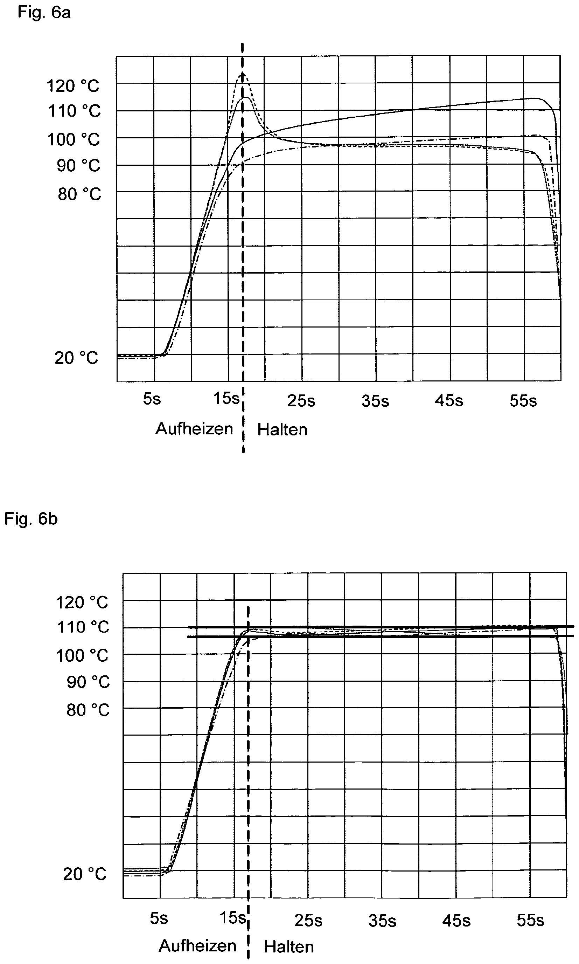

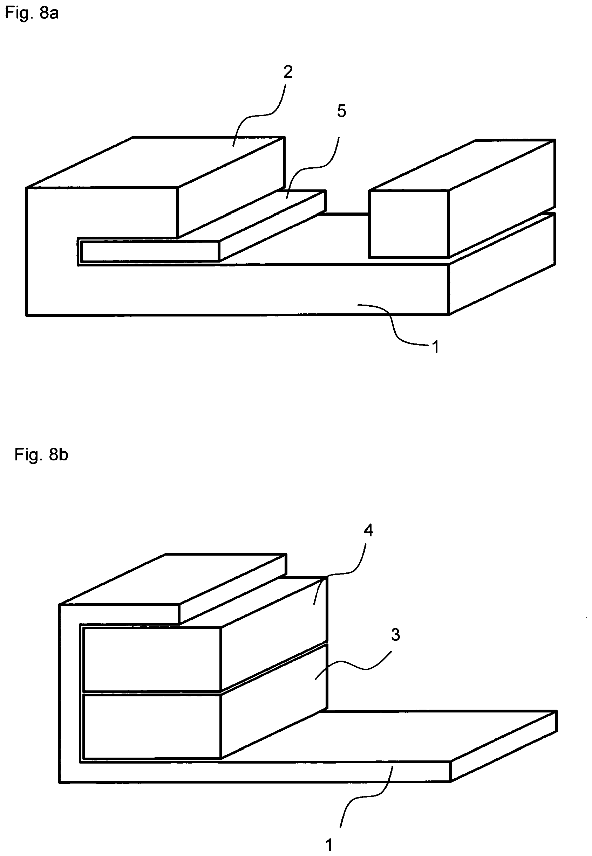

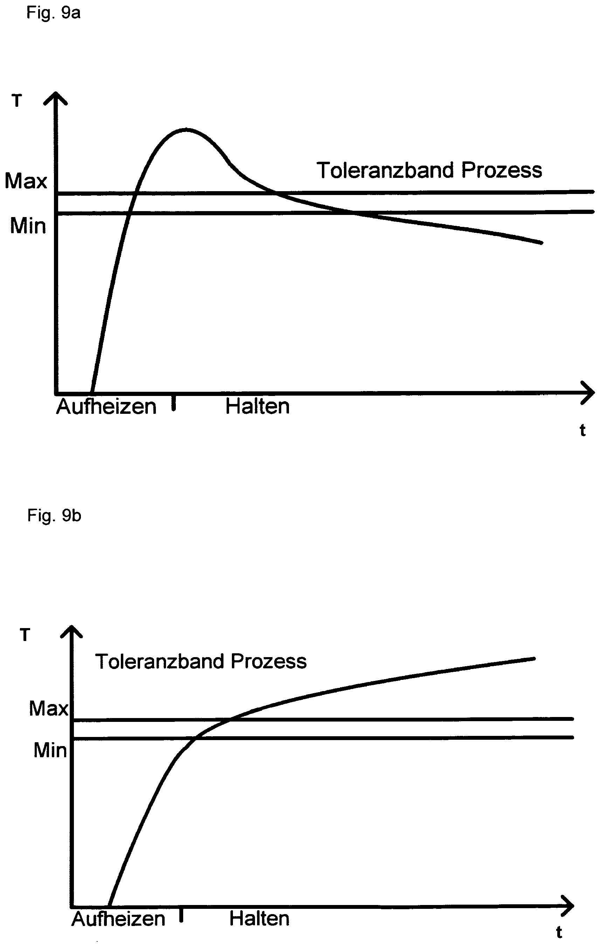

In **Fig. 6a** ist ein Temperaturdiagramm dargestellt, in der der Temperaturverlauf während der Aufheiz- und der Haltephase von fünf Induktionseinheiten an einer Kotflügelanlage aus dem Stand der Technik aufgezeichnet ist. Trotz der geringen Anzahl an Induktoren kommt es zu größeren Temperaturabweichungen, insbesondere in der Aufheizphase, in der die maximal erreichten Temperaturen an den fünf Aufheizpunkten oder Spots zwischen 90 und 123 °C variieren. Auch zeigen die verschiedenen Spots unterschiedliches Aufheizverhalten, wie es aus unterschiedlichen Wärmekapazitäten und Wärmeleitung an den verschiedenen Spots entsteht. (Mehr dazu in Verbindung mit **Fig. 8a, 8b** **und** **9a, 9b)** Mit einer einzigen Energiequelle, wie im Stand der Technik eingesetzt, kann hier kein besserer Kompromiss aus Aufheizen und Halten gefunden werden.

Beim Aufheizen mit hoher Heizleistung ist der entstehende Temperaturgradient von der Wärmekapazität an der Klebestelle abhängig. Beim Übergang in die Haltephase wird die Heizleistung reduziert, um die für den Prozess vorgegebenen Temperaturtoleranzwerte (Toleranzband) nicht zu überschreiten. Die Einstellung an den Wärmebedarf erfolgt bei klassischen Anlagen lediglich über den Induktorabstand. Dies kann jedoch nur dann einigermaßen zufrieden stellend funktionieren, wenn das Verhältnis aus benötigter Aufheizleistung und Halteleistung stark ähnlich ist, was jedoch in der Praxis nicht oder nur selten der Fall ist. Die Klebestellen an einem Bauteil unterscheiden sich je nach Fügeparametern wie Bauteildicke, Klebstoffmenge, Klebepartner etc. in Wärmespeichervermögen und Wärmeableitvermögen, die in unterschiedlichen Temperaturgradienten beim Aufheizen mit einer Leistung und in unterschiedlichem Kurvenverlauf nach der Aufheizphase resultieren, wie in den Diagrammen in **Fig. 9a und 9b** zu sehen ist. Das Temperaturdiagramm in **Fig. 9a** gehört zu einer Klebestelle mit geringem Wärmespeicher- und hohem Ableitvermögen (in **Fig. 8a** als ein Bauteil mit hoher Wandstärke 1 mit einem mit Klebstoff Im Bördelrand 2 befestigten, dünnen Innenblech 5 dargestellt) und zeigt in der Aufheizphase aufgrund des geringen Wärmespeichervermögens einen hohen Gradienten, d. h. die Stelle erwärmt sich sehr schnell, so dass es zu einem Überschwingen kommt, in dem die vorgegebene Maximaltemperatur überschritten wird. In der Haltephase hingegen kann die Temperatur wegen des hohen Ableitvermögens nicht im geforderten Toleranzband gehalten werden. Im Gegensatz dazu zeigt die Klebestelle aus **Fig. 8b**, bei der als Bauteil ein dünnes Türblech 1 mit eingeklebtem Verstärkungsblech für Befestigung des Seitenaufprallschutzes 3 und Halterung für Fensterheber 4 dargestellt ist, ein sehr langsames Aufheizen aufgrund des hohen Wärmespeichervermögens, so dass nach der Aufheizphase nur eine Temperatur unterhalb des Prozesstoleranzbands erreicht wird. Hingegen steigt in der Haltephase durch das geringe Ableitvermögen die Temperatur kontinuierlich an, sogar über die durch das Toleranzband vorgegebene Maximaltemperatur an, wie in **Fig. 9b** zu sehen ist.

Durch die erfindungsgemäße getrennte Energieversorgung der vom Leistungsbedarf her stark differierenden Induktorgruppen A bis F können diese nicht nur mit unterschiedlicher Leistung sondern auch mit unterschiedlichen Heizprogrammen beispielsweise mit unterschiedlicher Dauer und Anzahl von Heizphasen angesteuert werden, so dass an allen Klebestellen ein gewünschter Temperaturgradient während der Aufheizphase und eine konstante Haltephase innerhalb des Toleranzbands erreicht werden kann. Es kann weiter ausgewählt werden, ob eine Temperaturregelung oder E-nergiekontrolle je Phase erfolgt. Im Energiemodus kann, wie oben ausgeführt, ferner die Vorrichtungstemperatur sowie weitere Einflussfaktoren kompensiert werden. Dieses Verfahren stellt somit einen optimalen Temperaturverlauf sicher und reduziert das Toleranzband im vorliegenden Beispiel von 90...123°C auf 106...112°C. Hierdurch verbessert sich die Bauteilqualität, da der Klebstoff optimal geliert ist und zudem ist der Bauteilverzug minimiert, weil an keiner Stelle unnötig hohe Temperaturen ins Bauteil eingebracht werden.

In **Fig. 6b** sind fünf an einer zu **Fig. 6a** entsprechenden Kotflügelanlage gemessene Erwärmkurven dargestellt, wobei die eingesetzten Induktoren erfindungsgemäß einzeln an fünf Generatorausgängen angeschlossen sind.

Wie in **Fig. 6b** zu sehen Ist, liegen die Temperaturkurven der Spots sowohl beim Aufhelzen als auch beim Halten deutlich dichter beisammen, und variieren lediglich zwischen 106 und 112 °C. Ferner ist erkennbar, dass der Kurvenverlauf günstiger ist, da ein "Überschwingen" (zu schnelles und zu starkes Aufheizen) sowie das andere Extrem des langsamen Aufheizens, dem dann jedoch ein stetiger Temperaturanstieg in der Haltephase folgt, vermieden werden. An allen Klebepunkten wird die gewünschte Klebetemperatur in entsprechender Zeit erreicht und danach entsprechend dem vorgesehenen Programm konstant gehalten, was nur durch die getrennte Steuerung der Induktorgruppen möglich ist.

Wenn aus Gründen der Wirtschaftlichkeit bei großen Bauteilen mit hoher Anzahl an Erwärmstellen nicht jeder Spot mit einem individuell steuerbaren Generatorausgang versorgt werden kann, werden die Induktoren wie oben erklärt in Gruppen aus vorzugsweise 2...6 Induktoren gruppiert. Von Hand werden nun lediglich diese 2 bis 6 Spots innerhalb jeder Gruppe durch Abstandseinstellung aneinander angeglichen, beispielsweise durch zwischen Induktor und Bauteil eingebaute Shims, durch Änderung der Induktorgeometrie oder Anpassung der feldsteuernden Komponenten wie Feldkonzentrator und Kurzschlussringe, so dass innerhalb jeder Gruppe die Erwärmung ähnlich ist. Dies erfordert aufgrund der geringen Anzahl nur wenig Zeit. Wenn jeder Spot an einen Generatorausgang angeschlossen wird, wie dies etwa für eine Kotflügelanlage mit den fünf Spots realisiert werden könnte, entfällt der Abgleich komplett.

Wenn alle Gruppen durch den Erwärmungsabgleich innerhalb jeder Gruppe konfiguriert sind, erfolgt die Hauptarbeit am Bedienpanel des Generators. Es folgt die Programmierung der Heizprogramme (hier auch "Rezepte" genannt) für jede Gruppe.

Das Programmierverfahren hierzu kann beispielhaft wie folgt ausgeführt werden. Generell können Zeit-, Temperatur- und Energieangaben in Abhängigkeit der Klebeaufgabe variieren.

Zunächst wird das kalte Bauteil mit Temperatursensoren in die Geliervorrichtung eingelegt. Mit ca. 70 % der Maximalleistung wird die Erwärmung manuell gestartet und dabei überprüft, ob die vom Kunden vorgegebene Temperatur von z. B. 100 °C in der ebenfalls vom Kunden vorgegebenen Zeit von z. B. 10 s erreicht werden kann. Zumeist wird dies kaum beim ersten Versuch der Fall sein. Nach einer Wartefrist von beispielsweise ca. 15 Minuten, bis das Bauteil ausreichend abgekühlt ist, wird der Energiesollwert nach Erfahrung etwas angepasst, um sich den Kundenanforderungen anzunähern. Erneut wird der Erwärmvorgang von Hand gestartet und die Erwärmungsparameter überprüft. Die Schritte Abkühlen, Energiesollwert Einstellen und erneut manuell Erwärmen werden so lange durchgeführt, bis die durch den Kunden vorgegebene Erwärmung korrekt erhalten wird. Dieses Programm, das die Aufheizphase beinhaltet, wird beibehalten. Ausgehend von dem korrekten Temperaturbild nach der Aufwärmung wird nun die Haltephase programmiert. Hierzu wird zunächst die Leistung zum Halten der Energie auf z. B. 35 % festgelegt und damit ein Programm erstellt. Sodann wird ein Heizvorgang mit der Aufheizphase und der zunächst festgelegten 35 %-Haltephase gestartet. Wenn dann die Temperatur in der Haltephase ansteigt, wird die Halteleistung verringert, wenn sie sinkt, erhöht. Bei näherungsweise konstanter Temperatur ist die Haltephase korrekt programmiert. Nach jedem Test ist eine Wartephase von 15 min zur Bauteilabkühlung einzuhalten. Falls die Temperaturverläufe durch abfließende Wärme stark nichtlinear
sind, werden weitere Phasen eingefügt, die wie oben beschrieben angelernt werden. Die in **Fig. 6a und 6b** gezeigten Temperaturkurven zugrunde liegenden Prozesse sind dreiphasig: Aufheizen, Übergang zu Halten, Halten.

Im Ergebnis resultiert ein Heizprogramm ("Rezept") beispielsweise wie folgt:
Phase 1: Strom 72,5 %, 10s, Energie 15 kWs +/-10 % (für Prozessüberwachung)
Phase 2: Strom 42 %, 5s, Energie 2,6 kWs +/-10 % (für Prozessüberwachung)
Phase 3: Strom 35 %, 25 s, Energie 18 kWs +/-10 % (für Prozessüberwachung)

Das aufgeführte Beispiel ist lediglich zu Veranschaulichungszwecken und in keiner Weise beschränkend zu verstehen. Für andere Bauteile, andere Bauteilwerkstoffe, andere Klebstoffe, und etwa beim Vorhandensein einer Bördelkante können sich deutlich andere Parameter ergeben.

Zusätzlich zur Stromregelung mit Energieüberwachung oder der Leistungsregelung mit Stromüberwachung ermöglicht das System, Überwachungsgrenzen für Pulsweite und Arbeitsfrequenz vorzusehen. Somit sind Störeinflüsse wie falsche Trafoübersetzung erkennbar, welche durch die Basisüberwachung nicht oder nur unzuverlässig erkennbar wären,

Der beschriebene Vorgang ist für alle Kanäle, d. h. alle Induktorgruppen zu wiederholen und erfordert daher einen relativ hohen Zeitbedarf und ist für den Programmierer wegen der Wartezeiten lästig.

Mit der erfindungsgemäßen Induktionsklebeanlage wird die mechanische Arbeit zum Einstellen der Heizstellen oder -spots stark reduziert, allerdings wird dafür der Programmieraufwand größer bzw. komplexer.

Zur Reduktion des Programmieraufwands durch einen Programmierer, wird ein Auto-Tune-System vorgeschlagen, das diese Arbeit erfindungsgemäß vollautomatisch ausführt. Es besteht aus folgenden Komponenten:
- Je ein Temperatursensor pro Induktorgruppe, angebracht an einer repräsentativen Stelle
- Messverstärker zur Temperaturmessung mit Computeranbindung, vorgeschlagen wird ein Notebook oder ein vergleichbares kleines Datenverarbeitungsgerät,
- Programmieradapter zum Verbinden des Generators mit dem Rechner (Notebook), dabei kann es sich im einfachsten Fall um ein Adapterkabel für den Netzwerkanschluss handeln,
- den Rechner (Notebook) mit Programm und Bedienoberfläche oder eine Firmware im Messverstärker.

Dieses System führt automatisch viele Heizzyklen überwacht aus und stellt die Prozessparameter automatisch ein. Es ist auch möglich, diese Komponenten im Generator zu integrieren und das Notebook durch die speicherprogrammierbare Steuerung (SPS) zu ersetzen. Ergebnis des Optimierungsprozesses ist eine optimale Temperaturkurve an jeder Messstelle. Falls nach erfolgter Optimierung noch Abweichungen innerhalb der einzelnen Gruppen auftreten, können von Hand per Shims die Induktorabstände so fein angepasst werden, dass sich innerhalb einer Gruppe ein gutes Temperaturbild ergibt. Gegebenenfalls ist danach nochmals das Auto-Tune-Verfahren zu starten, wonach in aller Regel eine gute Temperaturverteilung zu erwarten ist.

Falls jeder Generatorabgleich nur einen Spot treibt, würde sich das System komplett ohne jeglichen Benutzereingriff anlernen.

Zum Aufheizen der Induktoren wird bislang am Serienschwingkreis ein frequenzmodulierendes Regelungsverfahren eingesetzt. Ausgehend von der Resonanzkurve des vereinfacht gesprochen aus Kondensator, Induktorspule und ohmschen Widerstand (zu fügendes Bauteil) bestehenden Schwingkreises wird die Anlage dabei mit einer vorbestimmten Maximalfrequenz gestartet (konstante Spannung, Rechtecksignal mit Pulsweite 1:1), die schon beim Anschalten einen Strom von ca. 5 % der Maximalstromstärke bei Resonanzfrequenz in der Induktorspule induziert, der bereits zur Erwärmung im Bauteil führt. Durch sukzessives Verringern/Modulieren der Frequenz (in Richtung Resonanzfrequenz) steigt die Stromstärke an, bis sie bei einer bestimmten Frequenz den Arbeitspunkt bzw. Sollwert erreicht, der beispielsweise bei 50 % der Maximalstromstärke liegen kann. Die Parameter wie beispielsweise Resonanzfrequenz, Güte, Impedanz und Startfrequenz sind so abzustimmen, dass sich ein guter Kompromiss aus geringer Minimalleistung, geringen Schaltverlusten, schnellem Anschwingverhalten und geeigneter Arbeitsfrequenz im Arbeitspunkt ergibt. Dieser Kompromiss ist in einigen Anwendungen nur unzureichend möglich, da die Startfrequenz nicht beliebig hoch liegen kann. Wenn der Schwingkreis z. B. auf 12 kHz abgestimmt ist, nimmt dieser auch bei Anregung mit der maximalen Generatorfrequenz von z. B. 20 kHz noch einige Leistung auf (abhängig von der Güte des Schwingkreises). Hierbei steigt auch bei Sollwert 0% im Bauteil die Temperatur noch an, weil der Minimalwert der tatsächlich abgegebenen Leistung höher als der Leistungsbedarf der Anwendung ist. Bei maximaler Leistung muss eine gewisse Phasenreserve eingehalten werden, da sonst im kapazitiven Bereich der Stromregelkreis durch den Vorzeichenwechsel der Impedanzkurve instabil wird.

Das Regelverfahren FM passt sich flexibel an eine Vielzahl an Lasten an, erlaubt jedoch nicht, die Leistung bis zu echten 0% zu reduzieren. Zudem ist der Betrieb nur oberhalb der Resonanzfrequenz bis knapp in den Resonanzpunkt hinein möglich.

Es ist grundsätzlich auch der Betrieb des Serienkreises am Resonanzpunkt möglich, wonach die Leistung über das Regelverfahren PWM eingestellt wird. Alternativ kann ein Parallelschwingkreis eingesetzt werden, der jedoch bei flexibel einsetzbarer Auslegung recht kostenintensiv ist und in der Leistungselektronik einen hohen Aufwand erfordert. Ein gesteuerter Gleichrichter müsste mit Glättungsdrossel je Kanal vorhanden sein und wäre unwirtschaftlich, daher kommt für diese Anwendung auch am Parallelkreis nur das Regelverfahren PWM in Betracht. Der Aufwand wäre hierbei durch die benötigte Ausgangsdrossel gegenüber dem Serienschwingkreis erhöht. Das Regelverfahren PWM im Resonanzpunkt ist steuerungstechnisch anspruchsvoller, weil in jedem praktisch vorkommenden Lastzustand der Resonanzpunkt gefunden und nachgeführt werden muss. Die Last muss korrekt abgestimmt sein und das Regelverfahren ist recht störanfällig. Bei hohen Strömen und kleiner Pulsweite entstehen in der Endstufe sehr hohe Umschaltverluste, welche höher sind als beim Regelverfahren FM. Ein weiterer Nachteil der Resonanznachführung liegt darin, dass, wenn die Anzahl der Spots nachträglich geändert wird, die ursprüngliche Schwingkreisauslegung nicht mehr passt.

Somit ist die Resonanznachführung steuerungstechnisch anspruchsvoller, in Bezug auf die Lastanpassung unflexibler und zudem im direkten PWM-Modus mit höheren Verlusten behaftet.

Alternativ wäre das Verfahren der ausgelassenen Impulspakete möglich. Hierbei liefert der Generator z. B. 20 Pulse mit voller Energie und lässt nachfolgend 10 Pulse aus, um wieder mit 20 Pulsen zu starten. Dies ist jedoch nicht unproblematisch, weil sich in den Pausen der Resonanzpunkt verschieben kann und beim Verfahren FM nur wenig Anschwingzeit zur Verfügung steht. Zudem ergibt sich eine stark hörbare Geräuschabstrahlung durch das Takten.

Erfindungsgemäß werden nun beide PWM-Verfahren (**Fig. 7a**) und FM-Verfahren (**Fig. 7b**) miteinander kombiniert, indem zunächst bei Maximalfrequenz die Pulsweite bis zum vollen Tastverhältnis von 1:1 aufregelt, bevor anschließend die Frequenz so weit wie erforderlich in Resonanz verfahren wird. Durch die beim Anfahren quasi auf Null reduzierte Pulsweite liegt die durch induzierte Stromstärke erzeugte Heizleistung bei Null und wird schrittweise zunächst durch Vergrößerung der Pulsweite und dann durch Schieben der Frequenz hochgefahren. Beim Frequenzschieben wird der Phasenwinkel der Last berücksichtigt, so dass bei einem Schwingkreis der Resonanzpunkt nicht überschritten wird. Die bei kapazitiver Last hohen Einschaltverluste werden in einem Modell abgebildet und begrenzt. Dieses System passt sich ohne Benutzereingriff oder weitere Anpassungsarbeiten automatisch an jede Last an; die automatische Lastanpassung umfasst die ohmsche Last, die induktive Last, die kapazitive Last sowie auch eine Kombination dieser Elemente in schwingungsfähiger Anordnung, vorzugsweise als Serienschwingkreis oder LC-Schwingkreis.

Ein Spezialfall besteht für den Fall, in dem die Arbeitsfrequenz in etwa der Resonanzfrequenz entspricht, d. h. der Arbeitspunkt nahe der Resonanz liegt. Hierbei kann dann lediglich durch Pulsweitenmodulation geregelt werden. Vorteilhaft kommt es hierbei durch die Nähe zur Resonanz nur zu geringen Schaltverlusten, allerdings ist dafür die genaue Einstellung von Induktivität und Kapazität erforderlich, die die Resonanzfrequenz bestimmen. Durch eine Konfigurationsänderung der Steuerung kann diese auch dem Stand der Technik entsprechend den Resonanzpunkt nachführen und somit in Resonanz das Regelverfahren PWM einsetzen.

Als ohmsche Last kommen hierbei Widerstandsheizungen wie Infrarotlampen oder Heizwendel, auch in Gebläsen, zum Einsatz. Diese Lasten sind mit klassischen Induktionsgeneratoren nicht regelbar, da die Resonanzpunktsuche keinen eindeutigen Resonanzpunkt findet und das Frequenzscheibeverfahren stets volle Ausgangsspannung liefert. Es wäre erforderlich, einen unnötigen, verlustbehafteten und teuren Schwingkreis vorzuschalten. Ohmsche Lasten entsprechen zwar nicht der Induktionserwärmung, jedoch sind in Geliervorrichtungen auch verschiedene Erwärmprinzipien gleichzeitig umsetzbar. So könnte ein Generator beispielsweise einige Induktorgruppen steuern und ebenso ein einzelnes Heißluftgebläse, eine Infrarotheizung oder eine beliebig gemischte Gruppe aus diesen Geräten. Dies ermöglicht mit nur einem Gerät und einer einheitlichen Heizprogrammverwaltung die gleichzeitige oder versetzte Realisierung verschiedener Heizprinzipien. In einer Geliervorrichtung können so verschiedenartigste Prozesse umgesetzt werden, ohne dass die Betriebsmittelsteuerung hierauf Rücksicht nehmen muss. Die Busschnittstelle ist abstrahiert von der Physik der Heizung und definiert ausschließlich den Programmablauf sowie die Prozesskontrolle wie beispielsweise Temperaturrückmeldung oder Überwachung der Temperatur jeder Heizgruppe.

Induktive Lasten kommen zum Einsatz, wenn auf die Kondensatoreinheit verzichtet wird. In diesem Fall arbeitet das System automatisch mit Dreieckstrom. Der Wirkungsgrad ist hierbei schlechter, da keine Blindleistungskompensation vorliegt; bei einfachen Anwendungen mit geringer Leistung oder schlechter Güte wie beispielsweise gut angekoppelten Stahlbauteilen ist dies dennoch wirtschaftlich. Für Verbundwerkstoff ist diese Anwendung aufgrund des erheblichen Blindleitungsbedarfs nicht zu empfehlen.

Kapazitive Lasten erzeugen beim Kommutieren hohe Einschaltverluste in der Endstufe und sind praktisch selten im Einsatz, jedoch ist das Gerät auch hierfür erfolgreich erprobt.

Ferner ist das Gerät als allgemeine, gesteuerte Spannungs- und Stromquelle mit mehreren Ausgängen einsetzbar. Dies ermöglicht beispielsweise mit einer Glättungsdrossel auch den Einsatz als Batterieladegerät, wobei anstelle der Induktorgruppen Gruppen von Batteriezellen separat überwacht und individuell geladen werden können. Das Gerät erfüllt hierbei neben der Bereitstellung der Energie auch die Funktion eines Balancers. Die übergeordnete Steuerung kennt den Zustand jeder Gruppe und entscheidet über den Gesamtzustand der Batterie oder rechnet die insgesamt eingebrachte Energiemenge ab. Gleichstrommotoren und ähnliche Verbraucher sind ebenfalls direkt ansteuerbar.

Die erfindungsgemäße Induktionstechnik bestehend aus Generator mit Kühlsystem, Schwingkreis und den Transformator-Induktoreinheiten unter gemeinsamer Prozesssteuerung können im Übrigen so ausgestaltet sein, dass sie nicht dem Erweichen Schweißen, oder Aushärten von Kleber dienen, sondern dass ihre Erwärmungsfunktion anderen Zwecken dient; etwa zum Heizen von Bauteilen mit mehreren Zonen z. B. Walzen zum Papierprägen, Drucken, Auftragen von Beschichtungen oder von Blechen oder Glühen von Schweißnähten. Bei der Herstellung klassischer Verbrennungsmotoren sind in einer Anlage oftmals ein Kurbelwellen-Kettenrad sowie zwei Nockenwellen-Kettenräder aufzuschrumpfen. Die erfindungsgemäße Technik gestattet hierbei die individuelle Erwärmung jedes einzelnen Rads, auch mit mehreren Zonen. Beispielsweise ist mit einem 6-kanaligen Gerät die Erwärmung von drei Kettenrädern möglich, wobei die Bohrungen der Fügestelle auf die Fügetemperatur erwärmt werden, während die Außenbereiche der Zahnräder auf eine andere, vorzugsweise geringere Temperatur erwärmt werden, um Verspannungen und Rissbildung zu vermeiden. Innen und Außenbereich wären hierbei separat regelbar. Allgemein Ist das System für komplexe Fügeanwendungen wie z. B. Getriebedeckel mit mehreren Lagerstellen u. Ä. anwendbar.

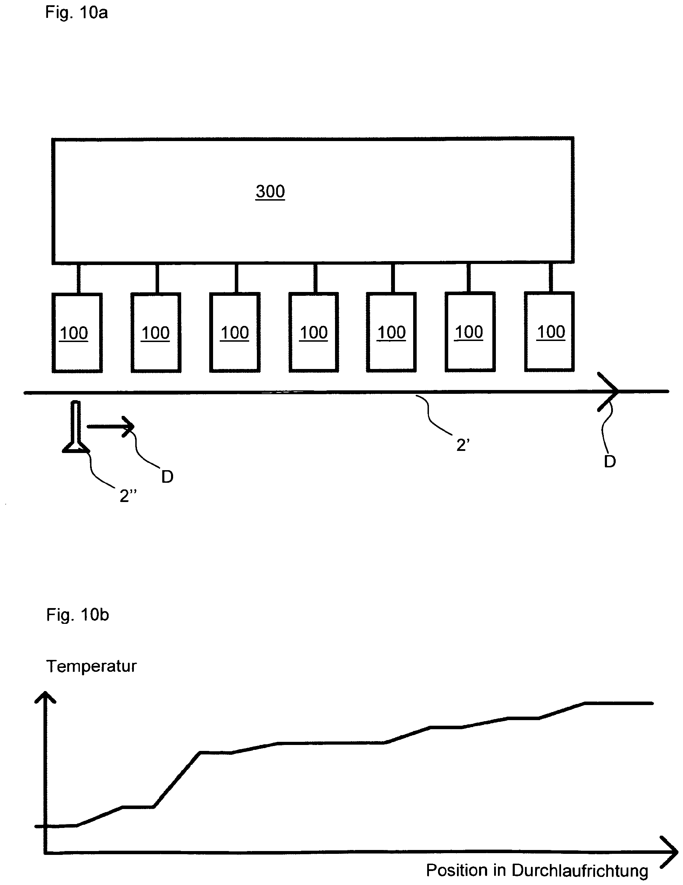

Außer der Anwendung in einer Induktionsklebeanlage mit Gelierstation können die erfindungsgemäßen Induktionseinheiten 100, wie in Fig. 10a skizziert, entlang einer Förderstrecke, die von einem Endloswerkstück 2' wie einem Draht oder einer Kohlenstofffaser oder mehreren Einzelwerkstücken 2" wie z. B. Motorventilen in Richtung D durchlaufen wird, eingesetzt werden. Die Induktoreinheiten weisen einen Induktor, einen effizienten Koaxialtransformator mit amorphem Kernmaterial und vorzugsweise auch einen Feldkonzentrator auf. Die Induktionseinheiten 100 werden von einem Generator 300 mit Strom versorgt - vorteilhafter Weise kann auch hier bis zum Transformator der Induktionseinheiten Niederstrom eingesetzt werden - wobei durch Auslegung der Induklionseinheiten, die einzeln oder in leistungsgleichen oder leistungsproportionalen Gruppen jeweils von einem Leistungsteil versorgt werden, ein gewünschtes Temperaturprofil entlang der Förderstrecke (vgl. Fig. 10b) eingestellt werden kann. So kann ein einstellbares Temperaturprofil nun mit einer einzigen Induktionsanlage erreicht werden, wozu bislang mehrere verkettete Einzelanlagen erforderlich waren.

## Patentansprüche

1. Induktionseinheit (100) für das induktive Verkleben von Bauteilen im Multispotbonding-Verfahren, wobei die Induktionseinheit (100) zumindest einen an einer Haltevorrichtung angeordneten Induktor (102) aufweist und als transportable Bauteileinheit ausgeführt ist, wobei die Induktionseinheit (100) einen Transformator (103) umfasst, der mit dem zumindest einen Induktor (102) zu der transportablen Bauteileinheit verbunden ist, wobei ein induktorseitiger Ausgang des Transformators (103) über eine Hochstromleitung (105) direkt mit dem zumindest einen Induktor (102) verbunden ist, **dadurch gekennzeichnet, dass** ein Eingang des Transformators (103) zum Anschluss der Induktionseinheit (100) mit einer Niederstromleitung verbunden ist.

2. Induktionseinheit (100) nach Anspruch 1,
**dadurch gekennzeichnet, dass**
der Transformator (103) ein Ringbandkernmaterial aus einer amorphen Metalllegierung aufweist und/oder
die Haltevorrichtung
- durch einen Induktorkopf (107), der einen Auflagebereich aufweist, in dessen Nähe ein Induktor (102) angeordnet ist, wobei der Induktor (102) bevorzugt in den Auflagebereich zumindest mit einem Abschnitt eingebettet ist, wobei der Induktorkopf (107) an dem Abschnitt, der den Induktor (102) aufnimmt, bevorzugt als Bauteilauflage, besonders bevorzugt u- oder o-förmig geformt ist,
und durch
- einen Haltefuß (107'), der ein automatisch veränderbarer Pneumatikzylinder sein kann, an dem der Induktorkopf (107) bevorzugt in seiner Position veränderbar befestigt ist und der bevorzugt Vorrichtungen zur Festlegung des Haltefußes (107') an einer Befestigungsvorrichtung einer Gelierstation (10,10') aufweist, gebildet wird.

3. Induktionseinheit (100) nach Anspruch 1 oder 2,
**dadurch gekennzeichnet, dass**
der Induktorkopf (107) an dem Auflagebereich des Induktors (102) einen magnetisch leitenden Feldkonzentrator (102') aufweist, der bevorzugt den Induktor teilweise umgreift oder unter dem Induktor (102) angeordnet ist, wobei der Feldkonzentrator (102') aus Dynamoblech, einer weichmagnetischen Nickel-EisenLegierung hoher magnetischer Permeabilität, insbesondere Mu-Metall^{®}, einem Weicheisenpartikel aufweisenden thermoplastischen Kunststoff, insbesondere Fluxtrol^{®} oder Ferrit besteht.

4. Induktionseinheit (100) nach zumindest einem der Ansprüche 1 bis 3,
**dadurch gekennzeichnet, dass**
die Induktionseinheit (100) zwei oder mehr leistungproportionale Induktoren (102) umfasst, die mit dem Transformator (103) verbunden sind, wobei die Induktoren (102) an einer gemeinsamen Haltevorrichtung oder an zwei oder mehr Haltevorrichtungen angeordnet sind.

5. Induktionseinheit (100) nach zumindest einem der Ansprüche 1 bis 4,
**dadurch gekennzeichnet, dass**
die Induktionseinheit (100) mit einer Spanneinheit verbunden ist, die zur fixierenden Anordnung eines zu fügenden Bauteils ausgebildet ist, wobei bevorzugt die Spanneinheit einen schwenkbaren Spannarm (109) umfasst, der ein Druckstück (110) zum fixierenden Anlegen an das zu fügende Bauteil aufweist und wobei bevorzugt der Spannarm (109) mit dem Druckstück (110) an einem Bauteilspanner (108) höhenverstellbar angeordnet ist.

6. Induktionseinheit (100) nach zumindest einem der Ansprüche 1 bis 5,
**dadurch gekennzeichnet, dass**
an dem Transformator (103) jeder Induktionseinheit (100) ein Thermosensor, bevorzugt ein PTC-Widerstand angeordnet ist, und/oder
dass die Induktionseinheit einen Thermosensor zur Messung einer Bauteiltemperatur umfasst, der bevorzugt in oder an dem Druckstück (110) der Spanneinheit oder benachbart zu dem Induktorkopf (107) angeordnet ist, oder darin, bevorzugt in dem Auflagebereich der Bauteilauflage integriert ist.

7. Gelierstation (10) für die Ausführung von induktivem Verkleben zweier Bauteilkomponenten im Multispotbonding-Verfahren, wobei die Gelierstation (10) eine Mehrzahl von Induktoren aufweist, die an zumindest einer Haltevorrichtung positioniert sind und die mit einer Energiequelle über Stromleitungen verbunden sind, **dadurch gekennzeichnet, dass**
die Induktoren (102) von Induktionseinheiten (100) gemäß zumindest einem der Ansprüche 1 bis 6 umfasst sind und die Induktionseinheiten (100) nicht in einer Reihenschaltung mit der Energiequelle verbunden sind, sondern jeweils eine Anzahl von 1 bis n Induktionseinheiten (100) mit Induktoren (102), für die die Erbringung gleicher oder leistungsproportionaler Heizleistung vorbestimmt ist, in einer Induktorengruppe (A,B,C,D,E,F) zusammengefasst ist, und wobei der zumindest eine Transformator (103) der Induktionseinheiten (100) jeder Induktorengruppe (A,B,C,D,E,F) über seinen Eingang zur Energieversorgung mit jeweils einem Leistungsteil der Energiequelle verbindbar ist.

8. Gelierstation (10) nach Anspruch 7,
**dadurch gekennzeichnet, dass**
- die an dem Transformator (103) jeder Induktionseinheit (100) angeordneten Thermosensoren (500), bevorzugt PTC-Widerstände, entsprechend der Induktorgruppen (A,B,C,D,E,F) gruppiert und in Reihe geschaltet sind, wobei jede Gruppe der Thermosensoren mit einem Ausgang eines Generators (300) einer Induktionsklebeanlage operativ verbindbar ist, und/oder dass
- wenigstens einer Induktionseinheit (100) einer Induktorengruppe (A,B,C,D,E,F) ein Thermosensor zugeordnet ist, der bevorzugt in oder an dem Druckstück (110) oder benachbart zu dem Induktorkopf (107) angeordnet, oder darin integriert ist und der zur Messsignalverstärkung mit einem Messverstärker (600) verbindbar ist.

9. Induktionsklebeanlage zum induktiven Verkleben zumindest zweier Bauteilkomponenten im Multispotbonding-Verfahren,
wobei die Induktionsklebeanlage zumindest
- eine Energiequelle mit einer Steuerungsvorrichtung und
- eine Gelierstation (10) mit einer Mehrzahl von Induktoren, die mit der Energiequelle über Stromleitungen verbunden sind,
umfasst,
**dadurch gekennzeichnet, dass**
die Gelierstation eine Gelierstation nach einem der Ansprüche 7 oder 8 ist.

10. Induktionsklebeanlage nach dem vorstehenden Anspruch,
**dadurch gekennzeichnet, dass**
die Induktionsklebeanlage eine Kühlvorrichtung umfasst, insbesondere eine Kühlanlage, die mit einer Kühlwasserquelle verbunden ist, wobei die Kühlanlage einen Kühlabschnitt zur Kühlung der Gelierstation (10) aufweist, und wobei die Kühlanlage einen Verteilereingang (304) aufweist, der mit der Kühlwasserquelle fluidisch verbunden ist, und der in zumindest einen Verteiler (306) mündet, der eine Vielzahl von Abgängen (306') aufweist, von denen sich je eine Zweigleitung (302) erstreckt, wobei eine Mehrzahl von Zweigleitungen (302) parallel verlaufen, und in jede Zweigleitung (302) mittels zumindest eines Zweigleitungsab- und eines Zweigleitungseingangs jeweils eine Induktorengruppe (A,B,C,D,E,F), wobei jede Gruppe elektrisch von einem Leistungsteil einer Energiequelle versorgt wird, als zu kühlender Verbraucher eingeschaltet ist, und wobei die Zweigleitungsabgänge in zumindest einen Sammler (307) münden, der einen Sammlerausgang (305) aufweist, nahe dem eine Durchflusskontrollvorrichtung, bevorzugt ein Durchflussmesser (303), angeordnet ist.

11. Induktionsklebeanlage nach Anspruch 10,
**dadurch gekennzeichnet, dass**
die Kühlanlage dazu ausgelegt ist, eine Anzahl von 2 bis 32, bevorzugt von 2 bis 16, besonders bevorzugt von 2 bis 12 Induktorengruppen zu versorgen, wobei jede Induktorengruppe 1 bis 10, bevorzugt 2 bis 8, besonders bevorzugt 2 bis 6 Induktionseinheiten (100) aufweist.

12. Induktionsklebeanlage nach Anspruch 10 oder 11,
**dadurch gekennzeichnet, dass**
die Kühlanlage zwei Sammler (307) aufweist, die in Reihe geschaltet sind, wobei zwischen dem ersten und dem zweiten Sammler (307) eine Durchflusskontrollvorrichtung, bevorzugt ein Durchflussmesser (303), angeordnet ist.

13. Induktionsklebeanlage nach zumindest einem der Ansprüche 9 bis 12,
**dadurch gekennzeichnet, dass**
die Energiequelle ein Generator (300) ist, der eine Mehrzahl von Leistungsteilen, die mit einer Steuerungsvorrichtung operativ verbunden sind, umfasst, wobei der Generator (300) für jedes Leistungsteil einen Generatorausgang (305) aufweist, über den jedes Leistungsteil mit dem Eingang des zumindest einen Transformators (103) der Induktionseinheiten (100) einer der Induktorengruppen (A,B,C,D,E,F) verbunden ist.

14. Induktionsklebeanlage nach Anspruch 13,
**dadurch gekennzeichnet, dass**
die Induktionsklebeanlage eine Kondensatoreinheit (400) mit einer Mehrzahl von Kondensatormodulen umfasst, wobei die Verbindung jeden Leistungsteils über die Generatorausgänge (305) mit den Induktorengruppen (A,B,C,D,E,F) über die Kondensatoreinheit (400) bereitgestellt wird, wobei jedes Leistungsteil bevorzugt über ein Kondensatormodul mit einer der Induktorengruppen (A,B,C,D,E,F) verbunden ist.

15. Induktionsklebeanlage nach zumindest einem der Ansprüche 13 bis 14,
**dadurch gekennzeichnet, dass**
- von den an den Transformatoren (103) angeordneten, gruppierten Thermosensoren jede Gruppe mit einem Ausgang des Generators (300) und weiter mit der Steuerung des jeweiligen Leistungsteils (310) operativ verbunden ist, und/oder dass
- der wenigstens eine einer Induktionseinheit (100) einer Induktorengruppe (A,B,C,D,E,F) zugeordnete Thermosensor zur Messsignalverstärkung mit einem Messverstärker (600) und darüber mit der Steuerung des jeweiligen Leistungsteils (310) verbunden ist.

16. Induktionsanlage zur stufenweisen Erwärmung von induktiv erwärmbaren Werkstücken (2',2"),
**dadurch gekennzeichnet, dass**
die Induktionsanlage eine Mehrzahl von Induktoren (102) von Induktionseinheiten (100) gemäß zumindest einem der Ansprüche 1 bis 6 aufweist und die Induktionseinheiten (100) mit den Induktoren (102) zu den von einer Fördereinrichtung bewegten Werkstücken (2',2") ausgerichtet sind, wobei die Induktionseinheiten (100) einzeln oder als Gruppen aus 1 bis n Induktionseinheiten (100), deren Induktoren (102), für die die Erbringung gleicher oder leistungsproportionaler Heizleistung vorbestimmt ist, über den zumindest einen Transformator (103) der Induktionseinheiten (100) jeder Induktorengruppe (A,B,C,D,E,F) zur Energieversorgung mit jeweils einem Leistungsteil einer Energiequelle (300) verbunden sind.

17. Automatisches Selbsteinstellungsverfahren zur Einrichtung der Heizleistungen der Induktionseinheiten (100) einer Induktionsklebeanlage nach zumindest einem der Ansprüche 12 bis 15,
**umfassend die Schritte**
A) Einlegen der zu klebenden Bauteilkomponenten in eine Gelierstation (10) der Induktionsklebeanlage zur Ausführung des Multispotbonding-Verfahrens, die in leistungsgleiche Gruppen eingeteilte Induktionseinheiten (100) umfasst, wobei zumindest ein Bauteil-Temperatursensor jeder Gruppe zugeordnet ist,
B) Abgleichen der Induktionseinheiten innerhalb jeder Gruppe aufeinander,
C) Bestimmen der Prozessparameter aus der Gruppe umfassend die Leistungsparameter für zumindest eine Aufheizphase und eine Haltephase für die Induktionseinheiten jeder Gruppe bei einer vorgegebenen Aufheizzeit, einer dabei zu erreichenden Geliertemperatur und eines während der Haltephase einzuhaltenden Toleranzbands um eine vorgegebene Haltetemperatur, durch automatisches Ausführen und Überwachen einer Mehrzahl von Heizzyklen mittels eines Programmiersystems, das eine Recheneinheit zum Speichern, Verarbeiten und Verwalten der Prozessparameter zu einem Prozessprogramm, einen mit dem Bauteil-Temperatursensor verbundenen Messverstärker mit Signalausgabe an die Recheneinheit und einen Programmieradapter zum Verbinden eines Generators (300) der Induktionsklebeanlage mit der Recheneinheit umfasst, oder mittels eines internen, in den Generator (300) implementierten Programmiersystems.

18. Selbsteinstellungsverfahren nach Anspruch 17,
wobei das Bestimmen der Leistungsparameter für die Aufheizphase
**die Schritte umfasst**
- Festlegen einer Anfangsheizleistung für eine Induktorengruppe in Bezug zu einer Maximalleistung,
- Erwärmen des Bauteils durch die Induktionseinheiten der Gruppe mit der Anfangsheizleistung,
- nach der vorgegebenen Aufheizzeit Überprüfen, ob die mit den Bauteil-Temperatursensoren gemessene Bauteiltemperatur der vorgegebenen Geliertemperatur entspricht, falls ja, Speichern der Anfangsheizleistung als Aufheizleistung und weiter mit der nächsten Phase, andernfalls Feststellen, ob die Bauteiltemperatur über oder unter der vorgegebenen Geliertemperatur liegt,
- Abkühlen des Bauteils, bevorzugt auf eine vorbestimmte Abkühltemperatur,
- Erwärmen des Bauteils durch die Induktionseinheiten der Gruppe mit einer Leistung größer als die Anfangsheizleistung, wenn die damit erreichte Bauteiltemperatur unter der vorgegebenen Geliertemperatur liegt, und Erwärmen des Bauteils durch die Induktionseinheiten der Gruppe mit einer Leistung kleiner als die Anfangsheizleistung, wenn die damit erreichte Bauteiltemperatur über der vorgegebenen Geliertemperatur liegt,
- nach der vorgegebenen Aufheizzeit Überprüfen, ob die mit den Bauteil-Temperatursensoren gemessene Bauteiltemperatur der vorgegebenen Geliertemperatur entspricht, falls ja, Speichern der Leistung als Aufheizleistung und weiter mit der nächsten Phase, andernfalls Wiederholen der Schritte Feststellen, ob die Bauteiltemperatur über oder unter der vorgegebenen Geliertemperatur liegt, Abkühlen des Bauteils und Erwärmen mit entsprechend veränderter Leistung, bis die Bauteiltemperatur der vorgegebenen Geliertemperatur entspricht.

19. Selbsteinstellungsverfahren nach Anspruch 17 oder 18,
wobei das Bestimmen der Leistungsparameter für die Haltephase
**die Schritte umfasst**
- Festlegen einer Anfangshalteleistung für die Induktorengruppe kleiner als die bestimmte Aufheizleistung,
- Erwärmen des Bauteils mit der bestimmten Aufheizleistung über die vorgegebene Aufheizzeit, danach
- Starten der Haltephase mit der festgelegten Anfangshalteleistung und Überprüfen, ob die mit den Bauteil-Temperatursensoren gemessene Bauteiltemperatur innerhalb des vorgegebenen Toleranzbands um die vorgegebene Haltetemperatur liegt, falls ja, Speichern der Anfangshalteleistung als Halteleistung, andernfalls Feststellen, ob die Bauteiltemperatur während der Haltephase ansteigt oder sinkt,
- Abkühlen des Bauteils, bevorzugt über eine vorgegebene Abkühlzeitdauer,
- Erwärmen des Bauteils mit der bestimmten Aufheizleistung über die vorgegebene Aufheizzeit und Starten der Haltephase mit einer Leistung größer als die Anfangshalteleistung, wenn die damit erreichte Bauteiltemperatur während der Haltephase sinkt, und Starten der Haltephase mit einer Leistung kleiner als die Anfangshalteleistung, wenn die damit erreichte Bauteiltemperatur während der Haltephase steigt,
- Wiederholen der Schritte Überprüfen, ob die mit den Bauteil-Temperatursensoren gemessene Bauteiltemperatur innerhalb des vorgegebenen Toleranzbands um die vorgegebene Haltetemperatur liegt, falls ja, Speichern der veränderten Leistung als Halteleistung, andernfalls Feststellen, ob die Bauteiltemperatur während der Haltephase ansteigt oder sinkt, Abkühlen, Erwärmen und Starten der Haltephase bis die Bauteiltemperatur während der Haltephase innerhalb des vorgegebenen Toleranzbands um die vorgegebene Haltetemperatur liegt.

20. Selbsteinstellungsverfahren nach zumindest einem der Ansprüche 17 bis 19, **umfassend den Schritt:**
Bestimmen der Leistungsparameter für zumindest eine weitere Zwischenphase, bevorzugt eine Übergangsphase zwischen der Aufheizphase und der Haltephase durch Festlegen einer Übergangsleistung für die Induktorengruppe und Starten der Übergangsphase mit der festgelegten Übergangsleistung nach Durchführen der Aufheizphase und vor Durchführen der Haltephase, und Überprüfen, ob ein gewünschter Temperaturübergang von Aufheizphase zu Haltephase erreicht wird, falls ja, Speichern der Übergangsleistung, andernfalls Wiederholen der Schritte nach Abkühlen des Bauteils unter Veränderung der Aufheizleistung bis der gewünschte Temperaturübergang von Aufheizphase zu Haltephase erreicht wird.

21. Regelungsverfahren zum Aufheizen der Induktoren einer Induktionsklebeanlage zur induktiven Bauteilverklebung mittels eines Multispotbonding-Verfahrens nach zumindest einem der Ansprüche 9 bis 15,
**umfassend die Schritte**
- Bestimmen einer Maximalfrequenz aus einer Resonanzkurve der schwingungsfähigen Anordnung aus den Induktoren, kapazitiven und ohmschen Widerständen der Induktionsklebeanlage,
- Starten der Anlage mit konstanter Spannung und einem periodischen zwischen zwei Werten schaltenden Signal, bevorzugt einem Rechtecksignal, bei der Maximalfrequenz mit minimierter Pulsweite,
- schrittweise Vergrößern der Pulsweite bis zu einem Tastverhältnis von 1:1,
- Verringern der Frequenz von der Maximalfrequenz in Richtung Resonanzfrequenz bis zu einer Arbeitsfrequenz, bei der die durch die induzierte Stromstärke erzeugte Heizleistung einer vorgegebenen Heizleistung entspricht.

22. Regelungsverfahren zum umgebungstemperaturabhängigen energiegesteuerten Betrieb einer Induktionsklebeanlage zur induktiven Bauteilverklebung mittels eines Multispotbonding-Verfahrens nach zumindest einem der Ansprüche 9 bis 15, umfassend zumindest einen Thermosensor zur Erfassung einer Umgebungstemperatur,
**umfassend die Schritte**
- Erstellen einer Kompensationslinie für jede Induktorengruppe der Induktionsklebeanlage, in der ein Energiekorrekturfaktor (E/Eo) über der Umgebungstemperatur aufgetragen ist, durch Bestimmen eines Energiesollwerts (E₀) bei einer Standardumgebungstemperatur (T₀) für jede Induktorengruppe, und Vorgeben eines von dem Energiesollwerts (Eo) abweichenden Energiewerts (E) bei einer mit dem Thermosensor festgestellten Temperaturabweichung, um ein Prozessergebnis zu erreichen, das dem mit dem Energiesollwert (Eo) bei der Standardumgebungstemperatur (T₀) erreichten Prozessergebnis entspricht, wobei der Energiewert (E) bei einer festgestellten Temperatur größer der Standardumgebungstemperatur (T₀) kleiner wird und bei einer festgestellten Temperatur unter der Standardumgebungstemperatur (T₀) größer wird, so dass der Energiekorrekturfaktor (E/Eo) für jede Temperatur bestimmt wird,
- zur Durchführung eines Klebeprozesses mit der Induktionsklebeanlage Messen der Umgebungstemperatur mit dem zumindest einen Thermosensor, Korrigieren des Energiewerts (E) mit dem zumindest einen zu der gemessenen Umgebungstemperatur zugehörigen Energiekorrekturfaktor (E/Eo) und Ansteuern der Induktorengruppen der Induktionsklebeanlage mit dem jeweiligen korrigierten Energiewert (E).

## Claims

1. An induction unit (100) for the inductive bonding of components in the multi-spot bonding method, wherein the induction unit (100) has at least one inductor (102) arranged on a holding device and is embodied as portable component unit,
wherein the induction unit (100) comprises a transformer (103), which is connected to the at least one inductor (102) to form the portable component unit, wherein an inductor-side output of the transformer (103) is directly connected to the at least one inductor (102) via a high-current line (105), **characterized in that**
an input of the transformer (103) is connected to a low-current line for connection of the induction unit (100).

2. The induction unit (100) according to claim 1,
**characterized in that**
the transformer (103) has a toroidal core material of an amorphous metal alloy and/or
the holding device
- is formed by means of an inductor head (107), which has a support region, in the vicinity of which an inductor (102) is arranged, wherein the inductor (102) is preferably embedded in the support region at least with one portion, wherein, at the portion, which receives the inductor (102), the inductor head (107) is preferably shaped as component support, particularly preferably in a u- or o-shaped manner,
and by means of
- a holding foot (107'), which can be an automatically changeable pneumatic cylinder, to which the inductor head (107) is fastened, preferably so as to be changeable in its position, and which preferably has devices for securing the holding foot (107') to a fastening device of a gelling station (10, 10').

3. The induction unit (100) according to claim 1 or 2,
**characterized in that**
at the support region of the inductor (102), the inductor head (107) has a magnetically conducting field concentrator (102'), which preferably partially engages around the inductor or which is arranged underneath the inductor (102), wherein the field concentrator (102') consists of dynamo sheet, a soft-magnetic nickel-iron alloy of high magnetic permeability, in particular Mu metal^{®}, a thermoplastic plastic having soft iron particles, in particular Fluxtrol^{®} or ferrite.

4. The induction unit (100) according to at least any one of claims 1 to 3, **characterized in that**
the induction unit (100) comprises two or more power-proportional inductors (102), which are connected to the transformer (103), wherein the inductors (102) are arranged at a common holding device or at two or more holding devices.

5. The induction unit (100) according to at least any one of claims 1 to 4, **characterized in that**
the induction unit (100) is connected to a clamping unit, which is formed for the fixing arrangement of a component to be joined, wherein the clamping unit preferably comprises a pivotable clamping arm (109), which has a pressure piece (110) for the fixing application to the component to be joined, and wherein the clamping arm (109) is preferably arranged with the pressure piece (110) at a component clamper (108) in a height-adjustable manner.

6. The induction unit (100) according to at least any one of claims 1 to 5, **characterized in that**
a thermal sensor, preferably a PTC resistor, is arranged at the transformer (103) of each induction unit (100), and/or
that the induction unit comprises a thermal sensor for measuring a component temperature, which is preferably arranged in or at the pressure piece (110) of the clamping unit or adjacent to the inductor head (107), or is integrated therein, preferably in the support region of the component support.

7. A gelling station (10) for performing inductive bonding of two component parts in the multi-spot bonding method, wherein the gelling station (10) has a plurality of inductors, which are positioned at at least one holding device and which are connected to an energy source via current lines,
**characterized in that**
the inductors (102) are encompassed by induction units (100) according to at least any one of claims 1 to 6, and the induction units (100) are not connected to the energy source in a series connection, but in each case a number of 1 to n induction units (100) comprising inductors (102), for which the introduction of identical or power-proportional heating power is predetermined, is combined in an inductor group (A, B, C, D, E, F), and wherein the at least one transformer (103) of the induction units (100) of each inductor group (A, B, C, D, E, F) can, via its input, in each case be connected to a power section of the energy source for the purpose of energy supply.

8. The gelling station (10) according to claim 7,
**characterized in that**
- the thermal sensors (500), preferably PTC resistors, which are arranged at the transformer (103) of each induction unit (100), are grouped according to the inductor group (A, B, C, D, E, F) and connected in series, wherein each group of the thermal sensors can be operatively connected to an output of a generator (300) of an induction bonding plant, and/or that
- a thermal sensor, which is preferably arranged in or at the pressure piece (110) or adjacent to the inductor head (107), or which is integrated therein and can be connected to a measuring amplifier (600) for the measuring signal amplification, is assigned to at least one induction unit (100) of an inductor group (A, B, C, D, E, F).

9. An induction bonding plant for inductively bonding at least two component parts in the multi-spot bonding method,
wherein the induction bonding plant comprises at least
- one energy source comprising a control device and
- one gelling station (10) comprising a plurality of inductors, which are connected to the energy source via current lines,
**characterized in that**
the gelling station is a gelling station according to any one of claims 7 or 8.

10. The induction bonding plant according to the preceding claim, **characterized in that**
the induction bonding plant comprises a cooling device, in particular a cooling plant, which is connected to a cooling water source, wherein the cooling plant has a cooling portion for cooling the gelling station (10), and wherein the cooling plant has a distributor input (304), which is fluidically connected to the cooling water source, and which leads into at least one distributor (306), which has a plurality of outlets (306'), from which a branch line (302) extends in each case, wherein a plurality of branch lines (302) run in parallel, and an inductor group (A, B, C, D, E, F) in each case into each branch line (302) by means of at least one branch line outlet and a branch line inlet, wherein each group is electrically supplied by a power section of an energy source, turned on as consumer to be cooled, and wherein the branch line outlets lead into at least one collector (307), which has a collector output (305), close to which a flow control device, preferably a flow meter (303), is arranged.

11. The induction bonding plant according to claim 10,
**characterized in that**
the cooling plant is designed to supply a number of 2 to 32, preferably of 2 to 16, particularly preferably of 2 to 12, inductor groups, wherein each inductor group has 1 to 10, preferably 2 to 8, particularly preferably 2 to 6, induction units (100).

12. The induction bonding plant according to claim 10 or 11,
**characterized in that**
the cooling plant has two collectors (307), which are connected in series, wherein a flow control device, preferably a flow meter (303), is arranged between the first and the second collector (307).

13. The induction bonding plant according to at least any one of claims 9 to 12, **characterized in that**
the energy source is a generator (300), which has a plurality of power sections, which are operatively connected to a control device, wherein the generator (300) has a generator output (305) for each power section, via which each power section is connected to the input of the at least one transformer (103) of the induction units (100) of one of the inductor groups (A, B, C, D, E, F).

14. The induction bonding plant according to claim 13,
**characterized in that**
the induction bonding plant comprises a capacitor unit (400) comprising a plurality of capacitor modules, wherein the connection of each power section to the inductor groups (A, B, C, D, E, F) via the generator outputs (305) is provided via the capacitor unit (400), wherein each power section is preferably connected to one of the inductor groups (A, B, C, D, E, F) via a capacitor module.

15. The induction bonding plant according to at least any one of claims 13 to 14, **characterized in that**
- of each of the grouped thermal sensors arranged at the transformers (103), each group is operatively connected to an output of the generator (300) and further to the control of the respective power section (310), and/or that
- the at least one thermal sensor assigned to an induction unit (100) of an inductor group (A, B, C, D, E, F) is connected to a measuring amplifier (600) for the measuring signal amplification and moreover to the control of the respective power section (310).

16. An induction plant for gradually warming up workpieces (2', 2") that can be warmed up inductively,
**characterized in that**
the induction plant has a plurality of inductors (102) of induction units (100) according to at least any one of claims 1 to 6, and the induction units (100) are aligned with the inductors (102) to the workpieces (2', 2"), which are moved by a conveying device, wherein the induction units (100), individually or as groups of 1 to n induction units (100), the inductors (102) of which, for which the provision of identical or power-proportional heating power is predetermined, are connected to a respective power section of an energy source (300) via the at least one transformer (103) of the induction units (100) of each inductor group (A, B, C, D, E, F) for the purpose of energy supply.

17. An automatic self-adjustment method for configuring the heating powers of the induction units (100) of an induction bonding plant according to at least any one of claims 12 to 15,
**comprising the steps of**
A) placing the component parts to be bonded into a gelling station (10) of the induction bonding plant for performing the multi-spot bonding method, which comprises induction units (100) divided into groups of equal power, wherein at least one component temperature sensor is assigned to each group,
B) synchronizing the induction units within each group,
C) determining the process parameters from the group comprising the power parameters for at least one heat-up phase and a holding phase for the induction units of each group at a specified heat-up time, a gelling temperature to be reached thereby, and a tolerance band to be adhered to during the holding phase by a specified holding temperature, by automatically performing and monitoring a plurality of heating cycles by means of a programming system, which comprises a computing unit for storing, processing, and managing the process parameters into a process program, a measuring amplifier connected to the component temperature sensor comprising signal output to the computing unit, and a programming adapter for connecting a generator (300) of the induction bonding plant to the computing unit, or by means of an internal programming system, which is implemented in the generator (300).

18. The self-adjustment method according to claim 17,
wherein the determining of the power parameters for the heat-up phase **comprises the steps of**
- defining an initial heating power for an inductor group with respect to a maximum power,
- warming up the component by means of the induction units of the group comprising the initial heating power,
- checking, after the specified heat-up time, whether the component temperature measured by means of the component temperature sensors corresponds to the specified gelling temperature, if yes, storing the initial heating power as heat-up power, and continuing with the next phase, otherwise determining whether the component temperature lies above or below the specified gelling temperature,
- cooling down the component, preferably to a predetermined cool-down temperature,
- heating up the component by means of the induction units of the groups with a power greater than the initial heating power, when the component temperature reached therewith lies below the specified gelling temperature, and heating up the component by means of the induction units of the group with a power less than the initial heating power, when the component temperature reached therewith lies above the specified gelling temperature,
- checking, after the specified heat-up time, whether the component temperature measured by means of the component temperature sensors corresponds to the specified gelling temperature, if yes, storing the power as heat-up power, and continuing with the next phase, otherwise repeating the steps of determining whether the component temperature lies above or below the specified gelling temperature, cooling down the component, and heating up with correspondingly changed power, until the component temperature corresponds to the specified gelling temperature.

19. The self-adjustment method according to claim 17 or 18,
wherein the determining of the power parameters for the holding phase **comprises the steps of**
- defining an initial holding power for the inductor groups less than the determined heat-up power,
- heating up the component with the determined heat-up power for the specified heat-up time, then
- starting the holding phase with the defined initial holding power and checking whether the component temperature measured by means of the component temperature sensors lies within the specified tolerance band around the specified holding temperature, if yes, storing the initial holding power as holding power, otherwise determining whether the component temperature rises or falls during the holding phase,
- cooling down the component, preferably for a specified cool-down time,
- heating up the component with the determined heat-up power for the specified heat-up time, and starting the holding phase with a power greater than the initial holding power when the component temperature reached therewith sinks during the holding phase, and starting the holding phase with a power less than the initial holding power when the component temperature reached therewith rises during the holding phase,
- repeating the steps of checking whether the component temperature measured by means of the component temperature sensors lies within the specified tolerance band around the specified holding temperature, if yes, storing the changed power as holding power, otherwise determining whether the component temperature rises or sinks during the holding phase, cooling down, heating up and starting the holding phase until the component temperature during the holding phase lies within the specified tolerance band around the specified holding temperature.

20. The self-adjustment method according to at least any one of claims 17 to 19, **comprising the step of:**
determining the power parameters for at least one further intermediate phase, preferably a transition phase between the heat-up phase and the holding phase by defining a transition power for the inductor group, and starting the transition phase with the defined transition power after performing the heat-up phase and prior to performing the holding phase, and checking whether a desired temperature transition from heat-up phase to holding phase is reached, if yes, storing the transition power, otherwise repeating the steps after cooling down the component by changing the heat-up power until the desired temperature transition from heat-up phase to holding phase is reached.

21. A regulating method for heating up the inductors of an induction bonding plant for the inductive component bonding by means of a multi-spot bonding method according to at least any one of claims 9 to 15,
**comprising the steps of**
- determining a maximum frequency from a resonance curve of the oscillatory assembly of the inductors, capacitive and ohmic resistances of the induction bonding plant,
- starting the plant with constant voltage and a signal, which periodically switches between two values, preferably a square wave signal, at the maximum frequency with minimized pulse width,
- step-by-step increasing the pulse width up to a duty cycle of 1:1,
- reducing the frequency from the maximum frequency in the direction of resonance frequency up to an operating frequency, at which the heating power generated by means of the induced current intensity corresponds to a specified heating power.

22. A regulating method for the ambient temperature-dependent energy-controlled operation of an induction bonding plant for the inductive component bonding by means of a multi-spot bonding method according to at least any one of claims 9 to 15, comprising at least one thermal sensor for detecting an ambient temperature,
**comprising the steps of**
- creating a compensation line for each inductor group of the induction bonding plant, in which an energy correction factor (E/Eo) is applied via the ambient temperature, by determining an energy setpoint value (Eo) at a standard ambient temperature (T₀) for each inductor group, and specifying an energy value (E) deviating from the energy setpoint value (Eo) in the case of a temperature deviation determined by means of the thermal sensor, in order to reach a process result, which corresponds to the process result reached by means of the energy setpoint value (Eo) at the standard ambient temperature (To), wherein the energy value (E) at a determined temperature greater than the standard ambient temperature (T₀) becomes smaller, and becomes larger at a determined temperature below the standard ambient temperature (To), so that the energy correction factor (E/Eo) for each temperature is determined,
- for performing a bonding process by means of the induction bonding plant, measuring the ambient temperature by means of the at least one thermal sensor, correcting the energy value (E) by the at least one energy correction factor (E/Eo) belonging to the measured ambient temperature, and activating the inductor groups of the induction bonding plant with the respective corrected energy value (E).

## Revendications

1. Unité d'induction (100) pour le collage inductif de composants dans un procédé de collage multipoints, dans lequel l'unité d'induction (100) présente au moins un inducteur (102) disposé sur un dispositif de maintien et est conçue comme unité de composants transportable,
dans lequel l'unité d'induction (100) comporte un transformateur (103) qui est relié à au moins un inducteur (102) avec l'unité de composants transportable,
dans lequel une sortie du transformateur (103) côté inducteur est directement reliée à au moins un inducteur (102) par une ligne à courant fort (105), **caractérisée en ce qu'**une entrée du transformateur (103) est reliée à une ligne à courant faible pour le raccordement de l'unité d'induction (100).

2. Unité d'induction (100) selon la revendication 1,
**caractérisée en ce**
**que** le transformateur (103) présente un matériel de noyaux toroïdaux composé d'un alliage métallique amorphe et/ou
le dispositif de maintien est constitué
- d'une tête d'inducteur (107) qui présente une zone d'appui à proximité de laquelle est disposé un inducteur (102), où l'inducteur (102) est, de préférence, intégré dans la zone d'appui avec au moins une section, la tête d'inducteur (107) étant conçue de préférence sous forme de support de composants et tout particulièrement en U ou en O, sur la section qui loge l'inducteur (102),
et
- d'un pied de maintien (107') qui peut être un vérin pneumatique automatiquement modifiable, sur lequel est fixée de façon variable la tête d'inducteur (107) de préférence dans sa position et qui présente, de préférence, des dispositifs destinés à mettre en place le pied de maintien (107') sur un dispositif de fixation d'une station de gélification (10, 10').

3. Unité d'induction (100) selon la revendication 1 ou 2,
**caractérisée en ce**
**que** la tête d'inducteur (107) située sur la zone d'appui de l'inducteur (102) présente un concentrateur de champ magnétique (102') qui entoure, de préférence, partiellement l'inducteur ou qui est disposé sous l'inducteur (102), dans lequel le concentrateur de champ (102') est composé d'une tôle dynamo, un alliage nickel-fer magnétique doux d'une perméabilité magnétique élevée, en particulier de Mu-Metall^{®}, une matière thermoplastique présentant des particules de fer doux, en particulier Fluxtrol^{®} ou de ferrite.

4. Unité d'induction (100) selon au moins l'une des revendications 1 à 3,
**caractérisée en ce**
**que** l'unité d'induction (100) comporte deux ou plusieurs inducteurs (102) proportionnels à la puissance qui sont reliés au transformateur (103), les inducteurs (102) étant disposés sur un dispositif de maintien commun ou sur deux ou plusieurs dispositifs de maintien.

5. Unité d'induction (100) selon au moins l'une des revendications 1 à 4,
**caractérisée en ce**
**que** l'unité d'induction (100) est reliée à une unité de serrage qui est destinée à la fixation d'un composant à assembler, dans laquelle l'unité de serrage comporte, de préférence, un bras de serrage (109) pivotant qui présente un élément de pression (110) pour la fixation sur le composant à assembler et dans laquelle le bras de serrage (109) avec l'élément de pression (110) est disposé, de préférence, sur un tendeur de composants (108) avec réglage en hauteur.

6. Unité d'induction (100) selon au moins l'une des revendications 1 à 5,
**caractérisée en ce**
**qu**'un capteur thermique, de préférence une thermistance CTP, est disposée sur le transformateur (103) de chaque unité d'induction (100), et/ou que l'unité d'induction comporte un capteur thermique pour la mesure d'une température de composant, qui est disposé, de préférence, dans ou sur l'élément de pression (110) de l'unité de serrage ou à proximité de la tête d'inducteur (107) ou qui est intégré à l'intérieur, de préférence dans la zone d'appui du support de composants.

7. Station de gélification (10) pour la réalisation du collage inductif de deux éléments de composants dans le procédé de collage multipoints, la station de gélification (10) présentant une pluralité d'inducteurs qui sont placés sur au moins un dispositif de maintien et qui sont reliés à une source d'énergie par des lignes électriques, **caractérisée en ce**
**que** les inducteurs (102) des unités d'induction (100) sont contenus selon au moins l'une des revendications 1 à 6 et que les unités d'induction (100) ne sont pas reliées à la source d'énergie dans un montage en série, mais qu'un nombre d'unités d'induction (100) 1 à n avec les inducteurs (102), auxquels est destiné préalablement l'apport d'une puissance thermique identique ou proportionnelle à la puissance, est regroupé dans un groupe d'inducteurs (A, B, C, D, E, F), et où au moins un transformateur (103) des unités d'induction (100) de chaque groupe d'inducteurs (A, B, C, D, E, F) peut être relié à un élément de puissance de la source d'énergie au moyen de son entrée pour une alimentation en énergie.

8. Station de gélification (10) selon la revendication 7,
**caractérisée en ce**
- **que** les capteurs thermiques (500), de préférence les thermistances CTP, disposés sur le transformateur (103) de chaque unité d'induction (100), sont regroupés selon les groupes d'inducteurs (A, B, C, D, E, F) et montés en série, chaque groupe de capteurs thermiques pouvant être relié de façon opérationnelle à une sortie d'un générateur (300) d'une installation de collage par induction, et/ou
- **qu'**un capteur thermique qui est disposé, de préférence, dans ou sur l'élément de pression (110) ou à proximité de la tête d'inducteur (107), ou qui est intégré à l'intérieur et qui peut être relié à un amplificateur de mesure (600) pour l'amplification de signaux de mesure, est affecté à au moins une unité d'induction (100) d'un groupe d'inducteurs (A, B, C, D, E, F).

9. Installation de collage par induction pour un collage inductif d'au moins deux éléments de composants dans un procédé de collage multipoints,
l'installation de collage par induction comprenant au moins
- une source d'énergie avec un dispositif de commande et
- une station de gélification (10) avec une pluralité d'inducteurs qui sont reliés à la source d'énergie par des lignes électriques,
**caractérisée en ce**
**que** la station de gélification est une station de gélification selon l'une des revendications 7 ou 8.

10. Installation de collage par induction selon la revendication précédente,
**caractérisée en ce**
**que** l'installation de collage par induction comprend un dispositif de refroidissement, en particulier une installation de refroidissement, qui est relié à une source d'eau de refroidissement, l'installation de refroidissement présentant une section de refroidissement pour le refroidissement de la station de gélification (10), et l'installation de refroidissement présentant une entrée de distributeur (304) qui est reliée à la source d'eau de refroidissement par voie fluidique et qui débouche sur au moins un distributeur (306), lequel présente une multitude de sorties (306') à partir desquelles s'étend un embranchement (302), une multitude d'embranchements (302) s'acheminant parallèlement, et qu'un groupe d'inducteurs (A, B, C, D, E, F) est activé comme consommateur réfrigérant dans chaque embranchement (302) au moyen d'au moins une sortie d'embranchement et une entrée d'embranchement, chaque groupe étant alimenté en électricité par un élément de puissance d'une source d'énergie, et les sorties d'embranchement débouchant sur au moins un collecteur (307) qui présente une sortie de collecteur (305), près duquel est disposé un dispositif de contrôle du débit, de préférence un débitmètre (303).

11. Installation de collage par induction selon la revendication 10,
**caractérisée en ce**
**que** l'installation de refroidissement est destinée à alimenter un nombre de 2 à 32, de préférence de 2 à 16 et tout particulièrement de 2 à 12 groupes d'inducteurs, chaque groupe d'inducteurs présentant 1 à 10, de préférence 2 à 8 et tout particulièrement 2 à 6 unités d'induction (100).

12. Installation de collage par induction selon la revendication 10 ou 11,
**caractérisée en ce**
**que** l'installation de refroidissement présente deux collecteurs (307) qui sont montés en série, un dispositif de contrôle du débit, de préférence un débitmètre (303), étant disposé entre le premier et le deuxième collecteur (307).

13. Installation de collage par induction selon au moins l'une des revendications 9 à 12, **caractérisée en ce**
**que** la source d'énergie est un générateur (300) qui comprend une pluralité d'éléments de puissance qui sont reliés de façon opérationnelle à un dispositif de commande, le générateur (300) présentant une sortie de générateur (305) pour chaque élément de puissance, au moyen de laquelle chaque élément de puissance est relié à l'entrée d'au moins un transformateur (103) des unités d'induction (100) de l'un des groupes d'inducteurs (A, B, C, D, E, F).

14. Installation de collage par induction selon la revendication 13,
**caractérisée en ce**
**que** l'installation de collage par induction comprend une unité de condensateur (400) avec une pluralité de modules de condensateur, où la liaison de chaque élément de puissance par les sorties du générateur (305) avec les groupes d'inducteurs (A, B, C, D, E, F) est fournie au moyen de l'unité de condensateur (400), chaque élément de puissance étant relié à l'un des groupes d'inducteurs (A, B, C, D, E, F), de préférence au moyen d'un module de condensateur.

15. Installation de collage par induction selon au moins l'une des revendications 13 ou 14,
**caractérisée en ce**
- **que** chaque groupe est relié de façon opérationnelle à une sortie du générateur (300) et ensuite à la commande de l'élément de puissance correspondant (310) par les capteurs thermiques regroupés, disposés sur les transformateurs (103), et/ou
- **que** le capteur thermique affecté à au moins l'une des unités d'induction (100) d'un groupe d'inducteurs (A, B, C, D, E, F) est relié à un amplificateur de mesure (600) pour l'amplification des signaux de mesure ainsi qu'à la commande de l'élément de puissance correspondant (310).

16. Installation d'induction destinée au réchauffement progressif des pièces à usiner (2', 2"), aptes à être chauffées par induction,
**caractérisée en ce**
- **que** l'installation d'induction présente une pluralité d'inducteurs (102) des unités d'induction (100) selon au moins l'une des revendications 1 à 6 et que les unités d'induction (100) avec les inducteurs (102) sont orientées vers les pièces à usiner (2', 2"), déplacées par un convoyeur, les unités d'induction (100) individuellement ou en groupes d'1 à n unités d'induction (100), leurs inducteurs (102) auxquels est destiné préalablement l'apport d'une puissance thermique identique ou proportionnelle à la puissance, étant reliés respectivement à un élément de puissance d'une source d'énergie (300) par au moins un transformateur (103) des unités d'induction (100) de chaque groupe d'inducteurs (A, B, C, D, E, F) pour l'alimentation en énergie.

17. Procédé d'autoréglage automatique pour le réglage des puissances thermiques des unités d'induction (100) d'une installation de collage par induction selon au moins l'une des revendications 12 à 15,
**comprenant les étapes**
A) Insertion des éléments de composants à coller dans une station de gélification (10) de l'installation de collage par induction pour l'exécution du procédé de collage multipoints, qui comprend les unités d'induction (100) réparties en groupes à puissance identique, au moins un capteur de température des composants étant affecté à chaque groupe,
B) Comparaison des unités d'induction à l'intérieur de chaque groupe,
C) Détermination des paramètres de processus à partir du groupe comprenant les paramètres de puissance pour au moins une phase de réchauffement et une phase de maintien pour les unités d'induction de chaque groupe avec un temps de réchauffement défini, une température de gélification à atteindre et une plage de tolérances à respecter pendant la phase de maintien autour d'une température de maintien définie, en effectuant et en surveillant automatiquement une pluralité de cycles de chauffage au moyen d'un système de programmation qui comprend une unité de calcul destinée à l'enregistrement, au traitement et à la gestion des paramètres de processus dans un programme de processus, un amplificateur de mesure relié au capteur de température des composants avec émission des signaux à l'unité de calcul et un adaptateur de programmation pour relier un générateur (300) de l'installation de collage par induction à l'unité de calcul, ou au moyen d'un système de programmation interne, implémenté dans le générateur (300).

18. Procédé d'autoréglage selon la revendication 17,
dans lequel la détermination des paramètres de puissance pour la phase de réchauffement
**comprend les étapes**
- détermination d'une puissance thermique initiale pour un groupe d'inducteurs par rapport à une puissance maximale,
- réchauffement du composant par les unités d'induction du groupe avec la puissance thermique initiale,
- après le temps de réchauffement défini, vérification si la température du composant mesurée avec les capteurs de température des composants correspond à la température de gélification définie, si oui, enregistrement de la puissance thermique initiale comme puissance de chauffage et poursuite avec la phase suivante, sinon détermination si la température du composant se situe au-dessus ou au-dessous de la température de gélification définie,
- refroidissement du composant, de préférence à une température de refroidissement prédéfinie,
- réchauffement du composant par les unités d'induction du groupe avec une puissance supérieure à la puissance thermique initiale si la température du composant ainsi atteinte se situe en dessous de la température de gélification définie, et réchauffement du composant par les unités d'induction du groupe avec une puissance inférieure à la puissance thermique initiale si la température du composant ainsi atteinte se situe au-dessus de la température de gélification définie,
- après le temps de réchauffement défini, vérification si la température du composant mesurée avec les capteurs de température des composants correspond à la température de gélification définie, si oui, enregistrement de la puissance comme puissance de chauffage et poursuite avec la phase suivante, sinon répétition des étapes détermination si la température du composant se situe au-dessus ou au-dessous de la température de gélification définie, refroidissement du composant et réchauffement avec la puissance modifiée en conséquence jusqu'à ce que la température du composant corresponde à la température de gélification définie.

19. Procédé d'autoréglage selon la revendication 17 ou 18,
dans lequel la détermination des paramètres de puissance pour la phase de maintien **comprend les étapes**
- fixation d'une puissance de maintien initiale pour le groupe d'inducteurs, inférieure à la puissance de chauffage déterminée,
- réchauffement du composant avec la puissance de chauffage définie pendant le temps de réchauffement défini, puis
- démarrage de la phase de maintien avec la puissance de maintien initiale définie et vérification si la température du composant mesurée avec les capteurs de température des composants se situe à l'intérieur de la plage de tolérances définie autour de la température de maintien définie, si oui, enregistrement de la puissance de maintien initiale comme puissance de maintien, sinon détermination si la température du composant augmente ou chute pendant la phase de maintien,
- refroidissement du composant, de préférence pendant une durée de refroidissement définie,
- réchauffement du composant avec la puissance de chauffage déterminée pendant le temps de réchauffement défini et démarrage de la phase de maintien avec une puissance supérieure à la puissance de maintien initiale si la température du composant ainsi atteinte chute pendant la phase de maintien, et démarrage de la phase de maintien avec une puissance inférieure à la puissance de maintien initiale si la température du composant ainsi atteinte augmente pendant la phase de maintien,
- répétition des étapes vérification si la température du composant mesurée avec les capteurs de température des composants se situe à l'intérieur de la plage de tolérances définie autour de la température de maintien définie, si oui, enregistrement de la puissance modifiée comme puissance de maintien, sinon détermination si la température du composant augmente ou chute pendant la phase de maintien, refroidissement, réchauffement et démarrage de la phase de maintien jusqu'à ce que la température du composant se situe à l'intérieur de la plage de tolérances définie autour de la température de maintien définie pendant la phase de maintien.

20. Procédé d'autoréglage selon au moins l'une des revendications 17 à 19, **comprenant l'étape**
détermination des paramètres de puissance pour au moins une phase intermédiaire supplémentaire, de préférence une phase transitoire entre la phase de réchauffement et la phase de maintien, en définissant une puissance transitoire pour le groupe d'inducteurs et démarrage de la phase transitoire avec la puissance transitoire définie après exécution de la phase de réchauffement et avant exécution de la phase de maintien et vérification si une transition de température souhaitée de la phase de réchauffement à la phase de maintien est obtenue, si oui, enregistrement de la puissance transitoire, sinon répétition des étapes après refroidissement du composant en modifiant la puissance de chauffage jusqu'à ce que la transition de température souhaitée de la phase de réchauffement à la phase de maintien soit obtenue.

21. Procédé de réglage permettant de réchauffer les inducteurs d'une installation de collage par induction en vue d'un collage inductif des composants au moyen d'un procédé de collage multipoints selon au moins l'une des revendications 9 à 15, **comprenant les étapes**
- détermination d'une fréquence maximale à partir d'une courbe de résonance du dispositif oscillant composé des inducteurs, des résistances capacitives et ohmiques de l'installation de collage par induction,
- démarrage de l'installation avec une tension constante et un signal périodique basculant entre deux valeurs, de préférence un signal rectangulaire, à la fréquence maximale avec largeur d'impulsion minimisée
- accroissement progressif de la largeur d'impulsion jusqu'à un rapport cyclique de 1:1,
- réduction de la fréquence, de la fréquence maximale au sens de la fréquence de résonance jusqu'à une fréquence de travail à laquelle la puissance thermique générée par l'intensité de courant induite correspond à une puissance thermique définie.

22. Procédé de réglage pour un fonctionnement d'une installation de collage par induction, contrôlé en énergie et dépendant de la température ambiante, en vue d'un collage inductif des composants au moyen d'un procédé de collage multipoints selon au moins l'une des revendications 9 à 15, comprenant au moins un capteur thermique destiné à enregistrer une température ambiante,
**comprenant les étapes**
- création d'une ligne de compensation pour chaque groupe d'inducteurs de l'installation de collage par induction dans laquelle est appliqué un facteur de correction énergétique (E/Eo) sur la température ambiante, en déterminant une valeur énergétique théorique (Eo) à une température ambiante standard (T₀) pour chaque groupe d'inducteurs, et spécification d'une valeur énergétique (E) différente de la valeur énergétique théorique (E₀) en cas d'écart de température constaté avec le capteur thermique afin de parvenir au résultat de processus qui correspond au résultat de processus obtenu avec la valeur énergétique théorique (E₀) à la température ambiante standard (T₀), la valeur énergétique (E) diminuant à une température déterminée supérieure à la température ambiante standard (T₀) et augmentant à une température déterminée inférieure à la température ambiante standard (T₀) si bien que le facteur de correction énergétique (E/Eo) est déterminé pour chaque température,
- pour effectuer une opération de collage avec l'installation de collage par induction, mesure de la température ambiante à l'aide d'au moins un capteur thermique, correction de la valeur énergétique (E) avec au moins un facteur de correction énergétique (E/E₀) correspondant à la température ambiante mesurée et commande des groupes d'inducteurs de l'installation de collage par induction avec la valeur énergétique respective corrigée (E).
